# EUROPÄISCHE PATENTSCHRIFT

(11) **EP 2 766 908 B1**
(45) Veröffentlichungstag und Bekanntmachung des Hinweises auf die Patenterteilung: **04.04.2018**
(21) Anmeldenummer: 12784439.7
(22) Anmeldetag: 15.10.2012
(51) Int. Cl.: G21B 1/13, B32B 15/01, F16L 9/16

(54) **METALLROHR; VERWENDUNG EINES METALLROHRS ALS STRUKTURBAUTEIL; VERFAHREN ZUM HERSTELLEN EINES METALLROHRS; METALLISCHES STRUKTURBAUTEIL; DIVERTOR**
METAL PIPE; USE OF A METAL PIPE AS A STRUCTURAL COMPONENT; METHOD FOR PRODUCING A METAL PIPE; METALLIC STRUCTURAL COMPONENT; DIVERTOR
TUBE MÉTALLIQUE; UTILISATION D'UN TUBE MÉTALLIQUE EN TANT QU'ÉLÉMENT STRUCTURAL; PROCÉDÉ POUR PRODUIRE UN TUBE MÉTALLIQUE; ÉLÉMENT STRUCTURAL MÉTALLIQUE; DÉFLECTEUR

(30) Priorität: 13.10.2011 DE 102011115866
(43) Veröffentlichungstag der Anmeldung: 20.08.2014
(73) Patentinhaber: Karlsruher Institut für Technologie, 76131 Karlsruhe (DE)
(72) Erfinder: REISER, Jens, 76275 Ettlingen (DE); DAFFERNER, Bernhard, 76703 Kraichtal (DE); HOFFMANN, Andreas, A-6600 Ehenbichl (AT); RIETH, Michael, 76185, Karlsruhe (DE); SCHULMEYER, Werner, A-6600 Lechaschau (AT); MÖSLANG, Anton, 76297 Stutensee (DE)
(74) Vertreter: Müller-Boré & Partner Patentanwälte PartG mbB
(86) Internationale Anmeldenummer: PCT/EP2012/004306
(87) Internationale Veröffentlichungsnummer: WO 2013/053500

(56) Entgegenhaltungen:
- EP-A1- 2 332 684
- GB-A- 1 203 907
- GB-A- 2 034 206
- US-A- 4 217 948
- US-A1- 2006 037 660
- US-A1- 2007 137 847
- US-B1- 6 337 459

## Beschreibung

Die Erfindung betrifft ein Metallrohr, die Verwendung eines Metallrohres als Strukturbauteil, ein Verfahren zum Herstellen eines Metallrohres, ein metallisches Strukturbauteil und einen Divertor für einen Fusionsreaktor.

Im Anlagenbau sind Rohre, insbesondere Metallrohre, weit verbreitet. Metallrohre transportieren Medien wie etwa Wasser, Öle, Flüssigmetall oder Gas und/oder sind mit Innendruck beaufschlagt. Insbesondere in der Fusionstechnologie gibt es seit Jahren Entwürfe und Konzepte für Wärmesenken/Wärmetauscher, sogenannte Divertoren, die aus Metallrohren aufgebaut sind.

Sind die Metallrohre extremen Belastungen wie hohen Temperaturen oder extrem hohen Drücken bzw. Innendrücken ausgesetzt, sind Metalle wie Stahl oder Eisen zum Teil ungeeignet, da solche Metalle diesen extremen Bedingungen nicht mehr standhalten z.B. da die Betriebstemperatur außerhalb des Einsatzfensters von Stahl liegen kann. Das Einsatzfenster von Stahl ist bei hohen Temperaturen limitiert durch Alterungseffekte und durch seine Kriechfestigkeit. Bei dem in der Fusionstechnologie eingesetzten niederaktivierbaren ferritisch-martensitischen Stahl EUROFER bzw. F82H ist die obere Einsatztemperatur 550°C. Deswegen wurde der Vorschlag gemacht, Metallrohre aus sogenannten Refraktärmetallen einzusetzen. Refraktärmetalle sind die hochschmelzenden, unedlen Metalle der vierten Nebengruppe, Titan, Zirconium und Haffnium, der fünften Nebengruppe, Vanadium, Niob und Tantal, und der sechsten Nebengruppe, Chrom, Molybdän und Wolfram. Ihr Schmelzpunkt liegt über dem von Platin, d.h. über 1772°C.

Ein weiterer Nachteil von Stahl ist in diesem Zusammenhang seine schlechte Wärmeleitfähigkeit, bei EUROFER 30 W/(mK) bei 500°C. Für eine Wärmesenke sind Materialien mit einer hohen Wärmeleitfähigkeit bevorzugt. Refraktärmetalle haben eine hohe Wärmeleitfähigkeit, z.B. hat Wolfram eine Wärmeleitfähigkeit von 170 W/(mK) bei 20°C.

Bedingt durch die kubisch raumzentrierte Gitterstruktur, zeigen Refraktärmetalle einen spröd-duktil Übergang: Bei tiefen Temperaturen brechen sie spröde. Bei hohen Temperaturen sind Refraktärmetalle duktil. Da man aus Sicherheitsgründen für Strukturbauteile Materialien nur im duktilem Temperaturbereich einsetzen sollte bzw. darf, ist die untere Einsatzgrenze von Refraktärmetallen durch seine Spröd-duktil-Übergangstemperatur bestimmt. Bisher verhindert das spröde Materialverhalten von z.B. Wolfram dessen Einsatz als Strukturwerkstoff. Wolfram zu duktilisieren und damit die Spröd-duktil-Übergangstemperatur zu niederen Temperaturen zu verschieben ist Gegenstand der Materialentwicklung.

Bislang ist es nicht gelungen, ein Metallrohr aus z.B. Wolfram als Refraktärmetall kostengünstig herzustellen.

Weiterhin ist es bislang noch nicht gelungen, ein Metallrohr aus Wolfram herzustellen, welches den Anforderungen an ein Innendruck tragendes Bauteil, in der Anmeldung auch als Strukturbauteil bezeichnet, genügt. Die Anforderungen an ein Strukturbauteil sind eine hohe Duktilität, eine hohe Risszähigkeit und eine hohe Energieaufnahme im Kerbschlagbiegeversuch. Der Kerbschlagbiegeversuch ist genormt nach DIN EN ISO 148-1 und 14556:2006-10

Ein Wolframrohr als Refraktärmetallrohr kann nicht stranggepresst werden, wie dies bei der Herstellung von Stahlrohren bekannt ist. Daher besteht bislang einzig die Möglichkeit, ein Wolframrohr durch Bohren eines Loches in einen Wolframstab bzw. einen Wolframblock herzustellen. Diese Herstellungsmethode weist zahlreiche Nachteile auf: Wolfram ist sehr hart und daher sehr schwer zu zerspanen. Eine Bohrung in Wolfram ist deswegen sehr werkzeugintensiv und teuer. Ein weiterer Nachteil ist der hohe Zerspanungsgrad. Bei der Rohrherstellung durch Bohren wird ein hoher Anteil des Stabvolumens zerspant und muss recycelt werden. Unter Umständen kann das aus dem Rohr herausgebohrte Material nicht weiter verwendet werden und fällt als Abfall an. Da Wolfram ein sehr teures Material ist, ist ein solcher Materialverschleiß sehr kostenineffizient. Weiterhin ist es bei einer Bohrung schwer, besonders dünnwandige Rohre (ca. 1 mm Rohrmanteldicke) zu realisieren. Solche Bohrversuche haben eine hohe Ausschussrate, da die Rohre schon während des anspruchsvollen Zerspanungsprozesses beschädigt werden können und brechen.

Das Bohren eines Loches in einem Wolframstab könnte auch durch Senk- und Drahterosion umgesetzt werden. Dieses Herstellungsverfahren ist extrem zeit- und kostenintensiv. Weiterhin hinterlassen diese Herstellungsverfahren die Wolframoberfläche übersät mit Mikrorissen in einer Tiefe von bis zu 150 µm.

In vielen technischen Anwendungen werden Metallrohre als Innendruck tragende Bauteile verwendet. Bislang konnte ein gebohrtes Wolframrohr lediglich als Funktionsbauteil eingesetzt werden, da Wolfram ein sprödes Materialverhalten aufweist und bei Druckeinwirkung leicht bricht.

Bekannte Wolframwerkstoffe weisen eine erhebliche Sprödigkeit auf, die den Einsatz als Strukturwerkstoff verhindert.

Dokument DE 40 30 389 C1 betrifft ein Verfahren zur Herstellung von Verbund-Metallrohren. Hierbei wird eine rohrförmige Wicklung aus mindestens einer Metallfolie gebildet. Die Lagen der Folie werden explosiv miteinander verbunden. Die Wicklung kann dabei auf einem Kernrohr sitzen oder in ein solches Kernrohr eingesteckt sein. Zwischen die Lagen der Wicklung können Pulvermaterialien eingebracht werden.

Der Erfindung liegt das Problem zugrunde, ein Refraktärmetall als Strukturbauteil und/oder Funktionsbauteil bereitzustellen, das die vorteilhaften Materialeigenschaften von Refraktärmetallen wie etwa einen hohen Schmelzpunkt, eine hohe Kriechfestigkeit, eine Hochtemperaturfestigkeit und/oder eine hohe Wärmleitfähigkeit aufweist und zugleich eine gute Duktilität aufweist.

Dieses Problem wird durch die Gegenstände der unabhängigen Ansprüche gelöst. Bevorzugte Ausführungsformen sind Gegenstand der abhängigen Ansprüche.

### Metallrohr gemäß einem Aspekt

Gemäß einem Aspekt weist das Metallrohr zumindest eine Folie aus einem Refraktärmetall auf. Ein Rohrmantel des Metallrohrs weist eine Mehrzahl von Lagen Folie aus Refraktärmetall auf. Dabei sind zumindest zwei Lagen Folie aus Refraktärmetall bereichsweise stoffschlüssig miteinander verbunden. Das Metallrohr besteht größtenteils aus Metallen und/oder Metalllegierungen. Der Rohrmantel des Metallrohres selber ist nicht massiv, sondern weist mehrere Lagen Folie auf. Abhängig von den Ausdehnungen der verwendeten Folie bzw. Folien und der Anordnung im Rohrmantel weist das Metallrohr von innen radial nach außen eine Mehrzahl von Lagen ein und derselben Folie auf, oder eine Mehrzahl von Lagen aus verschiedenen Teilstücken mehrerer Folien aus dem Refraktärmetall auf, insbesondere eine Mehrzahl von Lagen aus individuellen, d.h. getrennten Stücken der Folie aus dem Refraktärmetall. Es ist auch möglich, dass Lagen von Folien verschiedener Refraktärmetalle eingesetzt sind. Insbesondere können 2, 3, 4, usw. Folien gleicher oder zumindest jeweils teilweise verschiedener Refraktärmetalle eingesetzt werden. Das Metallrohr kann vollständig aus Lagen der Folie aufgebaut sein, oder zusätzlich weitere Schichten aus Folien und/oder massiven Teilstücken eines anderen Materials, Metalls, insbesondere Stahl, Refraktärmetalls und/oder einer oder mehreren Metalllegierungen aufweisen. Das Metallrohr kann z.B. aus einer einzigen Folie schneckenhausartig gewickelt sein bzw. werden, oder mehrere Folien können bündig oder einander überlappend übereinandergelegt und miteinander in eine Rohrform gebogen werden. Das Metallrohr kann als ein Folienrohr ausgebildet sein.

Die zumindest bereichsweise stoffschlüssige Verbindung zweier, mehrerer oder aller Lagen der Folie kann zum Beispiel durch ein Verkleben, Verlöten und/oder Verschweißen erfolgt sein. Mögliche Verbindungsverfahren sind zum Beispiel Löten, Kaltlöten, Hippen, Diffusionsschweißen, Explosionsschweißen, plasma pulse sintering (PPS) und/oder electromagnetic pulse technique (EMPT).

Die zumindest bereichsweise erfolgte Verbindung kann zum Beispiel lediglich durch ein Verbinden der Folienenden in Längsrichtung des Metallrohres erfolgen, oder zusätzlich an mehreren weiteren Stellen des Metallrohres. Die einzelnen Lagen können auch entlang ihrer gesamten einander zugewandten Flächen stoffschlüssig miteinander verbunden sein.

Folien aus einem Refraktärmetall wie zum Beispiel Wolfram oder Molybdän sind elastisch genug, um in eine Rohrform gewickelt zu werden. Durch einen anschließenden Verbindungsprozess kann die gewickelte Folie zu einem Metallrohr verbunden sein bzw. werden. Die Kombination aus Verbindungstechnik und einem eventuell verwendeten Zwischenschichtmaterial bestimmt die mechanischen Eigenschaften des Folienmetallrohrs. In Versuchen wurde herausgefunden, dass Folien aus Refraktärmetall eine höhere Duktilität aufweisen als das massive Refraktärmetall. Die Duktilität ist ein Maß für die Biegsamkeit bzw. Sprödigkeit eines Materials. Ein Material geringer Duktilität, wie z.B. ein massives Refraktärmetall, ist spröde und bricht bei Kraft- bzw. Druckbeaufschlagung leicht. Ein Material mit einer hohen Duktilität verformt bzw. verbiegt sich bei Kraft- bzw. Druckbelastung. Hohe Duktilität ist für ein Strukturbauteil aus Sicherheitsgründen wichtig, da bei fehlender Duktilität schwerwiegende Schadensfälle auftreten können, siehe das T2 Tankschiff Schenectady im Jahr 1943 und die Irsching Dampfturbine im Jahr 1987. Das Metallrohr aus einer Mehrzahl von Lagen der Folie aus dem Refraktärmetall weist eine höhere Duktilität auf als ein massives Bauteil aus dem gleichen Refraktärmetall. Vorteilhaft kann das erfindungsgemäße Metallrohr mit bzw. aus einer oder mehreren Folie(n) aus Refraktärmetall als Strukturbauteil verwendet werden, da es Drücken und Krafteinflüssen insofern standhält, als dass es sich eher verformt als bricht.

Refraktärmetalle sind bei Raumtemperatur aufgrund von Passivierung relativ korrosionsbeständig. Wolfram z.B. ist weder in Fluorwasserstoffsäure (Flusssäure) noch in Königswasser lösbar, sondern nur in Gemischen aus Salpeter- und Fluorwasserstoffsäure. Vorteilhaft für viele technische Anwendungen ist nicht nur der hohe Schmelzpunkt der Refraktärmetalle, sondern auch der niedrige Wärmeausdehnungskoeffizient und die, verglichen mit Stahl, hohe Leitfähigkeit für Wärme und elektrischen Strom.

Zur Synthese eines duktilen Wolframfolienrohres mit Wolfram als Refraktärmetall und somit dem stoffschlüssigen Verbinden der Lagen einer Wolframfolie ist es hilfreich, die Prozessdauer kurz zu halten und die Prozesstemperatur unterhalb der Rekristallisationstemperatur der Wolframfolie zu halten. Die stoffschlüssige Verbindung der Lagen kann z.B. durch bekannte Schweiß- und/oder Lötverfahren erfolgen. Beim klassischen Löten kann zum Beispiel die Wolframfolie zusammen mit einer Lötfolie als Zwischenschicht aufgerollt werden, fixiert werden und anschließend in einem Ofen temperiert bzw. gebacken werden. Das Metallrohr wird im Ofen bis auf die Schmelztemperatur des Lötmaterials erwärmt. Sowohl kristalline als auch amorphe Lote sind verwendbar.

Wird die Verbindung durch Kaltlöten, Hippen bzw. Diffusionssschweißen bereitgestellt, erfolgt der Verbindungsprozess unterhalb der Schmelztemperatur eines Zwischenschichtmaterials und es erfolgt eine zusätzliche Kraft bzw. Druckeinwirkung auf das gerollte bzw. gewickelte Metallrohr aus Folie. HIP bzw. hippen steht für heißes, isostatisches Pressen. Eine Kraftausübung kann zum Beispiel durch einen Stab im Inneren des Metallrohres realisiert werden. Ist der Stab geschlitzt, so kann zum Beispiel durch Eindrücken eines Keiles eine Kraft auf die Folienrohrinnenseite ausgeübt werden. In das Metallrohr aus Folie kann auch ein Stab mit einem hohen thermischen Ausdehnungskoeffizient geschoben werden. Wird das Metallrohr dann in einem Ofen erwärmt, so dehnt sich der Stab aus und übt eine Kraft auf die Innenseite des Metallrohres aus. Bei einem Druckverbindungsverfahren können die Enden der Folie zum Beispiel durch Löten versiegelt werden, bevor eine Druckbeaufschlagung erfolgt. Ein Vorteil des 'solid state bondings' wie Kaltlöten, Hippen und Diffusionsschweißen ist die geringere Verbindungsprozesstemperatur, die tiefer als die Schmelztemperatur eines Zwischenschichtmaterials sein kann. Ein Metallrohr aus einer Molybdänfolie und einem Zwischenmaterial aus Palladium bzw. Kupfer mit einem Schmelzpunkt von 1555°C bzw. 1085°C kann dann zum Beispiel bei einer Temperatur von ca. 1000°C bzw. 700°C synthetisiert werden, schmilzt aber erst bei einer Temperatur von ca. 1555°C bzw. 1085°C wieder auf. Die Einsatz- und Betriebstemperatur des erfindungsgemäßen Metallrohres kann somit höher als die Verbindungstemperatur sein, bei der die Lagen des Metallrohres miteinander verbunden werden.

Dem Fachmann war bisher bekannt, dass sich Wolframfolie bei Raumtemperatur plastisch verbiegen lässt. Dem Fachmann war bisher nicht bekannt, dass Wolframfolie auch bei einem Zugversuch bei Raumtemperatur plastisches (duktiles) Materialverhalten zeigt. Für die Auslegung von z.B. drucktragenden Rohren (siehe DIN EN 12952-2) ist nicht nur die plastische Verformbarkeit im Zugversuch relevant, sondern auch die dynamische Risszähigkeit gemessen im Kerbschlagbiegeversuch (vgl. z.B. einen Versuch nach EN ISO 148-1).

Ein im Zugversuch duktiles und damit plastisch verformbares Material hat nicht zwangsläufig eine hohe dynamische Risszähigkeit. Duktilität ist definiert als das Vermögen eines Materials, sich plastisch und damit irreversibel zu verformen. Risszähigkeit ist definiert als das Widerstandsvermögen eines Materials gegen Rissausbreitung.

Das Metallrohr wird durch ein Übereinanderschichten und stoffschlüssiges Verbinden von mehreren Folienlagen (z.B. von im Zugversuch duktilen Wolframfolien) hergestellt. Damit wird ein Laminat bereitgestellt (z.B. ein Wolframlaminat), welches eine hohe dynamische Risszähigkeit aufweist (Energiedissipation im Kerbschlagbiegeversuch schon bei niederen Temperaturen).

### Ausführungsformen des Metallrohrs

In einer Ausführungsform ist zwischen den zumindest zwei miteinander verbundenen Lagen der Folie ein Verbindungsmaterial angeordnet, z.B. ein Lot. Das Lot ist metallisch oder besteht aus einer Metalllegierung und dient zur Herstellung der stoffschlüssigen Verbindung beim Löten. Insbesondere kann das Metallrohr von innen radial nach außen abwechselnd aus einer Lage der Folie und einer Lage des Verbindungsmaterials ausgebildet sein. Durch Verlöten bzw. Backen, d.h. temperieren bei einer Temperatur nahe oder oberhalb des Schmelzpunktes des Lots, können dabei die einzelnen Lagen der Folien miteinander verbunden werden.

Reines Wolfram als Refraktärmetall ist duktiler als Wolframmetalllegierungen. Die Bildung von Wolframmischkristallen hat eine Verschiebung des Duktilsprödbruchübergangs zu höheren Temperaturen zur Folge. Bei der Synthese, d.h. dem Verbinden der Lagen der Folie, von duktilen Metallrohren ist es daher vorteilhaft, wenn sich beim Verbindungsprozess kein Wolframmischkristall und keine spröden, intermetallischen Phasen bilden. Beim Löten mit kristallinen Loten wird das Lot zum Schmelzen gebracht. Als Lötmaterial eignen sich zum Beispiel die SCP Lote Silber, Kupfer und/oder Palladium. Kupfer hat die Eigenschaft, dass es nicht in Wolfram diffundiert und somit keine Mischkristalle und keine intermetallischen Phasen mit dem Wolfram bildet. Gleiches gilt für Silber als Lötmaterial. Beim Löten mit Titan als Lot können Wolframmischkristalle entstehen, es bilden sich aber keine intermetallischen Phasen. Zirkon als Lot ist weniger geeignet, da sowohl eine Mischkristallbildung als auch intermetallische Phasen ausgebildet werden können.

Das Lot kann zudem die Funktion aufweisen, die Materialien der unterschiedlichen Lagen der Folie aus Refraktärmetall räumlich voneinander zu trennen. Zwar sind die Lagen der Folie miteinander stoffschlüssig verbunden, jedoch nicht so benachbart angeordnet, dass sie sich berühren. Somit können zwei Lagen aus Refraktärmetall miteinander nicht rekristallisieren. Die Verbindung der einzelnen Lagen der Folie erfolgt dabei vorzugsweise über das Lot. Durch diese Separation bleibt die Körnung der einzelnen Lagen der Folie erhalten, sowie die duktilen Eigenschaften der Folie selber. Ein Übergang zu einem spröden Verhalten, ähnlich wie bei einem massiven Refraktärmetallmaterial, durch extreme Drucke bei Nutzung des Metallrohres wird somit verhindert.

Das Material des Lotes als Zwischenschichtmaterial kann zum Beispiel in Form einer weiteren Folie und/oder in Form von Paste und/oder in Form von Pulver und/oder durch 'chemical vapour deposition' (CVD) und/oder 'physical vapour deposition' (PVD) und/oder 'sputtering' und/oder durch ionische Flüssigkeiten und/oder galvanisch (elektrochemisch) aufgebracht werden. Je nach Wahl des Verbindungsverfahrens kann die Lage aus dem Lot als Zwischenschichtmaterial zwischen einigen Atomlagen dick (wie zum Beispiel beim Besputtern) und mehreren Mikrometern dick (wie zum Beispiel bei einer Folie) ausgebildet sein.

In einem Ausführungsbeispiel des Metallrohrs ist die Folie bzw. sind die individuellen Folien jeweils zwischen 30 µm und 500 µm dick ausgebildet. Insbesondere kann die Folie bzw. können die individuellen Folien jeweils zwischen 75 µm und 150 µm dick ausgebildet sein. Unterhalb einer Dicke von ca. 30 µm ist die Folie immer noch duktil, weist aber keine bedeutenden Vorteile gegenüber einer z.B. 100 µm dicken Folie auf. Ab einer Dicke von ca. 300 bis 500 µm wird die Folie aus Refraktärmetall starr und es wird ein hoher Energieaufwand zum Biegen beim Ausformen des Rohrmantels benötigt. Daher sind solch dicke Folien schwieriger zu bearbeiten. Gute Duktilität weist zum Beispiel eine Folie mit einer Dicke von ca. 100 µm ±10% auf, die sich leicht zu einem Rohr formen lässt. Auch bei einer Dicke von ca. 300 µm zeigt sich eine gute Duktilität in mehreren Ausdehnungsrichtungen, so dass auch eine Folie von ca. 300 µm ± 10% vorteilhaft ist.

Die Folie besteht dabei aus einer flachen Schicht des Refraktärmetalls. Gemäß einer Ausführungsform erstreckt sich die Folie in einer Ausdehnungsrichtung zumindest soweit, wie das auszubildende Metallrohr lang sein soll, d.h. in der Längsrichtung. In einer zweiten Ausdehnungsrichtung, d.h. der Breitenrichtung, ist die Ausdehnung der Folie bestimmt von der vorgesehenen Anzahl von Lagen aus der Folie und dem Umfang des Metallrohres. In der dritten Ausbildungsrichtung, der Dickenrichtung, weist die Folie eine geringe Ausdehnung bzw. Stärke auf, die in der Größenordnung Mikrometer liegt, z.B. 100 µm oder 300 µm.

Soll ein Metallrohr der Länge L mit einem mittleren Rohrmanteldurchmesser D aus ca. X Lagen der Folie hergestellt werden, so kann eine Folie der Länge L und der Breite D • π • X verwendet werden.

Soll z.B. ein Metallrohr der Länge 10 cm mit einem Durchmesser von 1,5 cm aus ca. acht Lagen der Folie hergestellt werden, so kann eine Folie mit folgenden Ausmaßen verwendet werden:
Länge: 10 cm und
Breite: 1,5 cm • π • 8.

Bei einer Verwendung einer Zwischenschicht, beispielsweise eines Lotes, wird die Dimension der Folie und des Lotes entsprechend angepasst.

Bevorzugt ist die Folie bzw. sind die Folien gewalzt ausgebildet und weist bzw. weisen eine Walzrichtung auf. Dabei ist die Walzrichtung der Folie bzw. Folien entlang der Umfangsrichtung des Metallrohres angeordnet. Eine gewalzte Folie weist in Walzrichtung eine höhere Duktilität auf als senkrecht dazu. Die erhöhte Duktilität zeigt sich auch in einem Abweichungswinkel von der Walzrichtung von 45°. Die Anordnung der Folie mit ihrer Walzrichtung kreisförmig um den Umfang des Rohrmantels herum bewirkt eine höhere Duktilität bei einer Ausdehnung bzw. einem Zusammenziehen des Metallrohres bei hohen Innen- bzw. Außendrucken. Dadurch wird das Metallrohr duktil für innerhalb des Metallrohres geführte Medien. Üblicherweise ist eine Duktilität in Längsrichtung des Metallrohres selber nicht so entscheidend für ein Strukturbauteil, wie die Duktilität in radialer Richtung des Metallrohres, da nach der Kesselformel Spannungen in Umfangsrichtung ca. doppelt so groß sind wie Spannungen in Längsrichtung.

In einer Ausführungsform sind zumindest zwei Lagen Folie über einen Bereich von zumindest 2%, zumindest 10%, zumindest 50%, zumindest 90%, zumindest 95% oder zumindest 99% ihrer einander zugewandten Flächen stoffschlüssig miteinander verbunden. Eine bereichsweise kleine Verbindung zumindest zweier Lagen Folie wie zum Beispiel lediglich 2% sollte dabei zumindest zum Abdichten des Metallrohres gegenüber einem durch das Metallrohr geführten Medium dienen. Dabei können lediglich die Ränder der Folie oder Folien miteinander verbunden sein. Je größer der miteinander verbundene Bereich, desto höher kann die Stabilität des Rohres ausfallen. Sind die Lagen Folie über zumindest 99% ihrer einander zugewandten Flächen miteinander verbunden, ist die Verbindung im Wesentlichen vollflächig ausgebildet.

Zumindest zwei Lagen der Folie können auch über ein Bereichsintervall wie von 2% bis 10%, von 50% bis 100%, oder 90% bis 100% ihrer einander zugewandten Flächen stoffschlüssig miteinander verbunden sein.

In einer Ausführungsform ist der Querschnitt des Metallrohres im Wesentlichen kreisförmig, oval oder vieleckig ausgebildet. Der Querschnitt ist im Wesentlichen senkrecht zur Längsrichtung des Metallrohres angeordnet und schneidet durch die Mantelwände des Metallrohres sowie durch einen zentralen Hohlraum. Der Querschnitt kann kreisförmig ausgebildet sein, wie bei einem klassischen Rohr. Alternativ kann der Querschnitt auch elliptisch oder oval ausgebildet sein. In einer vieleckigen Ausgestaltungsform kann der Querschnitt des Metallrohrs zum Beispiel dreieckig oder rechteckig mit abgerundeten oder spitzen Ecken ausgebildet sein. Die Querschnittsform des Metallrohres kann an unterschiedliche Anwendungen angepasst werden. Entlang seiner Anordnungsrichtung, d.h. der Längsrichtung kann das Metallrohr abschnittsweise unterschiedliche Querschnittsformen aufweisen.

Die Metallrohre können - abhängig von ihrer Querschnittsform - dafür vorgesehen sein, innerhalb des Metallrohrs befindliche Medien an der Rohrinnenseite kondensieren zu lassen und nach außen ablaufen zu lassen. Einige Flüssigmetallkühlungen machen von speziellen Querschnittsformen Gebrauch.

In einer Ausführungsform ist der Innendurchmesser des Metallrohres so ausgebildet, dass er sich in Längsrichtung (also der Anordnungsrichtung) des Metallrohrs verjüngt oder aufweitet. Dadurch weist das Metallrohr zum Beispiel abschnittsweise eine diffuse und/oder divergente Düsenform auf. Die Aufweitung bzw. Verjüngung kann z.B. so erzeugt werden, dass das Metallrohr an einer bestimmten Position mehr bzw. weniger Lagen Folie aufweist. Die Folie kann bzw. die Folien können auch auf eine kegelförmige Grundform gewickelt sein, so dass das Metallrohr kegelförmig mit offener oder geschlossener Spitze ausgebildet ist. Der Kegel kann einen größten Durchmesser von etwa 20 cm bis etwa 100 cm, insbesondere von etwa 40 cm bis etwa 45 cm aufweisen. Die Öffnung der Spitze kann einen Durchmesser von etwa 2 cm bis etwa 80 cm, insbesondere von etwa 35 cm bis etwa 40 cm aufweisen. Anschaulich beschrieben kann das Metallrohr in Form einer an ihrem spitzen Ende offenen oder geschlossenen Schultüte ausgebildet sein. Ein solches Metallrohr kann in der Physik als Strahlfänger und/oder Strahlstopper, oder als Teil einer Ziehdüse z.B. in der glaserzeugenden Industrie verwendet werden.

In einer Ausführungsform sind die Lagen der Folie aus dem Refraktärmetall so ausgebildet, dass sie ein Rohrende des Metallrohrs abschließen, indem sie es kappenartig abdichten. Das Metallrohr weist somit an diesem Rohrende eine Kappe als Verschluss auf. Das Rohrende ist an einem längsseitigen Ende des Metallrohres angeordnet.

In einer Ausführungsform weist das Metallrohr von innen radial nach außen, d.h. im Querschnitt, von 2 bis 200 Lagen der Folie auf, insbesondere von 5 bis 30 Lagen. Durch die Anzahl der Lagen wird zusammen mit der Dicke der Folie die Stärke, d.h. der Dicke, der Rohrwand des Metallrohrs bestimmt. Ein Ausführungsbeispiel des Metallrohrs weist zum Beispiel 5 Lagen der Folie und 4 Zwischenlagen eines Lotes auf. Durch die Anzahl der Lagen kann die Manteldicke des Metallrohrs bestimmt werden. Für den Einsatz in einem Raketentriebwerk sind Manteldicken von 10 mm und mehr verwendbar.

In einem Ausführungsbeispiel besteht die zumindest eine Folie zumindest teilweise aus Wolfram und/oder Molybdän. Diese Refraktärmetalle zeigen besonders günstige physikalische Eigenschaften. Die Folie kann aus reinem Wolfram bestehen, oder aus einer Wolframlegierung. Die Folie kann vollständig aus Wolfram bzw. Molybdän ausgebildet sein, oder bereichsweise in eine Folie aus einem weiteren Material übergehen, wie z.B. Stahl.

In einer Ausführungsform ist die zumindest eine Folie aus Refraktärmetall von außen auf ein Innenrohr gewickelt. Das Innenrohr kann zum Beispiel aus einem Refraktärmetall, Metall oder einer Metalllegierung wie Stahl ausgebildet sein, auf das von außen die Folie des Refraktärmetalls gewickelt ist. Dabei kann die Oberfläche bzw. Außenfläche des Metallrohres mit Folie umwickelt sein. Dadurch kann das Metallrohr innen und außen unterschiedliche physikalische Eigenschaften wie z.B.

Duktilität, elektrische und/oder Wärmeleitfähigkeit und/oder Schmelzpunkt aufweisen. Die Lagen der Folie können entweder vor oder nach dem Umwickeln des Innenrohrs miteinander verbunden werden.

Alternativ oder zusätzlich kann die zumindest eine Folie aus Refraktärmetall im Inneren eines Außenrohrs angeordnet sein, wobei das Außenrohr aus einem Metall, einem Refraktärmetall und/oder einer Metalllegierung bestehen kann. Dadurch kann das Metallrohr physikalische Eigenschaften abhängig vom radialen Abstand zu seiner Mittelachse aufweisen.

Eine Kombination dieser Ausführungsformen, also z.B. ein Metallrohr bestehend aus einem Stahlrohr, in das ein Folienrohr aus Refraktämetallfolie eingeschoben ist bzw. darin angeordnet ist und das von einem weiteren Folienrohr aus Refraktämetallfolie umwickelt ist, kann z.B. als Verbindungsstück verwendet werden.

In einer Ausführungsform weist das Metallrohr zumindest einen ersten und einen zweiten Rohrabschnitt auf. Dabei weist der erste Rohrabschnitt die zumindest eine Folie aus Refraktärmetall auf. Der zweite Rohrabschnitt des Metallrohrs ist aus einem zum Refraktärmetall verschiedenen Material ausgebildet, wie zum Beispiel einem anderen Refraktärmetall, oder einem Metall wie Eisen oder einer Metalllegierung wie zum Beispiel Stahl. Der zweite Rohrabschnitt ist in Längsrichtung des Metallrohrs neben dem ersten Rohrabschnitt angeordnet. Der erste Rohrabschnitt ist mit dem zweiten Rohrabschnitt stoffschlüssig verbunden.

So kann das Metallrohr zum Beispiel im ersten Rohrabschnitt Wolframfolie umfassen, die ggf. verlötet sein kann, wobei der erste Rohrabschnitt extremen Temperaturen aussetzbar ist. Im zweiten Rohrabschnitt kann das Metallrohr zum Beispiel aus Stahl bzw. Stahlfolie bestehen, wobei der zweite Rohrabschnitt gemäßigteren Temperaturen aussetzbar ist. Das Metallrohr muss nicht durchgehend von seinem Anfang bis Ende aus einem teuren Refraktärmetall ausgebildet sein, sondern kann abschnittsweise an die Bedingungen, z.B. Temperaturbedingungen, seines Verwendungszwecks angepasst sein, um Herstellungskosten einzusparen.

Dabei kann der erste Rohrabschnitt gradiert in den zweiten Rohrabschnitt übergehen. Dies kann zum Beispiel dadurch erfolgen, dass die Folie aus dem Refraktärmetall am Ende des ersten Rohrabschnittes angeschrägt ausgebildet ist und an eine zweite Folie des Materials des zweiten Rohrabschnittes mit einer entsprechenden Gegenabschrägung angelegt ist. Wird eine solche Folie zur Herstellung des Metallrohrs verwendet, so erfolgt der Materialübergang in Längsrichtung des Metallrohres vom Material oder den Materialien des ersten Rohrabschnittes zum Material oder den Materialien des zweiten Rohrabschnittes nicht plötzlich, sondern allmählich entlang eines Übergangbereichs. Dadurch wird ein sprunghafter Übergang der physikalischen Eigenschaften der unterschiedlichen Rohrabschnitte vermieden und zum Beispiel eine Bruchgefahr reduziert. Der gradierte Übergang kann auch im Folienmaterial selbst erfolgen. Die Folie aus Refraktärmetall geht dabei gradiert in eine Folie aus einem anderen Material über, d.h. die Materialanteile der zur Herstellung der Folie verwendeten Materialein ändern sich in Längsrichtung von 100% Refraktärmetallanteil und 0% Zweitmaterialanteil allmählich zu 0% Refraktärmetallanteil und 100% Zweitmaterialanteil. Der gradierte Übergang erfolgt in Längsrichtung entlang eines Übergangbereichs. Alternativ oder zusätzlich kann ein Materialübergang auch entlang der Breite der Folie erfolgen, was eine gradierte Materialveränderung in Umfangsrichtung des Metallrohrs bewirkt.

Der Materialübergang kann beim Herstellen der Folie durch Einsatz und Verarbeitung verschiedener Materialien erreicht werden. Das obige Beispiel bezieht sich auf ein Refraktärmetall und ein Zweitmaterial. Es können auch mehrere Materialien, insbesondere 3, 4, 5, usw. Materialien verwendet werden, wie z.B. 1, 2, usw. Refraktärmetalle und/oder 1, 2, usw. andere Metalle bzw. Metallegierungen, wie z.B. Stahl, usw.

In einer Ausführungsform umfasst das Metallrohr von innen radial nach außen Lagen unterschiedlicher Metalle und/oder Metalllegierungen, wie z.B. Wolfram, Molybdän und/oder Stahl. Insbesondere kann das Metallrohr von innen radial nach außen aus Lagen unterschiedlicher Metalle und/oder Metalllegierungen bestehen.

In einer Ausführungsform ist das Metallrohr an zumindest zwei Innen- und/oder Außenrohrseiten bzw. -bereichen aus unterschiedlichen Metall- und/oder Metalllegierungsfolien ausgebildet. Dabei besteht zumindest eine der unterschiedlichen Metall- und/oder Metalllegierungsfolien aus dem Refraktärmetall. Die unterschiedlichen Folien können dabei miteinander verbunden sein und/oder einander überlappend angeordnet sein. Es kann vorteilhaft sein, dass eine Rohrseite des Metallrohres andere physikalische Eigenschaften aufweist als eine andere, zum Beispiel gegenüberliegende, Rohrseite des Metallrohres. Die einzelnen Lagen des Metallrohres können dahingehend auf die entsprechende Anwendung abgestimmt sein. Insbesondere kann eine Folie zum Aufwickeln des Metallrohrs verwendet werden, bei der in Wickelrichtung zwei oder mehr Materialien aufeinander folgen. Die Länge der einzelnen Materialien der Folie kann abhängig vom mittleren Rohrmantelumfang sein.

Soll z.B. ein Metallrohr mit mittlerem Durchmesser D hergestellt werden, bei dem ein Bruchteil BT des Rohrmantels aus einem ersten Material besteht, und der Rest des Rohrmantels aus einem zweiten Material, kann das Rohr aus einer Folie hergestellt sein, die in Wickelrichtung abwechselnd aus einem BT•D•π langem Teilstück des ersten Materials ausgebildet ist und einem (1-BT) •D•π langem Teilstück des zweiten Materials ausgebildet ist. Wird diese Folie zur Herstellung des Metallrohrs in Wickelrichtung aufgewickelt, so kommen die Teilstücke gleichen Materials in Radialrichtung des Metallrohrs aufeinander zu liegen bzw. beabstandet durch ein Lot aufeinander zu liegen. Der Umfang des Rohrmantels nimmt von innen radial nach außen leicht zu, so dass auch die Länge der einzelnen Teilstücke der verwendeten Folie in Wickelrichtung leicht zunehmen kann, um diese Umfangszunahme beim Aufwickeln der Folie zum Metallrohr auszugleichen.

In einem anderen Beispiel kann eine Folie verwendet werden, die aus zwei oder mehr unterschiedlichen Materialen besteht, die in Wickelrichtung der Folie hintereinander angeordnet sind. Dadurch kann ein Metallrohr hergestellt werden, das an seinen Mantelseiten aus zwei oder mehr unterschiedlichen Materialen ausgebildet ist.

In einer Ausführungsform sind im Inneren des Metallrohres zwei voneinander getrennte Kammern ausgebildet. Die Kammern können zum Beispiel durch eine Schicht der Folie aus Refraktärmetall voneinander getrennt sein. Ein solches Metallrohr kann zum Beispiel als Wärmesenke und/oder Wärmetauscher in einem Divertor eingesetzt werden.

In einer Ausführungsform ist ein erstes Ende des Metallrohrs in Längsrichtung aufgeweitet und ein zweites Ende des Metallrohrs in Längsrichtung so verengt ausgebildet, dass zwei solche Metallrohre ineinandersteckbar ausgebildet sind. Alternativ kann auch lediglich ein Ende des Metallrohrs aufgeweitet oder verengt ausgebildet sein, so dass es an diesem Ende durch ein gegenläufig ausgebildetes Metallrohr verlängerbar ist.

### Verwendung eines Metallrohrs

Gemäß einem Aspekt kann ein Metallrohr als Strukturbauteil Verwendung finden bzw. verwendet werden, insbesondere als Divertor bzw. als ein Bauteil für einen Divertor.

Ein Divertor ist eine Vorrichtung in Fusionsreaktoren, die das Fusionsplasma von Verunreinigungen befreit. Der Divertor kann in ringförmigen Fusionsreaktoren der Bauart Tokamak und Stellarator eingesetzt werden. Zur Kühlung des Divertormaterials dient das oben beschriebene Metallrohr.

Das Metallrohr kann entweder als Bauteil des Divertors verwendet werden, oder es kann eine Armierung aufweisen. Dabei ist die Armierung so ausgebildet, dass das Metallrohr selber als Divertor verwendbar ist.

### Verfahren zur Herstellung eines Metallrohrs

Ein Aspekt betrifft ein Verfahren zum Herstellen eines Metallrohres. Dabei wird zumindest eine Folie aus einem Refraktärmetall in einer Mehrzahl von Lagen entlang des Rohrmantels des Metallrohres angeordnet, z.B. gewickelt. Zumindest zwei Lagen Folie werden zumindest bereichsweise stoffschlüssig miteinander verbunden.

Insbesondere wird das Verfahren zum Herstellen eines oben beschriebenen Metallrohres verwendet.

### Bevorzugte Ausführungsformen des Verfahrens

Dabei können die zumindest zwei Lagen Folie durch Löten und/oder Schweißen miteinander verbunden werden. Die Folie bzw. Folien aus Refraktärmetall wird bzw. werden zum Metallrohr aufgerollt bzw. aufgewickelt. Anschließend werden die unterschiedlichen Lagen miteinander verbunden. Das Aufrollen kann mit einer Zwischenschicht aus einem Verbindungsmaterial, wie zum Beispiel einem Lot aus Lötfolie, erfolgen oder ohne. Vorteilhaft wird bei der Herstellung eine Rekristallisation der Folie aus Refraktärmetall durch eine kurze Verbindungsprozessdauer und möglichst geringe Prozesstemperaturen vermieden. Weiterhin wird dabei die Bildung von Mischkristallen und die Bildung von intermetallischen Phasen vermieden.

Gemäß einer Ausführungsform werden die zumindest zwei Lagen Folie bei einer Verbindungstemperatur von maximal 1000°C miteinander verbunden, insbesondere bei maximal 800°C. Dieses Verbindungsverfahren erfolgt bei einer Verbindungstemperatur, bei der noch kein thermodynamisches Gleichgewicht vorliegt. Bei Verwendung einer Wolframfolie als Folie kann sich bei einer Glühung bei 1000°C die Mikrostruktur der Wolframfolie so verändern, dass die Duktilität der Wolframfolie abnimmt. Bei Verwendung eines Lots als Verbindungsmaterial, das eine Schmelztemperatur von 1000°C oder höher aufweist, könnten sich die Eigenschaften der Folie beim Zusammenlöten der Lagen der Folie verschlechtern. Deswegen erfolgt die Verbindung der Lagen der Folie bei einem hohen Druck. Neben einer Temperaturbeaufschlagung des herzustellenden Metallrohrs erfolgt somit auch eine Druckbeaufschlagung beim Verbinden der Lagen der Folie, wodurch die benötigte Verbindungstemperatur gesenkt werden kann.

Dabei können die zumindest zwei Lagen Folie z.B. durch Kaltlöten, HRP oder HIP miteinander verbunden werden.

Ein Kaltlöten kann dabei so erfolgen, dass ein massiver Stab in dem herzustellenden Metallrohr aus zumindest einer gewickelten Folie angeordnet wird. Radial von außen kann das herzustellende Metallrohr von einem Verbindungsaußenrohr umgeben werden. Der massive Stab weist dabei einen hohen thermischen Ausdehnungskoeffizienten auf. Zum Kaltlöten wird der massive Stab erhitzt, dehnt sich aus und presst dabei die Lagen der Folie aneinander und gegen das Verbindungsaußenrohr. Dabei werden die Lagen die Folie miteinander verbunden. Das Verbindungsaußenrohr kann z.B. aus Stahl mit einer bcc-Kristallstruktur bestehen, der massive Stab aus Stahl mit einer fcc-Kristallstruktur.

Die zumindest zwei Lagen Folie können auch durch HRP miteinander verbunden werden, was kurz für "Hot Radial Pressing" steht. Dabei können zur Herstellung des Metallrohrs die Lagen der Folie zwischen einem Verbindungsinnenrohr und einem Verbindungsaußenrohr angeordnet werden. Verbindungsinnenrohr und Verbindungsaußenrohr können z.B. aus Stahl mit einer bcc-Kristallstruktur bestehen. Nun wird der Innenraum des Verbindungsinnenrohrs mit einem hohen Druck beaufschlagt, z.B. bis zu 1000 bar, woraufhin die Lagen der Folie zwischen dem Verbindungsinnenrohr und dem Verbindungsaußenrohr gegeneinander gepresst und dabei miteinander Verbunden werden.

Ein Hippen (Heißisostatisches Pressen) kann ohne Verbindungsmaterial erfolgen, also ohne eine Zwischenschicht zwischen den Lagen der Folie aus Refraktärmetall. Dabei können die Lagen der Folie zwischen einem Verbindungsinnenrohr und einem Verbindungsaußenrohr angeordnet werden. Das Verbindungsinnenrohr und das Verbindungsaußenrohr können dabei z.B. aus Stahl mit einer fcc-Kristallstruktur bestehen. An den beiden Rohrenden werden die Bauteile miteinander verschweißt, so dass die Lagen der Folie radial innen vom Verbindungsinnenrohr, radial außen vom Verbindungsaußenrohr und an den Rohrenden von einer Schweißnaht eingeschlossen sind. Das Verschweißen erfolgt dabei an den Rohrenden zwischen dem Verbindungsinnenrohr und dem Verbindungsaußenrohr so, dass die Lagen der Folie des herzustellenden Metallrohrs vollständig versiegelt werden. Das so eingeschlossene Paket wird nun gehippt, wobei die Lagen die Folie miteinander verbunden werden, d.h. gleichzeitig heiß gepresst und gesintert, wobei der Innenraum des Innenrohrs mit Druck beaufschlagt wird.

Alternativ zu diesem Einschließverfahren der Lagen der Folie kann das herzustellende Metallrohr auch so versiegelt werden, dass die Lagen der Folie lediglich an den Rohrenden miteinander versiegelt werden sowie am Wickelanfang der innersten Folie im Rohrinneren und am Wickelende der äußersten Folie am Rohräußeren. Wickelanfang und Wickelende werden dabei entlang der ganzen Ausdehnungsrichtung des Metallrohrs vom Rohranfang zum Rohrende versiegelt, z.B. verlötet. Die so eingeschlossenen Lagen der Folie werden nun durch Hippen miteinander verbunden, wobei das versiegelte herzustellende Metallrohr sowohl im Inneren als auch von außen mit Druck beaufschlagt wird.

Die mechanischen Eigenschaften des Metallrohrs bzw. Laminats (z.B. die Duktilität und die Risszähigkeit) ist abhängig von der Art der stoffschlüssigen Verbindung. Die stoffschlüssige Verbindung der zumindest zwei Lagen Folie ist abhängig von (i) der Wahl des Verbindungsmaterials (der Zwischenschicht) sowie (ii) der Wahl der Verbindungstechnik. Je nach Kombination aus Zwischenschicht und Verbindungstechnik ergeben sich andere mechanische Eigenschaften des Metallrohrs.

Bei der Herstellung lassen sich z.B. die Zwischenschichten als Verbindungsmaterial verwenden, die in der folgenden Tabelle (Reihenfolge geordnet in aufsteigender Schmelztemperatur) aufgeführt sind:

| Element | Schmelztemperatur |
|---|---|
| 72 wt. % Ag, 28 wt. % Cu (eutektisch) | 780°C |
| 82 wt. % Au, 18 wt. % Ni | 955°C |
| Ag | 960°C |
| Au | 1065°C |
| Cu | 1085°C |
| 82 wt. % Cu, 18 wt. % Pd | 1100°C |
| Ni | 1455°C |
| Fe | 1540°C |
| Pd | 1555°C |
| Ti | 1670°C |
| Pt | 1770°C |
| Zr | 1855°C |
| V | 1910°C |
| V, 4 wt. % Cr, 4 wt. % Ti | Ca. 1910°C |
| Rh | 1960°C |
| Ru | 2330°C |
| Keine Zwischenschicht | - |

Als Verbindungstechniken lassen sich bei der Herstellung des Metallrohrs z.B. die in der folgenden Tabelle aufgelisteten verwenden:

| Verbindungstechnik | Verbindungsenergie wird gewonnen über: |
|---|---|
| Löten | Temperatur (Zwischenschicht wird zum Schmelzen gebracht, siehe DIN 8505) |
| Walzplattieren | Temperatur und Druck (Zwischenschicht wird nicht zum Schmelzen gebracht) |
| Heißpressen | Temperatur und Druck (Zwischenschicht wird nicht zum Schmelzen |
| | gebracht) |
| Kaltlöten | Temperatur und Druck (Zwischenschicht wird nicht zum Schmelzen gebracht) |
| Diffusionsschweißen | Temperatur und Druck (Zwischenschicht wird nicht zum Schmelzen gebracht) |
| Plasma Puls Sintern (PPS) bzw. Puls Plasma Schweißen | Temperatur und Druck (Zwischenschicht wird nicht zum Schmelzen gebracht) |
| Heiß isostatisch Pressen (HIPen) | Temperatur und Druck (Zwischenschicht wird nicht zum Schmelzen gebracht) |
| Explosionsschweißen | Beschleunigung |
| Elektro-magnetische Pulstechnik | Beschleunigung |

Die Abgrenzung der einzelnen Verfahren untereinander ist nicht immer eindeutig. Bei Verfahren, bei denen sowohl Temperatur als auch Druck aufgebracht wird, kann nicht immer eindeutig z.B. zwischen Heißpressen, Kaltlöten, Diffusionsschweißen und PPS unterschieden werden.

Soll z.B. ein Wolframlaminat bzw. ein Wolframlaminatrohr mit dem Verfahren hergestellt werden, das bei Betriebstemperaturen größer als 1000°C eingesetzt werden soll, können bei der Herstellung Zwischenschichten als Verbindungsmaterial mit Schmelztemperaturen größer als 1000°C verwendet werden (vgl. dazu die Tabelle der unterschiedlichen Verbindungsmaterialien). Für geplante Betriebstemperaturen größer als 1000°C sind demnach z.B. Pd, Ti, V als Verbindungsmaterialien vorteilhaft.

Um möglichst gute mechanische Eigenschaften des Metallrohrs zu erzielen sind folgende Zwischenschichten vorteilhaft:
- 72 wt. % Ag, 28 wt. % Cu (eutektisch),
- Ag,
- Cu,
- 82 wt. % Cu, 18 wt. % Pd,
- Pd,
- Ti,
- V,
(vgl. dazu die Tabelle der unterschiedlichen Verbindungsmaterialien).

Um möglichst gute mechanische Eigenschaften eines Wolframlaminats bzw. eines Wolframlaminatrohrs zu erzielen, sollte die Verbindungsprozesstemperatur unterhalb der Rekristallisationstemperatur der verwendeten Wolframfolie liegen. Der Verbindungsprozess sollte demnach bei reiner Wolframfolie bei maximal ca. 1000°C stattfinden. Verwendet man eine Zwischenschicht aus einem Verbindungsmaterial mit einer höheren Schmelztemperatur als 1000°C (siehe Tabelle), so lässt sich die Laminatsynthese realisieren, indem man ein Verfahren anwendet, in dem neben der Temperatur auch der Druck zur Verbindung der Lagen ausgenutzt wird. Dazu empfielt sich ein Verfahren, bei dem die Zwischenschicht nicht zum Schmelzen gebracht wird. Dazu mögliche Verfahren sind in der Tabelle der Verbindungstechniken aufgeführt.

Um z.B. ein hochschmelzendes Wolframlaminatrohr (oder analog ein anderes Refraktärmetallrohr) bei einer Verbindungsprozesstemperatur von max. 1000°C herzustellen, kann z.B. folgendes Verfahren verwendet werden:
- Verwenden einer Zwischenschicht aus Ti mit einer Schmelztemperatur von 1670°C.
- Verbindungstechnik: Diffusionsschweißen, Heißpressen, HIPen.
- Verwenden einer Wolframfolie mit einer Dicke im Lieferzustand von 100 µm, und einer Titanfolie mit einer Dicke im Lieferzustand von 100 µm. Die Wolframfolie und die Titanfolie werden gerollt und in ein Edelstahlrohr als Verbindungsaußenrohr geschoben. Daraufhin wird ein weiteres Edelstahlrohr als Verbindungsinnenrohr in das erste Verbindungsaußenrohr eingeschoben. Das gewickelte Wolframlaminatrohr befindet sich nun zwischen den beiden Edelstahlrohren. Die Enden der Edelstahlrohre werden durch Elektronenstrahlschweißen geschlossen. Dieser Aufbau wird in einer Heiß-isostatischen-Presse (HIP) auf 1150°C erhitzt und zwei Stunden lang mit 1050 bar (105 MPa) gedrückt. Anschließend werden die Edelstahlrohre entfernt und das Wolframlamiantrohr ist hergestellt.

Um z.B. eine hochschmelzende Wolframlaminatplatte (oder analog eine andere Refraktärmetallplatte) bei einer Verbindungsprozesstemperatur von max. 1000°C herzustellen, kann z.B. folgendes Verfahren verwendet werden:
- Verwenden einer Zwischenschicht aus Ti mit einer Schmelztemperatur von 1670°C.
- Verbindungstechnik: Diffusionsschweißen, Heißpressen.
- Verwenden einer Wolframfolie mit einer Dicke im Lieferzustand von 100 µm, und einer Titanfolie mit einer Dicke im Lieferzustand von 100 µm, die zu einer Größe von 17 mm x 33 mm geschnitten werden und alternierend übereinandergeschichtet werden. Dieser Lagenaufbau wird in einem Vakuumofen (bei ca. 1*10⁻⁵ mbar) auf 900°C erhitzt und eine Stunde lang mit 20 kN gedrückt. Dies entspricht einer Spannung von ca. 35 MPa bzw. N/mm2.

Um z.B. einen Wolframlaminattiegel aus einer Wolframlaminatplatte herzustellen (oder analog einen Refraktärmetalltiegel aus einem Refraktärmetalllaminat), kann z.B. folgendes Verfahren verwendet werden:
Die Wolframfolie einer Dicke von 100 µm wird dabei nicht im Lieferzustand verwendet, sonder geglüht (rekristalllisiert). Die Glühung erfolgt z.B. eine Stunde lang bei 2000°C. Aus diesen Wolframfolien wird durch Löten mit Kupfer als Verbindungsmaterial ein Wolframlaminat hergestellt. Aus diesem Wolframlaminat wird eine Ronde von 22 mm geschnitten und nach bekannten Tiefziehparametern (z.B. bei 600°C, 0.1 mm/min) zu einem Tiegel umgeformt.

Beispielsweise ist die Folie als eine gewalzte Folie ausgebildet, wobei die Folie in einer Walzrichtung gewalzt ist bzw. wird. Beim Wickeln der Folie zum Metallrohr wird die Walzrichtung in Umfangsrichtung des herzustellenden Metallrohres ausgerichtet und gewickelt. In dieser Anordnung trifft eine von außen oder innen angreifende Kraft auf die Rohrwand die Körner der Folie aus Refraktärmetall immer in 'best case'-Orientierung. Dies reduziert die Problematik der schwachen Korngrenzen.

Auch ein Verbinden der Lagen der Folie ohne eine Zwischenschicht wie einem Lot ist möglich. Zum Beispiel kann die stoffschlüssige Verbindung durch ein Diffusionsschweißen erfolgen. Dabei kann die Folie aus Refraktärmetall aktiviert werden, zum Beispiel durch Besputtern mit Gold, Titan, Nickel oder Niob. Dabei wird die Prozesstemperatur reduziert.

Die Lagen der Folie können z.B. auch durch Explosionsschweißen miteinander verbunden werden. Beim Explosionsschweißen unterscheidet man je nach Detonationsgeschwindigkeit zwischen Explosion, d.h. sehr schnelle Detonationsgeschwindigkeit, und Abbrand, d.h. langsame Detonationsgeschwindigkeit. Der langsamere Abbrand ist dabei vorteilhaft. Bei der Umsetzung des Verfahrens wird eine Wolframfolie zusammen mit einer Zwischenschichtfolie zu einem Folienrohr gewickelt und in einen massiven Stahlmantel geschoben. Die Explosion erfolgt im Rohrinneren von innen radial nach außen. Vorteile des Explosionsschweißens sind die Tauglichkeit für die Massenproduktion und die niedrige Verbindungstemperatur. Weiterhin lassen sich durch das Explosionsschweißen auch unlötbare Metalle miteinander verbinden.

Beim Wickeln eines Metallrohrs aus einer Folie aus Refraktärmetall kann an einem Ende der Folie mit dem Wickeln begonnen werden. Es kann auch ein Halter in der Mitte der Folie oder Folienstapels platziert werden und anschließend mit dem Wickeln der Folie begonnen werden. So entsteht ein Refraktärmetallfolienrohr, das zwei Kammern aufweist, was eine Gleichstrom/Gegenstromkühlung erlaubt.

In einer Ausführungsform wird das Metallrohr aus einer Refraktärmetallfolie mit einem gradierten Übergang zu einem Metallrohr aus einem normalen Metall, z.B. Stahl, hergestellt. Dazu wird eine Refraktärmetallfolie an eine Metalllfolie angelegt. Beide Folien sind schräg geschnitten. Die beiden Folien werden aufgerollt, wobei ein Folienrohr mit einem graduierten Übergang zwischen Refraktärmetall und Metall entsteht. Als Materialmischung können z.B. Wolfram und Stahl, Wolfram und Molybdän, Molybdän und ODS Stahl verwendet werden.

In einer Ausführungsform wird das Metallrohr aus einer Mehrzahl von Lagen der Folie ausgebildet, wobei zwischen den einzelnen Lagen Folie ein Verbindungsmaterial, z.B. ein Lot, angeordnet wird und das Metallrohr so temperiert bzw. gebacken wird, dass sich die Lagen Folie mittels des Verbindungsmaterials miteinander stoffschlüssig verbinden. Die Temperierung des Metallrohrs kann z.B. in einem Ofen erfolgen oder durch Anlegen eines Direktstroms bzw. mittels eines Stromduchlaufs erfolgen.

### Strukturbauteil

Ein Aspekt betrifft ein metallisches Strukturbauteil, das aus einer Mehrzahl von Lagen zumindest einer Folie aus Refraktärmetall besteht. Dabei ist die zumindest eine Folie zwischen 30 µm und 500 µm dick ausgebildet und zumindest zwei Lagen Folie sind zumindest bereichsweise stoffschlüssig miteinander verbunden.

Das Strukturbauteil kann aus einem Laminat mit mehreren Lagen der zumindest einen Folie ausgebildet sein und ggf. mehrere Lagen eines Zwischenmaterials aufweisen, z.B. ein Lot. Das Laminat ist vorteilhaft mischkristallfrei und frei von intermetallischen Phasen ausgebildet. Durch das Laminat wird ein duktiles Massivbauteil bereitgestellt. Insbesondere sind als Materialien Wolfram als Refraktärmetall und Kupfer und/oder Silber als Lot vorteilhaft.

Ein solches Strukturbauteil kann zum Beispiel als U-Profil, als Winkelprofil oder einer Kombination zweier Winkelprofile, die zusammn ein T-Profil bilden, ausgebildet sein.

### Divertor

Ein Aspekt betrifft einen Divertor für einen Fusionsreaktor, wobei der Divertor zumindest ein oben beschriebenes Metallrohr aufweist. Üblicherweise weist der Divertor eine Mehrzahl von Metallrohren auf.

Die Erfindung kann in Ausführungsformen einige der folgenden Eigenschaften aufweisen:
- Als Funktionsbauteil kann ein Metallrohr aus Refraktärmetallfolie gewickelt werden. Ein Funktionsbauteil wird im Gegensatz zu einem Strukturbauteil nicht mit Drücken bzw. Innendrücken beaufschlagt. Durch einen anschließenden Verbindungsprozess entsteht ein dünnwandiges Metallrohr. Insbesondere können so dünnwandigere Wolframrohre als durch Bohren eines Loches in einen Wolframstab hergestellt werden.
- Als Strukturbauteil kann ein duktiles Refraktärmetallrohr bereitgestellt werden, das die Anforderungen an ein Strukturbauteil erfüllt. Durch eine geeignete Wahl der Verbindungstechnik, der Zwischenschicht und der Interaktion zwischen Verbindungstechnik und Zwischenschicht kann ein duktiles Refraktärmetallrohr aus Refraktärmetallfolie synthetisiert werden. Wird die Walzrichtung der Folie in Umfangsrichtung des Refraktärmetallrohrs angeordnet, so fällt die kritische Umfangsrichtung eines Rohrs unter Innendruck mit der duktilen Folienrichtung zusammen. Die Körner dieses Refraktärmetallrohrs aus Refraktärmetallfolie passen sich der Kontur an sog. 'grain boundary alignment" so dass eine externe Kraft immer senkrecht auf die Körner trifft und damit das Problem der schwachen Korngrenzen des Refraktärmetalls umgangen wird.
- Bei der Wahl eines geeigneten Zwischenschichtmaterials bzw. Verbindungsmaterials als z.B. Lot können die thermischen Eigenschaften des Zwischenschichtmaterials genutzt werden. Insbesondere eignen sich Kupfer, Kupferlegierungen und/oder Silber als Zischenschichtmaterial. Damit ist das Metallrohr aus Folien für den Einsatz im Bereich ,thermal management' verwendbar.
- Bei der Wahl von Kupfer als Lot bzw. Zwischenschichtmaterial ist das Metallrohr für einen Materialübergang von Refraktärmetall zu Stahl geeignet. So dass vorteilhafterweise auch eine Verbindung von Refraktärmetall mit Stahl möglich ist obwohl sie unterschiedliche thermische Ausdehnungskoeffizienten aufweisen. Durch ein Metallrohr aus Refraktärmetallfolie wird dieses Problem in axialer und radialer Richtunggelöst.
- Wird ein Stahlrohr mit Refraktärmetallfolie und Lötfolie umwickelt, bzw. wird in ein Stahlrohr eine Refraktärmetallfolie und Lötfolie geschoben und anschließend verlötet, so entsteht ein Material, das sich einem Temperaturgradienten anpassen kann, sog. 'Tailoring'.
- Es können graduierte Materialien wie z.B. ein Stahl-Wolframrohr aus Folie hergestellt werden.
- Es können Metallrohre aus einer Folie aus Refraktärmetall hergestellt werden, die einen variablen Innendurchmesser und/oder Außendurchmesser aufweisen.
- Es können Metallrohre mit ovalen, rechteckigen, dreieckigen usw. Querschnitten hergestellt werden.
- Ein Herstellen von Metallrohren aus Folie(n) ist für alle Refraktärmetalle und Metalle realisierbar. Durch Variation des Folienmaterials, z.B. mit WolframFolie mit 0,005 Gewichtsprozent Kalium, sog. WVM-Folie, kann Einfluss auf die Rekristallisationstemperatur genommen werden.
- Forschungsergebnisse zeigen, dass bei hohen Temperaturen geglühte Wolframfolie bzw. rekristallisierte Wolframfolie, d.h. Wolframfolie nach Bildung von Grobkorn, sehr gutmütig im Hinblick auf ihren Spröd-duktil-Übergang ausgebildet ist. Gleiches gilt auch für Molybdänfolie.

Einzelne Ausführungsformen der Erfindung werden nachfolgend anhand von Figuren näher erläutert. Einzelne Merkmale der in den Figuren gezeigten Ausführungsformen können mit anderen Ausführungsformen kombiniert werden. Es zeigen:
- Fig. 1A: eine Fotografie eines Ausschnitts eines Querschnitts durch einen Rohrmantel eines Metallrohres in radialer Richtung mit einer Mehrzahl von Lagen einer Folie aus Refraktärmetall sowie eines zwischen den Lagen angeordneten Lots;
- Fig. 1B: eine Fotografie eines Metallrohrs;
- Fig. 2A: Körner eines Refraktärmetalls mit Oxidpartikeln in einer schematischen Darstellung, z.B. WL10, Wolfram mit einem Gewichtsprozent Lanthanoxid;
- Fig. 2B: Körner eines Refraktärmetalls mit niederschmelzenden Metallen in einer schematischen Darstellung, z.B. WVM;
- Fig. 2C: Körner eines Refraktärmetalls mit Verunreinigungen in einer schematischen Darstellung;
- Fig. 2D: ein Refraktärmetall im Festkörperzustand in einer schematischen Darstellung;
- Fig. 3A: eine schematische Ansicht auf ein Metallrohr, das aus einem massiven Stab aus Refraktärmetall durch Bohren eines Loches hergestellt ist;
- Fig. 3B: eine schematische Darstellung eines Metallrohres mit einer Mehrzahl von Lagen einer Folie aus Refraktärmetall;
- Fig. 4: eine Fotografie eines Divertor;
- Fig. 5: in einer schematischen Darstellung einen Querschnitt durch einen Divertor für eine Heliumkühlung;
- Fig. 6: in einer schematischen Darstellung einen Querschnitt durch einen Divertor für eine Wasserkühlung;
- Fig. 7A: in einer schematischen Darstellung ein Querschnitt durch ein Metallrohr mit einer auf ein Innenrohr gewickelten Folie;
- Fig. 7B: in einer schematischen Darstellung ein Querschnitt durch ein Metallrohr, das im Inneren eines Außenrohres eine Mehrzahl von Lagen einer Folie aufweist;
- Fig. 8A: eine schematische Darstellung eines Querschnitts eines kreisförmigen Metallrohres;
- Fig. 8B: eine schematische Darstellung eines Querschnitts durch ein Metallrohr mit einem ovalen Querschnitt;
- Fig. 8C: eine schematischen Darstellung eines Querschnitts eines Metallrohres mit einem rechteckigen Querschnitt;
- Fig. 8D: in einer schematischen Darstellung einen Querschnitt eines Metallrohres mit einem dreieckigen Querschnitt;
- Fig. 9A: eine schematische Darstellung einer Folie aus Wolfram mit einem einseitigen Überhang;
- Fig. 9B: in einer schematischen Darstellung einen Längsschnitt durch ein Metallrohr mit einer düsenartigen Verengung;
- Fig. 10A: in einer schematischen Darstellung eine angeschrägte Folie aus Wolfram angelegt an eine gegenläufig angeschrägte Folie aus Metall;
- Fig. 10B: in einer schematischen Darstellung den Materialverlauf eines Metallrohres, das aus der in Fig. 10A gezeigten Folie aufgewickelt ist;
- Fig. 11A: in einer schematischen Ansicht einen Querschnitt durch ein Metallrohr, das im Inneren zwei Kammern aufweist;
- Fig. 11B: eine fotografische Ansicht auf einen Divertor, der im Inneren ein zwei Kammern aufweisendes Metallrohr aufweist;
- Fig. 11C: einen fotografischen Ausschnitt der Ansicht auf den Divertor aus der Fig. 11B;
- Fig. 12: in einer schematischen Darstellung eine aus mehreren unterschiedlichen Materialien zusammengesetzte Folie und ein daraus hergestelltes Metallrohr;
- Fig. 13: eine aus zwei Materialien bestehende Folie und ein daraus gewickeltes Metallrohr in einer schematischen Darstellung;
- Fig. 14: ein Diagramm zu einem Kerbschlagbiegeversuch eines massiven Wolframrohres verglichen mit einem aus einer Folie bestehendem Wolframrohr;
- Fig. 15: ein Diagramm von Zugversuchen an einer Wolframfolie bei Raumtemperatur in Abhängigkeit einer Walzrichtung der Wolframfolie;
- Fig. 16A: in einer schematischen Darstellung einen Querschnitt durch einen Divertor mit Wasserkühlung mit einem sattelförmigen Monoblock;
- Fig.16B: in einer schematischen Darstellung einen Querschnitt durch einen Divertor mit Wasserkühlung mit einem sattelförmigen Monoblock;
- Fig.16C: in einer schematischen Darstellung einen Querschnitt durch einen Divertor mit Heliumkühlung mit einem sattelförmigen Monoblock;
- Fig. 16D: eine Fotografie eines Ausschnitts eines Querschnitts durch den Divertor der Fig. 16A;
- Fig. 17A: eine Fotografie eines Verbindungsstücks zwischen einem Stahlrohr und einem Wolframmonoblock;
- Fig. 17B: eine Fotografie eines Verbindungsstücks in einer Schrägsicht;
- Fig. 17C: eine Fotografie des in Fig. 17B gezeigten Verbindungsstücks in einer Seitenansicht;
- Fig. 18A: in einer schematischen Darstellung einen Schnitt durch einen Divertor;
- Fig. 18B: eine Fotografie eines Divertors mit einem lamellenförmigen Monoblock;
- Fig. 18C: eine Fotografie eines Schnitts durch den in Figur 18B gezeigten Divertor;
- Fig. 19A: eine schematische Darstellung eines gestuften Stahlrohres mit einer gestuften Folie aus Refraktärmetall im unaufgewickelten Zustand;
- Fig. 19B: eine schematische Darstellung des in Fig. 19A gezeigten gestuften Stahlrohres mit der aufgewickelten gestuften Folie aus Refraktärmetall;
- Fig. 20A: eine schematische Darstellung eines gestuften Stahlrohres mit einer gestuften Folie aus Refraktärmetall im unaufgewickelten Zustand;
- Fig. 20B: eine schematische Darstellung des in Fig. 20A gezeigten gestuften Stahlrohres mit der aufgewickelten gestuften Folie aus Refraktärmetall;
- Fig. 20C: eine Vergrößerung der Fig. 20B in einer schematischen Darstellung;
- Fig. 21A: eine schematische Darstellung eines Stahlstabes und einem Folienstapels aus einer Folie aus Refraktärmetall und einer Folie eines Verbindungsmaterials;
- Fig. 21B: eine schematische Darstellung eines Querschnitts durch ein massives Metallohr, das aus den in der Figur 21A gezeigten Bauteilen hergestellt wurde;
- Fig. 22A: eine Fotografie eines Laminats aus Folienlagen;
- Fig. 22B: ein Diagramm mit Versuchsergebnissen zum Kerbschlagbiegeversuch an dem in Figur 22A gezeigten Laminat;
- Fig. 23A: in einer technischen Zeichnung die Ausmaße einer im Zugversuch getesteten Folienprobe aus Wolfram;
- Fig. 23B: eine schematisch dargestellte Folienprobe aus Wolfram für einen Zugversuch;
- Fig. 24: eine Fotografie zu einem Berstversuch zwischen einem Wolframfolienrohr und einem Stahlrohr;
- Fig. 25A: in einer schematischen Darstellung ein massives Wolframrohr;
- Fig. 25B: eine Fotografie eines Ergebnisses eines Kerbschlagbiegeversuches an einem massiven Wolframrohr;
- Fig. 26A: in einer schematischen Darstellung ein Metallrohr aus Wolframfolie und
- Fig. 26B: eine Fotografie eines Ergebnisses eines Kerbschlagbiegeversuches an einem Metallrohr aus Wolframfolie.

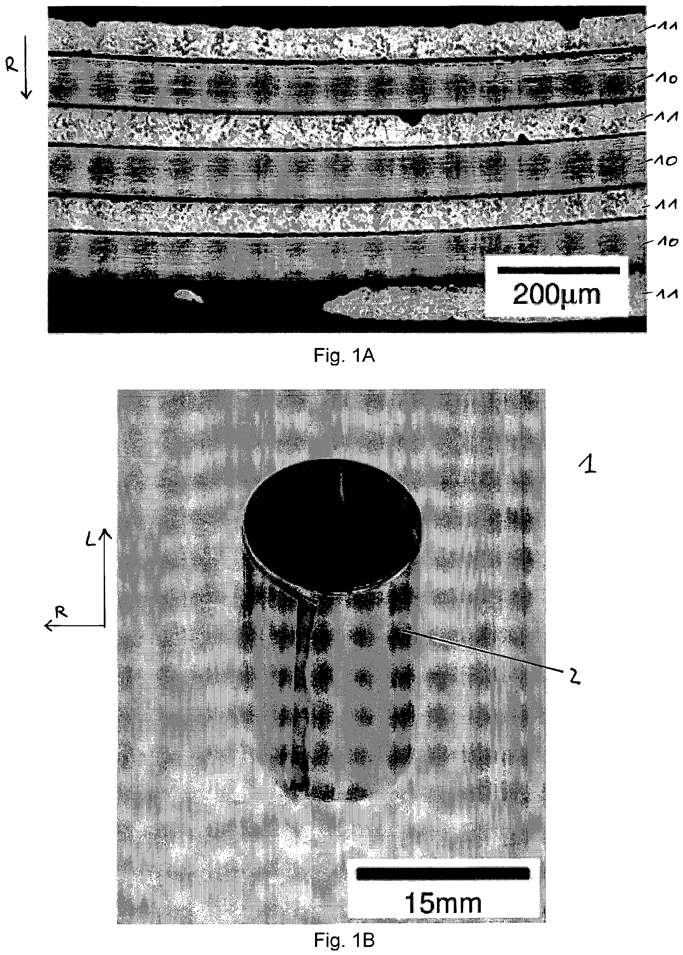

**Figuren 1A und 1B** zeigen Aufnahmen eines Metallrohres 1, dessen Rohrmantel 2 aus einer Mehrzahl an Lagen aufgebaut ist. Das in den Figs. 1A und 1B dargestellte Metallrohr 1 ist geradlinig ausgebildet und erstreckt sich in einer Längsrichtung L. Eine Radialrichtung R zeigt von der Mittelachse des Metallrohres 1 radial nach außen. Ein Querschnitt durch den Rohrmantel 2 des Metallrohrs 1 ist in der Fig. 1A gezeigt. Von der Innenseite des Rohrmantels 2 nach außen weist das Metallrohr 1 abwechselnd Lagen einer Folie 10 aus einem Refraktärmetall und Lagen eines Lotes 11 auf. Die Folie 10 ist ca. 100 µm dick, die Lagen des Lots 11 sind ca. 80 µm dick ausgebildet. Der Durchmesser des Metallrohrs 1 beträgt ca. 15 mm.

Als Material für die Folie 10 kann zum Beispiel Wolfram oder Molybdän verwendet werden. Als Lotmaterial für das Lot 11 ist die Verwendung von Kupfer und/oder Silber vorteilhaft. Auch Kuperlegierungen und Silberlegierungen sind geeignet. Allgemein ist ein Material als Lot gut geeignet, wenn es das Refraktärmetall gut benetzt und mit dem Refraktärmetall keine Mischkristalle oder intermetallischen Phasen bildet.

Die Folie 10 aus Refraktärmetall ist durch einen Walzprozess hergestellt. Die Walzrichtung der Folie ist dabei senkrecht zur Längsrichtung L angeordnet. Im fertig hergestellten Zustand des Metallrohrs ist die Walzrichtung im Wesentlichen in Tangentialrichtung des Metallrohrs 1 senkrecht zur Radialrichtung R angeordnet und verläuft entlang des Umfangs des Rohrmantels 2.

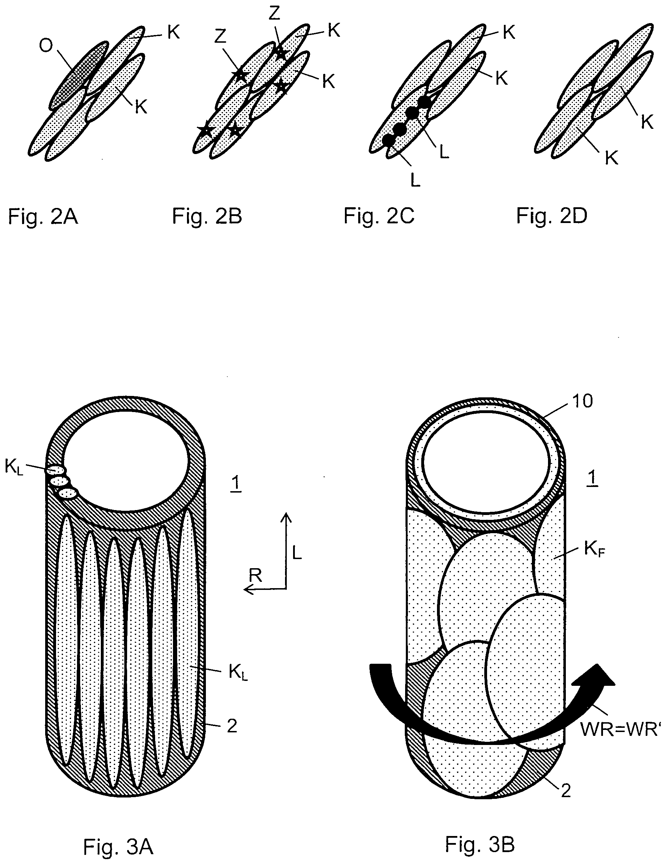

In den **Figuren 2A bis 2D** sind schematisch die Kornstrukturen eines Refraktärmetalls gezeigt, das auf verschiedene Arten behandelt wurde, um die Duktilität des Refraktärmetalls zu erhöhen. Aufgrund der starken Sprödigkeit von Wolfram kann unverarbeitetes Wolfram nicht als Strukturbauteil eingesetzt werden.

Insbesondere hat Wolfram schwache Korngrenzen, das bedeutet, dass das Material entlang der Korngrenzen leicht bricht. Versuche haben gezeigt, dass schwache Korngrenzen eine intrinsische Eigenschaft von Wolfram darstellt.

Fig. 2A zeigt in einer schematischen Darstellung Körner K aus Wolfram und Körner eines Oxids O. Versuche an oxidverstärktem Wolfram, z.B. mit Lanthanoxid La₂O₃ oder Yttriumoxid Y₂O₃, zeigen, dass auch oxidverstärktes Wolfram eine hohe Sprödigkeit aufweist.

Fig. 2B zeigt schematisch Körner K aus Wolfram, die mit niederschmelzenden Metallen Z dotiert sind. Versuche an mit Kalium dotiertem Wolfram zeigen auch für dotiertes Wolfram eine hohe Sprödigkeit.

Fig. 2C zeigt schematisch Körner K von Wolfram, das durch Verunreinigungen V verunreinigt ist. Es konnte gezeigt werden, dass die schwachen Korngrenzen nicht nur auf Verunreinigungen zurückzuführen sind, sondern dass schwache Korngrenzen eine intrinsische Eigenschaft von Wolfram sind.

Eine Synthese von Wolframmischkristallen aus Wolfram mit Tantal oder Wolfram mit Vanadium konnte keine Verbesserung der Duktilität zeigen. Eine Versuchsreihe zeigte, dass die Duktilität von Wolfram am größten ist, wenn als Material reines Wolfram ohne Zumischungen verwendet wird. Reines Wolfram ist in Kornform K in Fig. 2D dargestellt ist.

Weiterhin konnte durch Simulation nachgewiesen werden, dass sich die sogenannte Peierls-Spannung beim Zulegieren von Tantal oder Vanadium zu Wolfram erhöht. Damit bestätigt die Simulation die experimentellen Ergebnisse. Das bislang einzig gefundene Element, welches die Peierls-Spannung reduziert, ist Rhenium. Damit ist Wolfram-Rhenium mit mehr als 8% Rhenium-Zusatz die einzige bekannte Wolframlegierung, die eine ausreichende Duktilität für einen Strukturwerkstoff aufweist. Die Nachteile dieser Legierung sind hohe Verfestigungsraten, erhebliche Herstellungs- und Fertigungsprobleme durch mehrfaches Weichglühen und der sehr hohe Preis von ca. 12 000 US-Dollar pro Kilogramm der Legierung (Stand August 2009).

Aufgrund der schwachen Korngrenzen hängt das Bruchverhalten von Wolfram als Refraktärmetall stark von der Mikrostruktur, also der Kornform ab. Die Mikrostruktur bei durch Schmieden hergestellten Wolframstäben weist in Achsrichtung, der Längsrichtung L, langgezogene Körner auf. Dies ist schematisch in der Fig. 3A gezeigt. Die Korngrenzen der länglichen Körner K_{L} des Metallrohrs 1 sind die Schwachpunkte des Materials. Damit ist das in Fig. 3A gezeigte Metallrohr 1, das aus einem massiven Wolframstab herausgebohrt wurde, anfällig für Brüche in Achsrichtung, der Längsrichtung L.

Eine Anforderung an ein Innendruck tragendes Metallrohr sind hohe Duktilität, hohe Risszähigkeit und hohe Energieaufnahme im Kerbschlagbiegeversuch. Allgemein gilt für Innendruck tragende Rohre die bekannte "Kesselformel", aus der hervorgeht, dass die Spannungen in Umfangsrichtung, d.h. Tangentialspannung, um den Faktor 2 größer sind als die Spannungen in Achsrichtung, d.h. in Längsrichtung L. Damit ergibt sich das Problem, dass ein unter Innendruck stehendes Rohr nach der Kesselformel aufgrund der Tangentialspannung unter Rissausbreitung in Achsrichtung platzt. Aufgrund der Mikrostruktur und der schwachen Korngrenzen ist gerade ein Platzen in Achsrichtung für das in der Fig. 3A gezeigte Metallrohr 1 die zu erwartende Schwachstelle des Stabmaterials.

Da das massive Wolframmaterial zur Korngrenzbrüchen neigt, ist die Achsrichtung die bevorzugte Rissausbreitungsrichtung und damit der Schwachpunkt des Materials.

**Fig. 3B** zeigt ein Metallrohr 1, das eine Mehrzahl von Lagen einer Folie 10 aus einem refraktären Metall aufweist. Die Folie 10 wurde in einem Walzprozess hergestellt. Bei dem Walzprozess bilden sich flache Körner K_{F} aus dem Refraktärmetall aus; im Gegensatz zu den länglichen Körnern K_{L} des massiven Metallrohrs 1, das in Fig. 3A gezeigt ist. Fig. 3B zeigt schematisch, dass sich die flachen Körner K_{F} wie übereinander gestapelte Pfannkuchen überlappen.

Die Mikrostruktur der Folie 10 ist vergleichbar mit einem Stapel von Pfannkuchen. Beim Aufwickeln der Folie 10 zum Ausformen des Metallrohres 1 passen sich die Körner der Kontur an. Eine von außen auf das Metallrohr 1 angreifende Kraft trifft die Körner dann immer in 'best case'-Orientierung, wodurch die Problematik der schwachen Korngrenzen (vgl. Fig. 3A) umgangen wird.

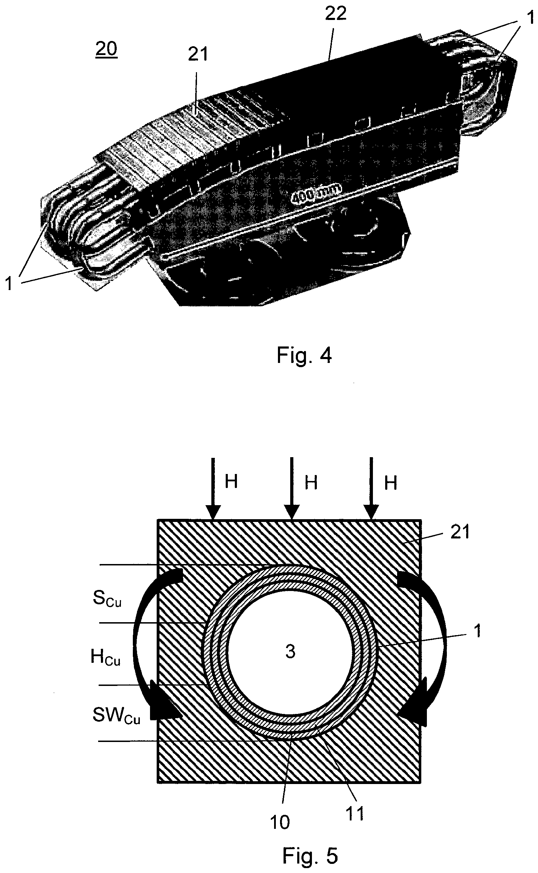

**Fig. 4** zeigt einen Divertor 20. Ein Divertor ist eine Vorrichtung in einem Fusionsreaktor, die das Fusionsplasma von Verunreinigungen befreit. Mit einem Divertor werden entstehende Verunreinigung des Fusionsplasmas nicht auf eine Wand zurückbefördert, sondern kontrolliert auf speziell ausgerüstete Platten gelenkt. Bei der Neutralisation an den sogenannten Divertorplatten entsteht Neutralgas, welches gegenüber dem Hauptplasmastrom einen erhöhten Druck aufweist. Das Neutralgas wird durch Divertorpumpen aus der Reaktorkammer befördert.

Der Divertor 20 weist einen Block 21 auf, der im eingebauten Zustand dem Fusionsplasma zugewandt ist und aus mehreren massiven Wolframstücken aufgebaut ist. Weiterhin weist der Divertor 20 einen Monoblock 22 auf, der aus einem Carbonfiberkomposit CFC besteht. Beide Blöcke 21 und 22 erhitzen sich im Betrieb auf extrem hohe Temperaturen von über 1000°C. Deswegen werden sie durch Metallrohre 1 gekühlt, die die Blöcke 21 und 22 durchdringen und ein Medium wie z.B. Helium zur Kühlung der Blöcke 21, 22 transportieren. Die Metallrohre 1 sind dabei sehr hohen Temperaturen ausgesetzt, und dürfen deswegen auch bei hohen Temperaturen nicht schmelzen. Als Material für die Metallrohre 1 bietet sich ein Refraktärmetall wie Wolfram an. Das die Metallrohre 1 durchströmende Medium wird ebenfalls im Betrieb des Divertors stark erhitzt und baut einen Innendruck auf, der die Metallrohre 1 nicht beschädigen soll. Die Metallrohre 1 bestehen aus einer Folie aus Refraktärmetall und einem die Mehrzahl von Lagen aus Folie verbindendem Lot, wie z.B. in den Figuren 1A und 1B gezeigt.

**Fig. 5** zeigt in einer schematischen Ansicht einen Schnitt durch den Block 21 aus Wolfram des in Fig. 4 gezeigten Divertors 20. In der in Fig. 5 gezeigten schematischen Darstellung ist der Monoblock 21 quadratisch ausgebildet. Von der im Betrieb dem Fusionsplasma zugewandten Seite erfolgt Hitzeeinstrahlung. Senkrecht zur Hitzeeinstrahlrichtung H ist ein Metallrohr 1 angeordnet, das den Monoblock 21 im Wesentlichen zentral durchdringt und eine Kühlfunktion bereitstellt. Im Inneren des Metallrohrs 1 ist ein Hohlraum 3 ausgebildet, durch den zur Kühlung des Monoblocks 21 ein Medium wie z.B. Helium transportiert wird.

Das Metallrohr 1 weist mehrere Lagen einer Folie 10 aus Wolfram als Refraktärmetall auf sowie mehrere Lagen eines zwischen den Lagen der Folie 10 angeordneten Lotes 11, im vorliegenden Fall Kupfer.

Das Metallrohr 1 ist als Innendruck tragendes Strukturbauteil des Divertors 20 verwendbar. Die hohe thermische Leitfähigkeit des Kupfers, ca. 400Wm⁻¹K⁻¹ bei Raumtemperatur, verbessert dabei die Kühlungswirkung des durch das Metallrohr 1 transportierten Mediums sowie die Temperaturverteilung im Metallrohr 1 selber.

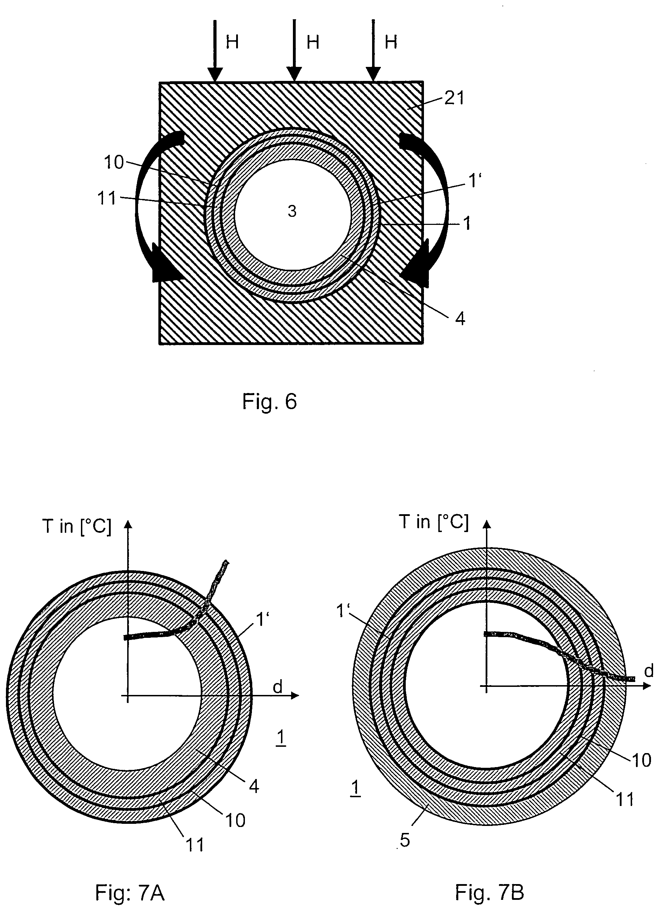

Für ITER, kurz für 'International Thermonuclear Experimental Reactor', ein internationales Forschungsprojekt zum Bau eines experimentellen Fusionsreaktors, wurde ein Konzept für einen Divertor entwickelt, das jedoch nicht für den geplanten Fusionsreaktor DEMO, kurz für DEMOnstration Power Plant, verwendet werden kann. Deswegen müssen neue Konzepte erarbeitet werden, z.B. ein mit Helium gekühlter Divertor. Das in Figur 5 und Figur 6 gezeigte Metallrohr 1 kann in einem solchem mit Helium gekühlten Divertor verwendet werden.

Um die Heliumkühlung effektiver zu gestalten, bedient man sich dem 'jet-impingement'. Dabei wird Helium beschleunigt und trifft mit hoher Geschwindigkeit auf die zu kühlende Fläche. Die Kühlung basiert auf dem Prinzip der Prallkühlung. Das aktuelle Design eines Helium gekühlen Divertors besteht aus kleinen Wolframfingern mit rohrähnlichen Elementen. Die Problematik von massiven Wolframrohren wurde bereits erörtert.

Das in Figur 5 gezeigte Wolframfolienrohr aus Wolframfolie kann als Strukturwerkstoff eingesetzt werden. Somit besteht die Möglichkeit, einen mit Helium gekühlten Divertor bereitzustellen. Der Divertor besteht aus großen Metallrohren als Komponenten. Die Kühlung erfolgt durch Helium im jet-impingement. Wolframfolie 10 und Lötfolie 11 werden zu dem Metallrohr 1 gewickelt. Die gerollten Folien werden in die Wolframmonoblöcke 21 geschoben. Aufgrund der elastischen Dehnung passen sich die Folien 10 und 11 der Innenkontur der Wolframmonoblöcke an. In diesem Zustand werden die Folien miteinander verlötet.

Im Einsatz kann Helium bei einer Temperatur von ca. 350°C bis 500°C in das Metallrohr eingeführt werden. Das Helium kann beim Durchlaufen des Metallrohrs 1 durch Abwärme auf ca. 1000°C erhitzt werden und dabei einen Innendruck auf das Metallrohr von ca. 100 bar bewirken.

**Fig. 6** zeigt ähnlich wie Fig. 5 einen schematischen Querschnitt durch einen Monoblock 21 aus einem Refraktärmetall eines Divertors, der mittels eines durch den Monoblock 21 verlaufenden Metallrohrs 1 gekühlt wird. Das Metallrohr 1 besteht in einem äußeren Mantelbereich aus einem Folienrohr 1', das aus einer Folie 10 aus einem Refraktärmetall und einem zwischen den Lagen der Folie angeordneten Lot 11 aufgebaut ist, sowie einem Innenrohr 4. Das Innenrohr 4 kann zum Beispiel aus Stahl ausgebildet sein. Das Metallrohr 1 weist radial von innen nach außen zunächst das Innenrohr 4 auf, auf das von außen die einzelnen Lagen des Folienrohrs 1' gewickelt sind.

Im Inneren des Metallrohres 1 ist ein Hohlraum 3 ausgebildet. Der Hohlraum 3 dient zum Leiten eines Mediums. Die in Fig. 6 dargestellte Ausführungsform eines Divertors eignet sich zum Beispiel als ein wassergekühlter Divertor. Als den Hohlraum 3 des Divertors durchströmendes Medium kann zum Beispiel Wasser verwendet werden. In diesem Ausführungsbeispiel ist das Folienrohr 1' aus Refraktärmetallfolie 10 ein Funktionsbauteil, während das Innenrohr 4 des Metallrohrs 1 als Strukturbauteil dem Innendruck des Mediums standhält.

Abhängig vom Einsatzgebiet kann das Metallrohr unterschiedlich ausgebildet sein: Beim herkömmlichen ITER-Design wird über ein Kupferrohr ein Wolframmonoblock geschoben. Als Kühlmedium wird Wasser verwendet. Bei einem DEMO-Reaktor ist Kupfer als Strukturwerkstoff nicht einsetzbar, da Kupfer unter Neutronenbelastung schwillt. Deswegen wird das Kupferrohr durch ein Stahlrohr ersetzt. Es besteht weiterhin ein Problem mit den unterschiedlichen thermischen Ausdehnungskoeffizienten von Stahl und Wolfram.

Das in Figur 6 gezeigte Metallrohr 1 löst dieses Problem: Um ein Stahlrohr wird Wolframfolie und Lötfolie (z.B. Kupferfolie) in Lagen gewickelt und miteinander verlötet, um das Metallrohr herzustellen. Wird ein Wolframmonoblock über das Metallrohr geschoben, so ist das Problem entschärft. Das Metallrohr aus um das Stahlrohr gewickelter Wolframfolie hat folgende Merkmale: Der Übergang von Wolfram zu Stahl im Metallrohr wird insofern aufgeweicht, als dass das Lötmaterial Kupfer die Wärmelast gut ableitet. Die Wärmelast wird durch das Kupfer in Umfangsrichtung bis an den Boden des Metallrohres geleitet. Dadurch wird eine effektivere Kühlung erzielt, ein sog., thermal management'. Weiterhin verbessert diese Ausführungsform des Metallrohrs das ITER-Divertor Design und stellt eine pragmatische Lösung für einen DEMO-Divertor bereit durch eine Wasserkühlung, ein Rohrdesign aus einem Stahlrohr umwickelt mit Wolfram- und Kupferfolie, sowie Wolframmonoblöcken.

In das in Figur 6 gezeigte Metallrohr 1 kann Wasser mit einer Eingangstemperatur von ca. 100°C bis 120°C und einem Innendruck von ca. 40 bar eingeführt werden.

Das Folienrohr 1' kann als Übergangselement zwischen dem Innenrohr 4 aus Stahl und dem Wolfram des Blocks 21 eingesetzt werden. Als Übergangselement stellt das Folienrohr 1' einen Übergang zwischen dem Stahl mit einem thermischen Ausdehnungskoeffizient von 12x10⁻⁶ pro K bei Raumtemperatur und Wolfram mit einem thermischen Ausdehnungskoeffizient von 4x10⁻⁶ pro K bei Raumtemperatur bereit und wirkt als Funktionsbauteil. Ohne dieses Übergangselement ist ein Verbinden des Stahlrohrs mit dem Wolfram-Monoblock technisch problematisch.

**Fig. 7A** zeigt ein Metallrohr 1, das in seinem Inneren einer geringeren Temperatur ausgesetzt ist als an seinem Außenbereich, d.h. seinem Außenmantel. Das Metallrohr 1 ist schematisch in seinem Querschnitt dargestellt und weist ein Innenrohr 4 aus Metall wie z.B. Stahl auf. Auf das Innenrohr sind mehrere Lagen einer Folie 10 aus einem Refraktärmetall gewickelt, wobei zwischen den einzelnen Lagen der Folie 10 ein Lot 11 angeordnet ist. Ein Temperaturverlauf für eine geplante Verwendung des Metallrohrs 1 ist beispielhaft in einem Graph in Fig. 7A dargestellt.

Ist das Metallrohr für einen Einsatz geplant, an dem die Rohrinnenseite einer niedrigeren Temperatur ausgesetzt ist als die Rohraußenseite, so kann ein Stahlrohr mit Wolframfolie und Lötfolie umwickelt werden (vgl. Fig. 7A). Damit werden die Materialeigenschaften dem Temperaturgradienten angepasst.

**Fig. 7B** zeigt in einer schematischen Ansicht einen Querschnitt durch ein weiteres Ausführungsbeispiel eines Metallrohrs 1. Das Metallrohr 1 weist ein Außenrohr 5 aus einem Metall auf, das von innen mit einem Folienrohr 1' beaufschlagt ist. Das Folienrohr 1' besteht abwechselnd aus Lagen der Folie 10 und des Lotes 11. Das in Fig. 7B gezeigte Metallrohr 1 ist für Einsatzgebiete geeignet, in denen die Innentemperatur im Metallrohr 1 groß werden kann, während im Außenbereich eine kühlere Temperaturbeaufschlagung zu erwarten ist (vgl. den beispielhaften Graph in Fig. 7B). Weiterhin bewirkt das in Figur 7B gezeigte Metallrohr 1 einen hohen Korrosionsschutz durch das Wolfram.

Ist das Metallrohr für einen Einsatz geplant, an dem die Rohrinnenseite einer höheren Temperatur ausgesetzt ist als die Rohraußenseite, so kann eine Wolfram- und Lötfolie miteinander verwickelt werden und in ein Stahlrohr geschoben werden. Danach wird das entstandene Metallrohr 1 verlötet. Hierbei erfolgt ein 'Materialtailoring', d.h. die Materialeigenschaften werden dem Temperaturgradient angepasst.

In den in Figuren 7A und 7B gezeigten Ausführungsbeispielen wird das Innenrohr 4 bzw. das Außenrohr 5 durch das Folienrohr 1' vor Korrosion geschützt. Das Folienrohr 1' kann dabei durch Hippen, Kaltlöten oder HRP auf das Innenrohr 4 bzw. das Außenrohr 5 aufgebracht werden.

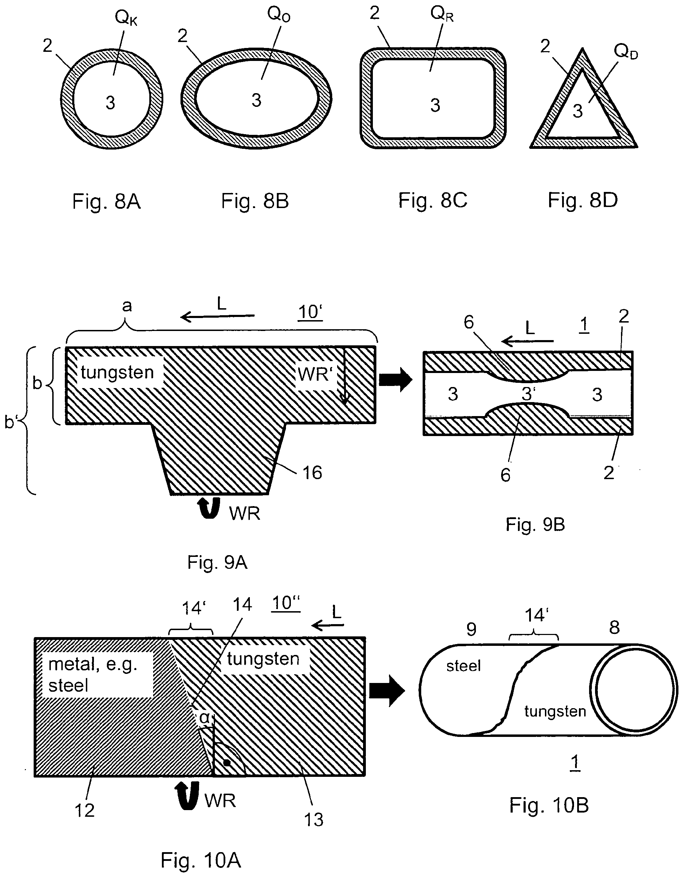

**Figuren 8A bis 8D** zeigen schematisch den Querschnitt verschiedener Ausführungsbeispiele eines Metallrohres mit einem Rohrmantel 2, der einen Hohlraum 3 umschließt. Die in den Figuren 8A bis 8D gezeigten Querschnitte sind in radialer Richtung durch ein Metallrohr geschnitten.

Die Fig. 8A zeigt ein Ausführungsbeispiel mit einem kreisförmigen Querschnitt Q_{K}.

Die Fig. 8B zeigt ein Ausführungsbeispiel mit einem ovalen Querschnitt Q_{O}.

Die Fig. 8C zeigt ein Ausführungsbeispiel eines Metallrohres mit einem rechteckigen Querschnitt Q_{R}. Die Ecken des im Querschnitt rechteckig ausgebildeten Metallrohres sind abgerundet.

Die Fig. 8D zeigt ein Ausführungsbeispiel eines Metallrohres mit einem dreieckigen Querschnitt Q_{D}, wobei die Ecken scharfkantig ausgebildet sind. Alternativ können die Ecken auch abgerundet ausgebildet sein.

**Figuren 9A und 9B** zeigen ein weiteres Ausführungsbeispiel eines Metallrohrs. Fig. 9A zeigt eine Folie 10', die vollständig aus einem Refraktärmetall, wie zum Beispiel Wolfram, ausgebildet ist. Die Folie 10' ist in Form eines flachen, langgezogenen Rechtecks mit einer Länge a und einer Breite b ausgebildet. Die Breite b ist dabei kürzer ausgebildet als die Länge a. An einer seitlichen Position der Folie 10' ist ein Überhang 16 ausgebildet. Der Überhang 16 besteht aus dem gleichen Refraktärmetall wie der Rest der Folie 10'. Am Überhang 16 weist die Folie 10' eine erweiterte Breite b' auf. Die erweiterte Breite b' ist dabei größer als die normale Breite b der Folie 10'. Beispielsweise kann die erweitere Breite b' der Folie 10' doppelt so breit ausgebildet sein, als die normale Breite b. Eine vorgesehene Wickelrichtung WR ist in Fig. 9A als Pfeil dargestellt. Ebenso ist eine Walzrichtung WR' gezeigt. Die Walzrichtung WR' ist im wesentlichen senkrecht zur Längsrichtung L. Im gewickelten Zustand ist die Walzrichtung WR' im Wesentlichen parallel zur Wickelrichtung WR und im Wesentlichen senkrecht zur Achsrichtung des Metallrohrs 1 ausgerichtet.

Fig. 9B zeigt das Metallrohr 1, das aus der Folie 10' hergestellt wurde. Ein Rohrmantel 2 des Metallrohrs 1 ist aus mehreren Lagen der Folie 10' aufgebaut. Der Innenraum des Metallrohrs 1 weist einen im Wesentlichen zylindrisch aufgebauten Hohlraum 3 auf, wobei die Zylinderachse des Hohlraums 3 in Längsrichtung L bzw. Achsrichtung des Metallrohrs 1 weist. In dem Abschnitt der Folie 10' mit dem Überhang 16 werden beim Aufwickeln der Folie 10' eine größere Anzahl von Lagen der Folie 10' ausgebildet als in den Abschnitten der Folie 10', die lediglich die Breite b aufweisen. Dadurch bildet sich eine Ausbuchtung 6, die vom Rohrmantel 2 ins Rohrinnere weist. Die Ausbuchtung 6 bewirkt eine Verengung 3' des Hohlraums 3. Durch die Ausbuchtung 6 und die resultierende Verengung 3' wird im Inneren des Metallrohrs 1 eine Düse ausgebildet.

Der in Fig. 9A gezeigte Überhang 16 ist winklig, aber nicht rechtwinklig zur Längsrichtung L ausgebildet. Dadurch verbreitert sich die Breite b der Folie 10' nicht sprungartig, sondern allmählich auf eine erweiterte Breite b'. Der Überhang 16 ist trapezförmig ausgebildet, wobei die erweiterte Basis des Trapezes an eine Längsseite des rechteckig ausgebildeten Folienteils der Folie 10' angrenzt. Die trapezförmige Ausbildung des Überhangs 16 bewirkt in Längsrichtung kein plötzliches, sondern ein allmähliches Ausbilden und Abklingen der Verengung 3'.

Die in Fig. 9B gezeigte Ausführungsform des Metallrohrs 1 kann sowohl als konvergente, als divergente und/oder als konvergent-divergente Düse eingesetzt werden.

Alternativ zu der in Fig. 9A gezeigten Ausführungsform der Folie 10' kann der Überhang 16 zumindest an einer Seite rechtwinklig zur Längsrichtung L ausgebildet sein. Ein aus einer solchen Folie gewickeltes Metallrohr würde an der Stelle der Verengung 3' keine allmähliche Erweiterung der Ausbuchtung 6 aufweisen, sondern eine sprunghafte Ausbuchtung, was für manche Anwendungen von Vorteil sein kann.

Allgemein kann eine Folie aus einem Refraktärmetall mit einer in Längsrichtung L seitlich ausgebildeten Ausbuchtung verwendet werden, um ein Metallrohr mit einer Düse herzustellen. Eine Düse kann durch eine Erhöhung oder Verminderung der Folienlagenanzahl ausgebildet werden. Alternativ zu der in Fig. 9A gezeigten Folie mit einem Überhang kann auch eine Folie verwendet werden, die einen Abschnitt verminderter Breite aufweist, um an diesem Wickelabschnitt die Anzahl der Lagen soweit zu reduzieren, dass eine Aufweitung des Hohlraums 3 im Inneren des Metallrohrs 1 ausgebildet wird.

So können zum Beispiel konvergent-divergente Düsen oder Lavaldüsen ausgebildet werden. Durch eine geeignet geschnittene Ausgangsfolie kann nach dem Wickeln und Verbinden ein Metallrohr mit variablem Innendurchmesser (oder Außendurchmesser) hergestellt werden. An der Ausbuchtung bzw. der Aufweitung des Rohrmantels entstehen so künstlich Turbulenzen, so dass das Metallrohr als Turbolator eingesetzt werden kann. Eine solche Düse kann z.B. zur Vergasung bei der Herstellung von Pulver und/oder zum künstlichen 'turbulent machen' einer Strömung (ähnlich einem Stolperdraht bei Segelflugzeugen) verwendet werden.

In **Figuren 10A und 10B** ist in einem Ausführungsbeispiel ein Metallrohr 1 gezeigt, das einen ersten Rohrabschnitt 8 und einen zweiten Rohrabschnitt 9 aufweist. Der erste Rohrabschnitt 8 ist aus einer Folie aus einem Refraktärmetall, wie zum Beispiel Wolfram, ausgebildet. Der zweite Rohrabschnitt 9 ist aus einem Metall oder einer Metalllegierung wie zum Beispiel Stahl ausgebildet. Das Metallrohr 1 wird mit der in Fig. 10A gezeigten Folie 10" hergestellt. Die Folie 10" ist flach und in Form eines Rechtecks ausgebildet. Ein erster Bereich der Folie 10" besteht aus einer Refraktärmetallfolie 13. Ein zweiter Bereich der Folie 10" besteht aus einer Metallfolie 12, zum Beispiel einer Stahlfolie.

In einer Übergangslinie 14 geht die Refraktärmetallfolie 13 in die Metallfolie 12 über. An dieser Stelle können die beiden Folien zum Beispiel aneinander geschweißt sein, oder so gewalzt worden sein, dass sie ineinander übergehen. Der Materialübergang erfolgt entlang der Übergangslinie 14, die winklig zur Querrichtung der Folie 10" angeordnet ist. Die Übergangslinie 14 ist um einen Folienübergangswinkel α gegen die Querrichtung (bzw. Walzrichtung) der Folie 10" ausgebildet. Der Folienübergangswinkel α beträgt vorzugsweise 30° bis 60°, insbesondere 45°±2°.

In Längsrichtung L erfolgt der Übergang von der Refraktärmetallfolie 13 zur Metallfolie 12 durch die winklige Ausbildung entlang eines Übergangsbereichs 14'. Beim Wickeln der Folie 10" in Wickelrichtung WR (angedeutet in Fig. 10A durch einen gebogenen Pfeil) wird das Metallrohr 1 so hergestellt, dass in dem Übergangsbereich 14' ein graduierter Übergang vom Material des ersten Rohrabschnitts 8 zum Material des zweiten Rohrabschnitts 9 ausgebildet wird (vgl. Fig. 10B).

Wolfram als Refraktärmetall hat einen thermischen Ausdehnungskoeffizienten von 4x10⁻⁶ pro Kelvin bei Raumtemperatur. Stahl hat einen dreimal größeren thermischen Ausdehnungskoeffizienten von 12x10⁻⁶ pro Kelvin bei Raumtemperatur. Wird ein Bauteil aus diesen beiden Materialien gebildet, das starken Temperaturschwankungen ausgesetzt ist, können bei herkömmlichen Wolfram-StahlRohren aufgrund der unterschiedlichen thermischen Ausdehungskoeffizienten Spannungen entstehen, die das Bauteil beschädigen können. Durch den graduierten Übergang im Übergangsbereich 14' erfolgt ein allmählicher Übergang der Materialien und somit der thermischen Ausdehnungskoeffizienten, was einer Spannungsentwicklung entgegenwirkt.

Alternativ kann ein Metallrohr aus Refraktärmetallfolie auch 3 bis 8 mm, insbesondere 5 mm tief in ein Stahlrohr eingesteckt sein und mit diesem verlötet sein.

Bei Löttemperatur herrscht Spannungsfreiheit, während des Abkühlens nimmt die Spannung zu und ist bei Raumtemperatur vorläufig am größten. Je niedriger die Temperatur ist, desto kritischer ist die Spannung. Berstversuche bei Raumtemperatur haben aber gezeigt, dass keine Spannungsprobleme am Übergang vom Refraktärmetallrohr zum Stahlrohr auftreten, wenn ein Refraktärmetallfolienrohr in ein Stahlrohr eingesteckt ist.

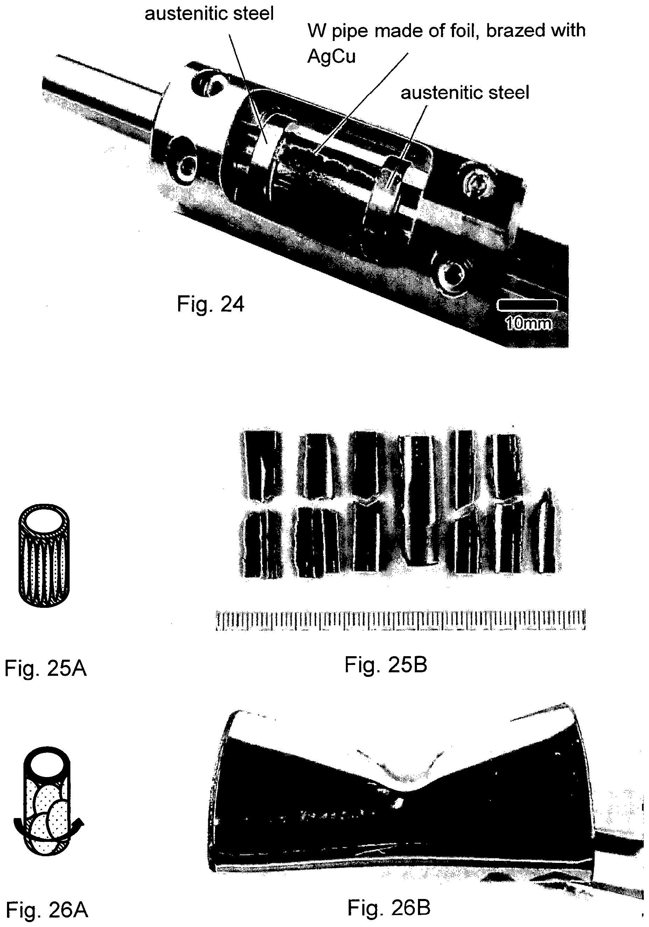

**Figur 24** zeigt eine Fotografie zu einem Berstversuch bei Raumtemperatur. Selbst bei einem Berstdruck von 1000 bar bleibt ein in zwei Stahlrohre eingeschobenes und verlötetes Wolframrohr aus Folie oder Folien intakt.

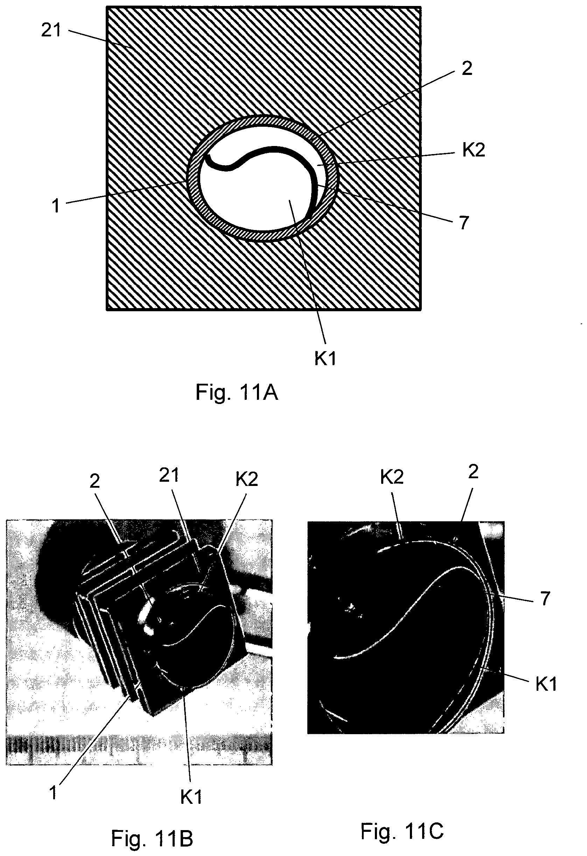

**Figuren 11A, 11** **B und 11C** zeigen in einer schematischen Ansicht einen Querschnitt durch bzw. eine Ansicht auf ein Metallrohr 1, das im Inneren zwei Kammern aufweist. Das Metallrohr 1 durchdringt einen Block 21 eines Divertors, wie er in Figur 4 dargestellt ist. Das Metallrohr dient zur Kühlung des Blocks 21.

Das Metallrohr weist einen Rohrmantel 2 auf, der mehrere Lagen einer Folie aus Refraktärmetall aufweist. Eine oder mehrere Lage/n der Folie aus Refraktärmetall bildet/bilden eine Trennwand 7 und ist/sind im Inneren des Metallrohrs 1 so angeordnet, dass der vom Rohrmantel 2 umgebene Hohlraum in eine erste Kammer K1 und eine zweite Kammer K2 unterteilt ist. Die Trennwand 7 ist S-förmig ausgebildet. Die S-Form ist zum Einen statisch von Vorteil, zum Anderen bietet diese Form auch eine gute Möglichkeit, die Volumina der Kammern K1 und K2 auf die geplante Anwendung des Metallrohrs 1 abzustimmen.

Die in Figuren 11A bis 11C gezeigte Ausführungsform des Metallrohrs 1 kann als Gegenstromwärmetauscher verwendet werden. Ein erstes Medium durchströmt dabei die erste Kammer K1 entlang einer Längsrichtung des Metallrohrs 1, während ein zweites Medium die zweite Kammer K2 entgegen der Längsrichtung des Metallrohrs 1 durchströmt, wobei ein Wärmeaustausch zwischen den beiden Medien erfolgt.

Das in den Figuren 11A bis 11C gezeigte Metallrohr 1 kann hergestellt werden, indem zunächst eine oder mehrere Folien als Trennwand 7 geformt wird/werden, und danach die Folien/Folien in Mantelrichtung des Metallrohrs 1 gewickelt wird/werden.

Die Trennwand 7 kann an einem längsseitigen Rohrende unterbrochen sein bzw. ein oder mehrere Löcher aufweisen. Dabei kann dieses längsseitige Rohrende kappenartig geschlossen ausgebildet sein. Durch ein solches Metallrohr kann ein auf sich selbst zurückgeführter Kühlkreislauf bereitgestellt werden.

Es ist auch möglich, dass die Trennwand nicht in den Bereich der Kappe hinein ragt, so dass die beiden Kammern im Bereich der Kappe miteinander verbunden sind.

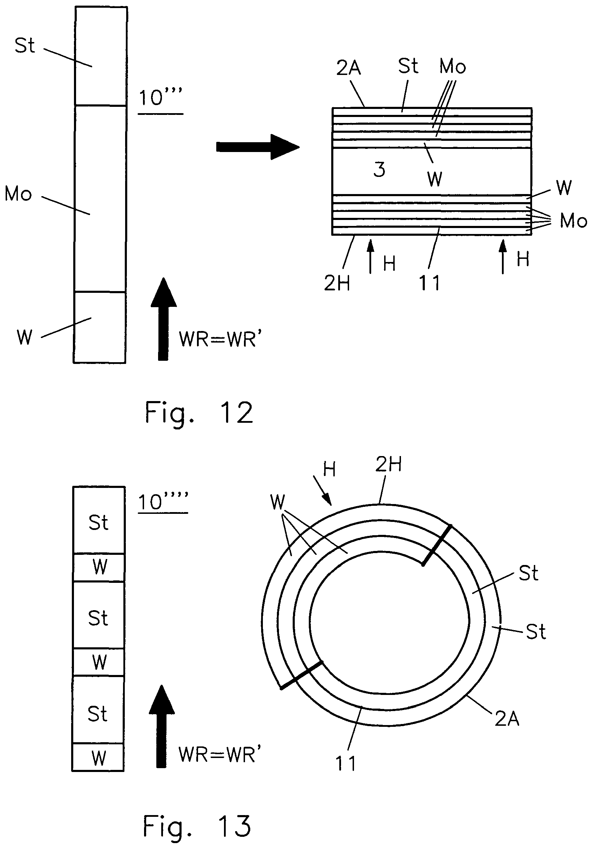

In **Fig. 12** ist ein weiteres Ausführungsbeispiel eines Metallrohres mit einer Mehrzahl von Lagen aus einer Folie aus Refrektärmetall schematisch dargestellt. Im linken Teil der Fig. 12 ist eine Folie 10"' gezeigt, die einen unteren Bereich aus Wolframfolie W aufweist, einen mittleren Bereich aus einer Molybdänfolie Mo und einen oberen Bereich aus einer Stahlfolie St. Eine vorgesehene Wickelrichtung WR ist als Pfeil dargestellt. Die Wickelrichtung WR ist im Wesentlichen parallel zur Walzrichtung WR' ausgerichtet, entlang welcher die Wolframfolien und/oder Molybdänfolien gewalzt wurde.

Der untere Bereich aus Wolframfolie W weist eine Länge auf, die im Wesentlichen dem Innenumfang des zu wickelnden Metallrohrs 1 entspricht. Die Molybdänfolie Mo weist eine Länge auf, die zum Beispiel dem drei- bis vierfachen mittleren Umfang des Rohrmantels des herzustellenden Metallrohrs 1 entspricht. Die Stahlfolie St weist eine Länge auf, die in etwa der Hälfte des Außenumfangs des herzustellenden Metallrohrs 1 entspricht.

Zur Herstellung des Metallrohrs 1 wird die Folie 10"' so gewickelt, dass im Inneren des gewickelten Metallrohrs 1 die Wolframfolie W dem Hohlraum 3 im Inneren des Metallrohrs 1 zugewandt ist. Von innen radial nach außen betrachtet, folgen auf die Wolframfolie W drei bis vier Lagen der Folie 10"' aus Molybdän Mo. Das Metallrohr 1 weist einen ersten Mantelbereich 2H und einen zweiten Mantelbereich 2A auf. Der erste Mantelbereich 2H ist gegenüber dem zweiten Mantelbereich 2A angeordnet.

Das Metallrohr 1 ist dafür ausgebildet und vorgesehen, einer Hitzestrahlung aus Hitzeeinstrahlrichtung H mit dem ersten Mantelbereich 2H zugewandt angeordnet zu werden. An diesem ersten, der Hitzeeinstrahlung zugewandten Mantelbereich 2H ist die äußerste Lage des Metallrohrs 1 aus Molybdän Mo ausgebildet. Der zweite Mantelbereich 2A ist in einem Einbauzustand der Hitzeeinstrahlrichtung H abgewandt und weist an seiner Außenschicht die Folie aus Stahl St auf.

Zwischen den einzelnen Lagen der Folie 10"' ist jeweils ein Lot 11 angeordnet. Damit entsteht ein Metallrohr 1, das folgenden Anforderungen genügt:
1. An der Metallrohrinnenseite befindet sich Wolframfolie W, die hohe Anforderungen an Korrosionsbeständigkeit erfüllt.
2. Der Mittelbereich des Rohrmantels des Metallrohrs 1 ist aus Molybdän Mo ausgebildet und mit Kupfer verlötet. Dadurch erfüllt dieser Bereich Anforderungen an Hochtemperaturkriechbeständigkeit und Hochtemperaturfestigkeit.
3. An dem der Hitzeeinstrahlung abgewandten Mantelbereich 2A ist die Stahlfolie St angeordnet, wodurch der zweite Mantelbereich 2A gute Isolationseigenschaften aufweist.
4. An dem der Hitzeeinstrahlung zugewandten Mantelbereich 2H ist ein Verbund aus gewickeltem Molybdän Mo verlötet mit Kupfer angeordnet, welcher eine hohe Wärmeleitfähigkeit aufweist.

Ein solches Metallrohr 1 kann zum Beispiel in punktfokussierenden Kraftwerken und insbesondere in Parabolitkraftwerken, sogenannten Dish-Sterling-Systemen, eingesetzt werden, die von den bislang bekannten solarthermischen Kraftwerken den höchsten Wirkungsgrad von 16% aufweisen. Ein Wärmeträgermedium strömt im Hohlraum 3 des Metallrohres 1 durch einen 'Receiver' und wird dabei aufgeheizt. Ein solcher Rohrreceiver verwendet metallische Rohre zur Absorption der Solarstrahlung. Als die Metallrohre 1 durchströmendes Wärmeträgermedium kann zum Beispiel Helium, Luft, Öl oder eine Salzschmelze verwendet werden. Das Wärmeträgermedium nimmt beim Durchströmen des Receivers Wärme auf. Die bislang bekannten Receiver sind aufgrund von Materialgrenzen auf maximale Temperaturen der Wärmeträgermedien von 800°C bis 900°C begrenzt. Mit dem in Fig. 12 gezeigten Metallrohr 1 kann eine wesentlich höhere Temperatur des Wärmeträgermediums zugelassen werden. Durch die höhere Temperatur kann ein höherer Wirkungsgrad der Anlage erzielt werden. Weiterhin ist die Rohrinnenwand korrosionsbeständig und das Metallrohr 1 geeignet, viel solare Energie zu absorbieren und dabei wenig durch Wärmestrahlung abzugeben.

Fig. 13 zeigt eine weitere Ausführungsform eines Metallrohrs 1, das ebenfalls für ein punktfokussierendes Kraftwerk bzw. ein Paraboloidkraftwerk vorgesehen ist. Im linken Teil der Fig. 13 ist eine Folie 10"" gezeigt, die aufeinanderfolgende Bereiche einer Wolframfolie W und einer Stahlfolie St aufweist. Die Länge der einzelnen Bereiche aus Wolframfolie W entspricht etwa einem Drittel des mittleren Umfangs des herzustellenden Metallrohrs 1. Die einzelnen Bereiche aus Stahlfolie St weisen eine Länge auf, die in etwa zwei Drittel des mittleren Umfangs des herzustellenden Metallrohrs 1 lang ausgebildet ist. Wird die Folie 10"" in Wickelrichtung WR zu dem Metallrohr 1 aufgewickelt, weist etwa ein Drittel des Rohrmantels radial aufeinander folgende Lagen der Wolframfolie W auf, während ein zweiter Bereich des Rohrmantels mehrere Lagen der Stahlfolie St aufweist. Bei einer einseitigen Hitzebelastung in Hitzeeinstrahlrichtung H wird die aus Wolfram bestehenden Mantelseite als der Hitzeeinstrahlung zugewandte Mantelbereich 2H angeordnet. Der der Hitzeeinstrahlung abgewandte Mantelbereich 2A besteht aus mehreren Lagen Stahlfolie St. Die einzelnen Lagen der Folie 10"" werden jeweils mittels eines Lots 11 stoffschlüssig miteinander verbunden.

Beim Aufwickelvorgang der Folie 10"" wird die Folie so gewickelt, dass die Bereiche aus Wolframfolie jeweils radial auf die Bereiche aus Wolframfolie gewickelt werden, während die Bereiche aus Stahlfolie St radial aufeinander gewickelt werden.

Bei der in Figur 12 gezeigten Ausführungsform kann die Walzrichtung WR', entlang der die Wolframfolie W gewalzt ist, im Wesentlichen parallel zur Wickelrichtung WR sein.

Allgemein kann zur Herstellung eines Metallrohres eine Folie verwendet werden, die in Längsrichtung L aus unterschiedlichen Materialien besteht. Eines dieser Materialien ist ein Refraktärmetall. Das Metallrohr kann aus der Folie so gewickelt sein bzw. werden, dass Bereiche aus gleichem Material in radialer Richtung des Metallrohres aufeinander zu liegen kommen. Dadurch kann ein Metallrohr hergestellt werden, dass in zwei oder mehr Umfangsbereichen aus unterschiedlichen Materialien ausgebildet ist.

Das in Fig. 13 gezeigte Ausführungsbeispiel ist beispielhaft zu verstehen. In einem anderen Ausführungsbeispiel sind die in Wickelrichtung WR der Folie aufeinanderfolgenden Bereiche der unterschiedlichen Materialien gleich groß ausgebildet, so dass das aus der Folie gewickelte Metallrohr zur einen Hälfte aus einem Material besteht und die andere Hälfte aus einem anderen Material besteht. Abhängig von der geplanten Anwendung, kann der Bereich aus Refraktärmetall im Unterschied zu dem in Fig. 13 aufgeführten Ausführungsbeispiel anstelle eines Drittels des Umfangs auch an zwei Dritteln des Umfangs ausgebildet sein.

Das Metallrohr kann in Bereichen durch spezielle Materialwahl und dessen Ausdehnung z.B. an folgende Anforderungen angepasst werden: Lokale Korrosionsbeständigkeit z.B. durch eine Wolframfolie; Anpassung der Lotwahl an den Temperaturgradienten z.B. durch ein Lot aus Kupfer, einer Kupferlegierung, Palladium und/oder Silber; hohe lokale Energieabsorption z.B. durch eine Wolframfolie und/oder lokale Isolationseigenschaften z.B. durch eine Stahlfolie oder eine Folie aus Keramik wie z.B. Aluminiumoxid. Keramikfolie ist vor dem Sintern, d.h. Backen, biegsam.

Damit kann ein aus Folie und/oder Folien verschiedener Materialien gewickeltes Metallrohr eine Kombination aus einem Funktionsmaterial, mit z.B. einem Isolator, einer bestimmten Wärmeleitung und/oder einer bestimmten Korrosionsbeständigkeit, und einem Strukturmaterial, mit z.B. einer Hochtemperaturfestigkeit und/oder einer Hochtemperaturkriechbeständigkeit sein.

Durch die Folienwickeltechnik entfällt ein Beschichten durch CVD, d.h. chemical vapor deposition, oder PVD, d.h. physical vapor deposition, der Rohrinnenseite bzw. Rohraußenseite.

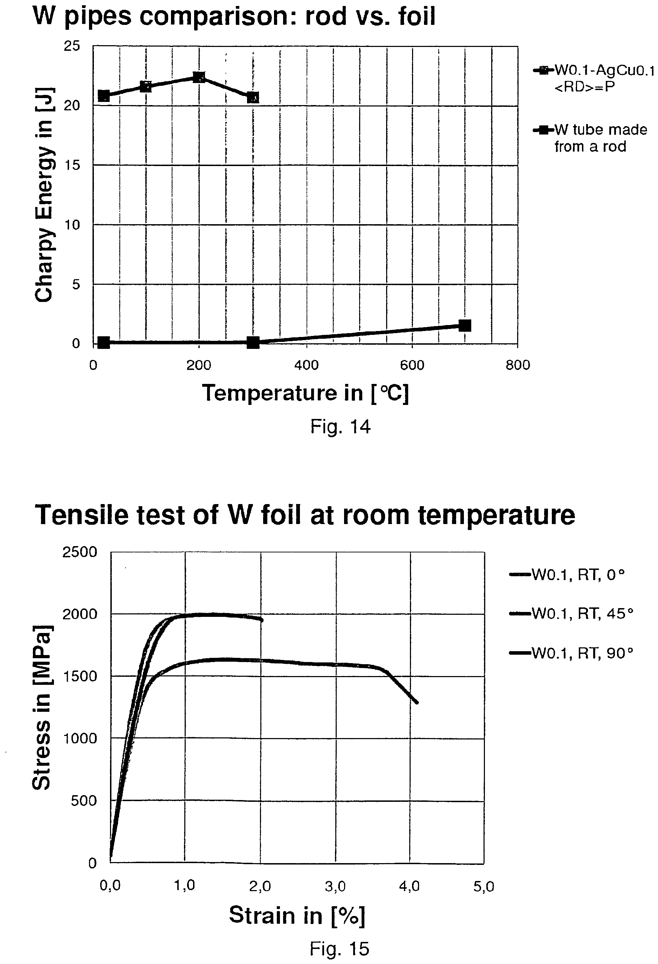

In **Figur 14** ist ein Diagramm gezeigt, das Versuchsergebnisse eines Kerbschlagbiegeversuchs vergleicht. Die Versuchsdurchführung ist an der EU-Norm DIN EN ISO 148-1 und 14556:2006-10 orientiert. Das Diagramm zeigt Versuchsergebnisse für ein massives Metallrohr aus Wolfram und für ein Metallrohr, das aus einer 100 µm dicken Folie aus Wolfram in mehreren Lagen besteht, die mittels eines Lotes aus Silber und Kupfer stoffschlüssig miteinander verbunden sind. Der Kerbschlagbiegeversuch dient dem Duktilitätstest des Materials. In dem ausgeführten Versuch wurden Wolframrohre mit einem Außendurchmesser von 15 mm, einer Wandstärke von 1 mm und einer Länge von 27 mm charakterisiert. Es ist bekannt, dass die Sprödbruchübergangstemperatur, sog. ductile to brittle transition temperature dbtt, von Wolfram und Molybdän stark von der Dehnrate und daher von der Testmethode abhängt. Da Strukturbauteile aus Sicherheitsgründen einer dynamischen Last standhalten müssen, wird das verwendete Wolframrohr durch den nach ASTM bzw. ISO standardisierten Kerbschlagbiegeversuch charakterisiert. Ist die im Betrieb auftretende Last bzw. die auftretende Dehnrate geringer als im Kerbschlagbiegeversuch (KSBV), so sind die Versuchsergebnisse als konservativ zu betrachten. Die Proben werden zusammen mit einem Auflager erwärmt, was eine einfache und exakte Temperaturkontrolle erlaubt. Um eine mit den Messstreifen bestückte Finne nicht zu überhitzen, wird die Finne direkt nach dem Versuch durch Federn wieder aus dem Ofen katapultiert und arretiert.

Die Versuchsergebnisse an den aus Stabmaterial hergestellten Rohren zeigen ein Bruchbild hinsichtlich der Rissausbreitung entlang der Korngrenzen. Die aus einem massiven Wolframblock ausgebohrten Rohre brechen so leicht, dass eine Verwendung als Strukturbauteil nicht in Frage kommt. Bei Raumtemperatur und bei 300°C ist die Energieaufnahme 0 Joule, bei 700°C nur geringfügig höher als 1 Joule. Das Bruchbild zeigt Krümel.

Das Metallrohr aus Wolframfolie mit einer Walzrichtung WR' der Folie in Umfangsrichtung wurde bei 800°C mit einer Silberkupferfolie gelötet. Sowohl die Wolframfolie als auch die Lötfolie haben eine Dicke von 100 µm. Bei Raumtemperatur, 100°C, 200°C und 300°C konnte die Rohrprobe jeweils mindestens 20 Joule aufnehmen. Die verwendete Kerbschlagbiegeanlage ist auf 20 Joule limitiert. Das Rohr aus Wolframfolie zeigt eine gute Duktilität. Bereits bei einer relativ geringen Temperatur von 100°C ist die Rohrprobe vollständig duktil.

Mehrere Materialien versagen bei tiefen Temperaturen spröde und zeigen bei höheren Temperaturen einen Übergang hin zu einem duktilen Bruchverhalten. Dieser Spröd-duktil-Übergang (engl.: brittle-to-ductile transition oder BDT), bei dem die so genannte Übergangstemperatur T_{BDT} definiert wird, zeigt sich experimentell z.B. durch einen Anstieg der Kerbschlagarbeit beim Kerbschlagbiegeversuch. Wie hoch der Anstieg der Kerbschlagarbeit ausfällt ist abhängig vom Material.

Ob ein Material im Sinne dieser Erfindung als duktil zu bezeichnen ist oder nicht, kann beispielsweise durch folgenden Kerbschlagbiegeversuch bestimmt werden, der an der EU-Norm DIN EN ISO 148-1 und 14556:2006-10 orientiert ist: Diese Norm bestimmt eine Probengeometrie von 27 mm x 3 mm x 4 mm, ein Kerbtiefe von 1 mm, einen Kerbradius von 0,1 mm und einen Auflagerabstand von 22 mm. Der offizielle Name dieser Probenform ist KLST. Im Unterschied zur Norm wird der Versuch im Sinne der vorliegenden Anmeldung an einer Rohrprobe durchgeführt.

Verformt sich das Material in diesem KSBV nicht, so wird das Material bei der verwendeten Temperatur als spröde bezeichnet. Die Energiedissipation bzw. Energieabsorption der Materialprobe ist dabei ungefähr 0 J.

Verformt sich das Material in diesem KSBV, so wird das Material bei der verwendeten Temperatur als duktil bezeichnet. Die Energiedissipation bzw. Energieabsorption der Materialprobe ist dabei größer als 0 J, z.B. größer als 10 J.

Insbesondere wird das Material als vollständig duktil bezeichnet, wenn es im o.g. KSBV ohne Bruchstelle standhält. Die Energiedissipation bzw. Energieabsorption der Materialprobe ist dabei wesentlich größer als 0 J, z.B. größer als 20 J.

Das Ergebnis eines KSBV an einem massiven Wolframrohr ist in einer Fotografie in **Figur 25B** gezeigt. Ein massives Wolframrohr (schematisch gezeigt in **Figur 25A**) weist eine Energiedissipation bzw. Energieabsorption von 0 J auf, d.h. es ist spröde und bricht beim KBSV in mehrere Einzelteile.

Das Ergebnis eines KSBV an einem Metallrohr bestehend aus mehreren Lagen zumindest einer Folie aus Wolfram ist in einer Fotografie in **Figur 26B** gezeigt. Ein solches Wolframfolienrohr (schematisch gezeigt in **Figur 26A**) weist eine Energiedissipation bzw. Energieabsorption von zumindest 20.71 J auf, d.h. es ist vollständig duktil und verformt sich im KBSV ohne zu brechen.

Das Metallrohr gemäß der vorliegenden Erfindung ist somit zumindest duktil ausgebildet, insbesondere vollständig duktil.

Neben den Eigenschaften der Probe im Kerbschlagbiegeversuch sind ebenfalls die Eigenschaften des Metallrohrs aus Wolframfolie bei einer Druckprüfung interessant, welche durch einen Berstversuch untersucht werden können. Bei einem Helium gekühlten Divertor wird ein Innendruck von ca. 100 bar erwartet, während bei einem Divertor für ITER ein Innendruck von ca. 40 bar erwartet wird. Es wird untersucht, bei welchem Druck ein Metallrohr aus Wolframfolie platzt. Dazu wurde ein Wolframrohr mit 15 mm Durchmesser, 1 mm Wandstärke und 27 mm Länge aus Folie an seinen beiden Enden an zwei Stahlrohre gelötet. Das Metallrohr besteht abwechselnd aus Lagen von 100 µm dicker Wolframfolie und 100 µm dickem Lot aus Silber und Kupfer. Die Stahlrohre dienen zum Anschluss an eine 'Swagelock' Verschraubung. Bei Raumtemperatur wurde ein solches Metallrohr mit Wasser durchströmt, das mit einem Druck beaufschlagt wurde. Das Metallrohr aus Wolframfolie hielt selbst einem Innendruck von 1000 bar stand. Bei diesem Druck barsten die Stahlverschraubungen und das Stahlrohr, weswegen der Versuch bei 1000 bar erfolgreich beendet wurde. Das Metallrohr aus Wolframfolie blieb vollständig intakt.

Die Ergebnisse des Berstversuchs und des Kerbschlagbiegeversuches zeigen, dass ein erfindungsgemäßes Metallrohr als Strukturbauteil einsetzbar ist.

**Fig. 15** zeigt in einem Diagramm die Ergebnisse von Zugversuchen die an einer Wolframfolie der Stärke 100 µm bei Raumtemperatur durchgeführt wurde. Die Wolframfolie wurde in eine vorbestimmte Richtung gewalzt, der Walzrichtung. Es wurden Zugversuche durchgeführt in Walzrichtung (in der Fig. 15 als 0° gekennzeichnet), quer zur Walzrichtung (in Fig. 15 gekennzeichnet als 90°) und unter einem Winkel von 45° zur Walzrichtung (in Fig. 15 gekennzeichnet als 45°). Quer zur Walzrichtung zeigt die Wolframfolie kein duktiles Verhalten. Bislang war es dem Fachmann nicht bekannt, dass Wolframfolie im Zugversuch bei Raumtemperatur in Walzrichtung und unter 45° zur Walzrichtung duktil ausgebildet ist.

Daher ist es vorteilhaft, die Folie aus Refraktärmetall im Metallrohr so anzuordnen, dass die Walzrichtung WR' der Folie mit der Tangentialrichtung des Rohrmantel zusammenfällt bzw. zwischen 0° bis 45° von der Tangentialrichtung abweicht. Die Walzrichtung WR' der Folie weist somit einen Winkel zwischen 45° bis 90° zur Längsrichtung L auf.

Untersuchungen zeigen, das rekristallisierte Wolframfolien gutmütig ausgebildet sind. Eine Folie von 100 µm Dicke hat eine dbtt von unter 500°C gemessen im Kerbschlagbiegeversuch. Damit liegt die dbtt rekristallisierter Wolframfolie im gleichen Temperaturbereich wie die dbtt von Wolfram Vollmaterial im Lieferzustand.

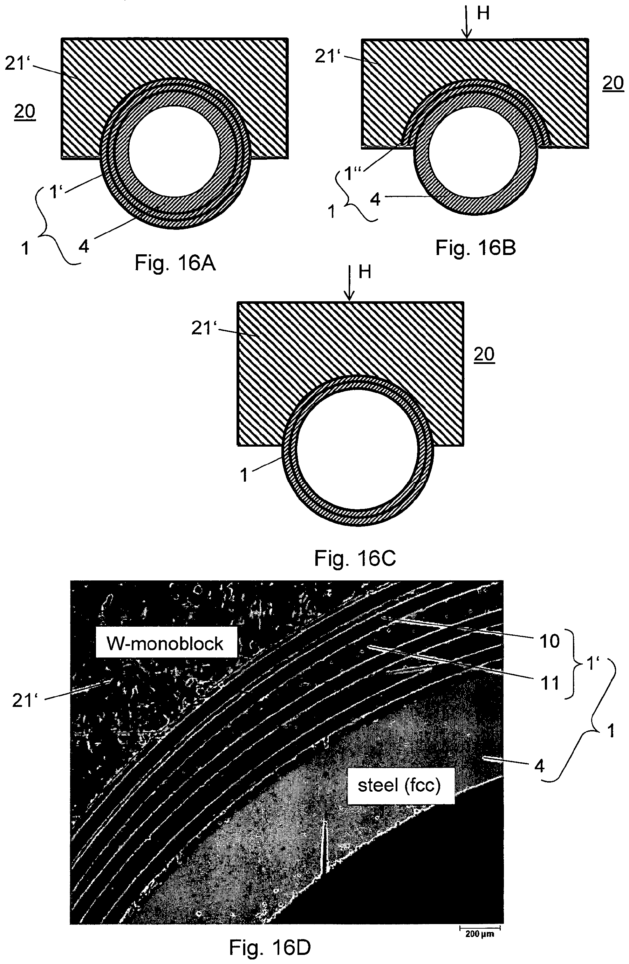

**Figuren 16A, 16B und 16C** zeigen in einer schematischen Darstellung einen Querschnitt durch einen Divertor 20 mit einem sattelförmigen Monoblock 21'. Der sattelförmige Monoblock 21' besteht z.B. aus Wolfram und weist eine Aussparung auf, die auf den Durchmesser eines Metallrohrs 1 abgestimmt ist. In dieser Aussparung ist das Metallrohr 1 so angeordnet, dass es den sattelförmigen Monoblock 21' kontaktiert. Diese Kontaktierung ist notwendig, um Wärmeenergie aus dem sattelförmigen Monoblock 21' abzuleiten.

Der sattelförmige Monoblock 21' ist dazu ausgebildet und vorgesehen, starker Hitze aus einer Hitzeeinstrahlrichtung H ausgesetzt zu werden. Die Aussparung für das Metallrohr 1 und das Metallrohr 1 selber sind auf der der Hitzeeinstrahlrichtung H gegenüberliegenden Seite des sattelförmigen Monoblock 21' ausgebildet.

Der in Figur 16A gezeigte Divertor 20 ist als mit Wasser gekühlter Divertor vorgesehen und ausgebildet. Das Metallrohr 1 kann dazu mit Wasser durchströmt werden, um den sattelförmigen Monoblock 21' im Betrieb zu kühlen.

Das Metallrohr 1 weist ein Innenrohr 4 aus Stahl auf, das von einem Folienrohr 1' umwickelt ist. Das Folienrohr 1' weist mehrere Lagen einer Folie aus Refraktärmetall und mehrere Lagen einer Folie eines Lotmaterials auf. Das Folienrohr 1' bildet zusammen mit dem Innenrohr 4 das Metallrohr 1. Im Betrieb ist das Folienrohr 1' als Bindeglied zwischen dem sattelförmigen Monoblock 21' und dem Innenrohr 4 angeordnet.

Fig. 16B zeigt einen Divertor 20, der dem in Figur 16A gezeigten Divertor ähnelt. Im Unterschied zu diesem ist der Teil des Metallrohrs 1, der die Folie aus Refraktärmetall aufweist, als Halbfolienrohr 1" ausgebildet. Die Lagen der Folie erstrecken sich nicht entlang des gesamten Mantelumfangs des Innenrohrs 4, sondern sind lediglich als Verbindungselement zwischen dem sattelförmigen Monoblock 21' und dem Innenrohr 4 ausgebildet. Die der Hitzeeinstrahlung abgewandte Seite des Innenrohrs 4 ist folienfrei ausgebildet. In einer Ausführungsform ist lediglich der halbe Mantelumfang des Innenrohrs 4 von Refraktärmetallfolie bedeckt.

Der in Figur 16B gezeigte Divertor 20 kann z.B. so hergestellt werden, dass zunächst mehrere Lagen Folie einseitig auf das Innenrohr 4 gelegt werden und das Innenohr 4 anschließend gegen den sattelförmigen Monoblock 21' gedrückt wird. Die stoffschlüssige Verbindung kann z.B. durch Löten realisiert werden.

Bei den in Figuren 16A und 16B gezeigten Ausführungsformen dient das Folienrohr 1' bzw. das Halbfolienrohr 1" als Funktionsbauteil. Es erfüllt die Funktion eines Verbindungsglieds zwischen dem sattelförmigen Monoblock 21' aus Wolfram und dem Innenrohr 4 aus Stahl, wobei es als duktiles Bauteil sowohl ein verformbares Zwischenstück bildet und damit die Problematik der unterschiedlichen thermischen Ausdehnungskoeffizienten von Wolfram und Stahl entschärft, als auch eine hohe Wärmeleitfähigkeit besitzt. Zusammen mit dem Innenrohr 4 bildet dieser Folienanteil ein Metallrohr 1 als Strukturbauteil.

Der in Fig.16C gezeigte Divertor 20 weist als Strukturbauteil das Metallrohr 1 auf, das ohne Innen- oder Außenrohr als Folienrohr ausgebildet ist. Dieser Divertor eignet sich z.B. als mit Helium gekühlter Divertor ähnlich dem in Fig. 5 gezeigtem Ausführungsbeispiel.

Die in den Figuren 16A bis 16C gezeigten Ausführungsformen können z.B. fünf Lagen aus Lot und vier Lagen Folie aus Wolfram aufweisen.

**Fig. 16D** zeigt eine Fotografie eines Ausschnitts eines Querschnitts durch den Divertor der Fig. 16A. Gezeigt sind der sattelförmige Monoblock 21', das Folienrohr 1' bestehend aus Lagen von Wolframfolie 10 und Lagen eines Lots 11 sowie das Innenrohr 4 aus Stahl.

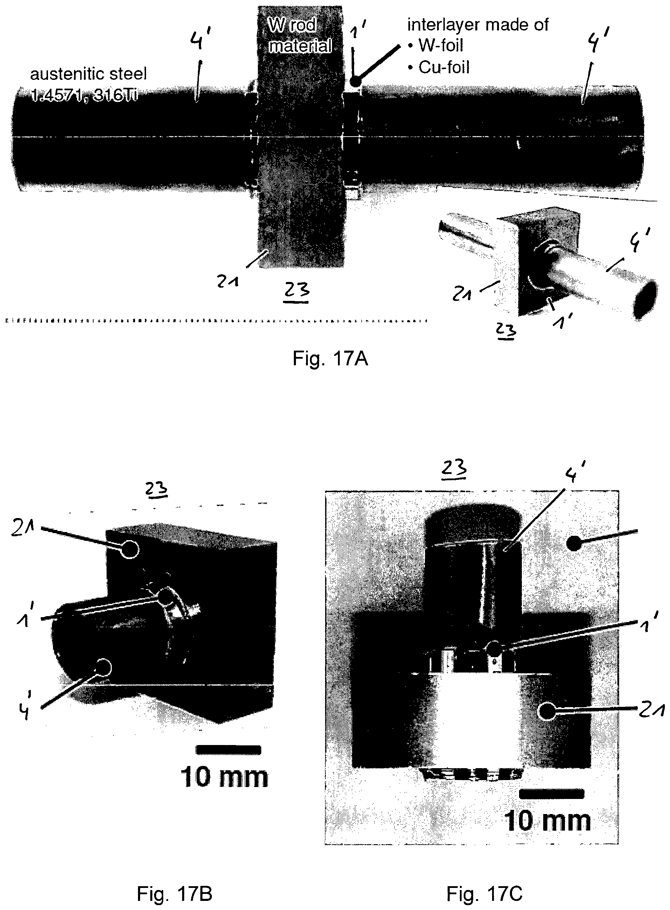

**Figuren 17A, 17B und 17C** zeigen Fotografien eines Verbindungsstücks 23 zwischen einem Stahlrohr 4' und einem Monoblock 21 aus Wolfram. Die Verbindung zwischen diesen beiden Bauteilen wird durch ein Folienrohr 1' bereitgestellt. Das Folierohr 1' umfasst bzw. besteht aus mehreren Lagen einer Folie aus Refraktärmetall wie z.B. Wolfram, die mittels einer Folie eines Lots wie z.B. Kupfer stoffschlüssig miteinander verbunden sind.

Das Stahlrohr 4' durchdringt dabei den Monoblock 21, um eine Kühlung bereitzustellen. Das Folienrohr 1' ist dabei sowohl mit dem Monoblock 21 als auch mit dem Stahlrohr 4' verbunden, so dass eine Wärmeleitung zwischen diesen beiden Bauteilen erfolgen kann. Das Folienrohr 1' ist dabei so verformbar, dass es Spannungen zwischen dem Monoblock 21 und dem Stahlrohr 4' ausgleicht, die aufgrund unterschiedlicher Wärmeausdehnungskoeffizienten auftreten.

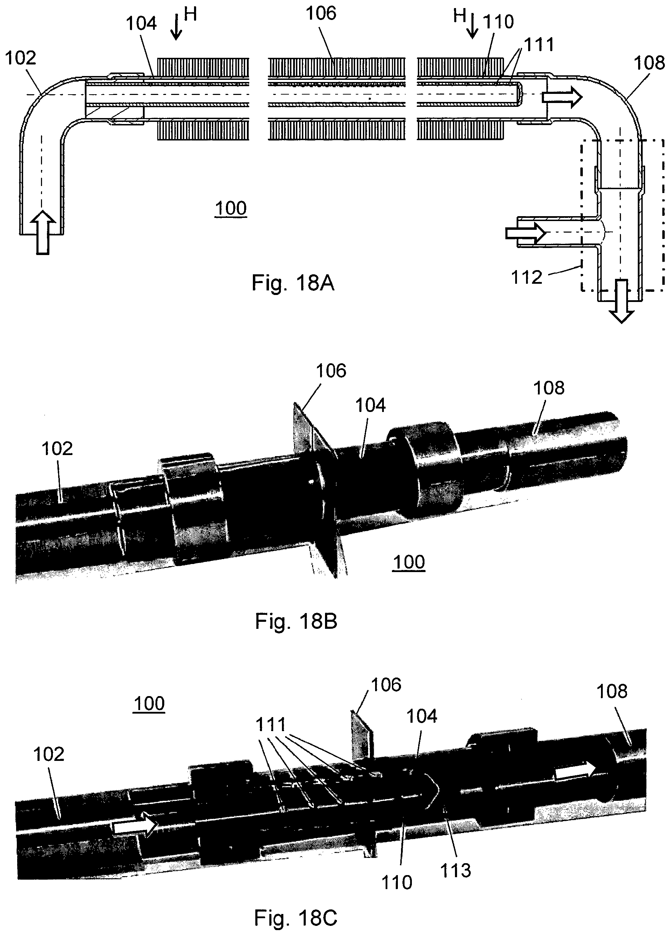

**Fig. 18A** zeigt in einer schematischen Darstellung einen Schnitt durch einen Divertor 100.

Der Divertor 100 ist dafür ausgebildet und vorgesehen, mit Helium gekühlt zu werden. Ein lamellenförmiger Monoblock 106 dient zur Aufnahme einer Hitzelast. Der lamellenförmige Monoblock 106 weist eine Mehrzahl ca. 0,3 mm dicker Wolframlamellen auf und weist in seiner Mitte einen Hohlraum auf, der zur Kühlung von einem Folienrohr 104 aus Wolframfolie (wie oben beschrieben) durchdrungen ist.

An einer Eingangsseite für Helium ist das Folienrohr 104 an ein gebogenes Eingangsstahlrohr 102 aus EUROFER Stahl angeschweißt. An einer Ausgangsseite für Helium ist das Folienrohr 104 an ein gebogenes Ausgangsstahlrohr 108 aus EUROFER ODS Stahl angeschweißt.

Im Rohrinneren des Folienrohrs 104 ist eine im Wesentlichen rohrförmige Kartusche 110 aus Stahl parallel zur Längsrichtung des Folienrohrs 104 so angeordnet, dass die Kartusche 110 und das Folienrohr 104 radial voneinander beabstandet ausgebildet sind. Die Kartusche 110 ist an das Eingangsstahlrohr 102 gelötet und weist im Inneren des Folienrohrs 104 auf der einer Hitzeeinstrahlung H zugewandten Seite des lamellenförmigen Monoblock 106 mehrere Löcher 111 auf.

In Betrieb des Divertors 100 wird Helium bei einer Temperatur von ca. 400°C in das Eingangsstahlrohr 102 eingeleitet. Das Helium durchfließt das Eingangsstrahlrohr 102 und wird in die Kartusche 110 geleitet, aus der es durch die Löcher 111 austritt und dabei in das Folienrohr 104 eintritt. Hier nimmt das Helium eine auf den lamellenförmigen Monoblock 106 wirkende Hitzelast auf und stellt dadurch eine Kühlfunktion bereit. Dabei kann sich das Helium auf bis zu 650°C erhitzen. Das Helium strömt weiter aus dem Folienrohr 104 heraus und in das Ausgangsstahlrohr 108 hinein, innerhalb dessen es in einen Kühlbereich 112 weitergeleitet wird. Im Kühlbereich 112 wird das erhitzte Helium mit 400°C 'kaltem' Helium vermischt und bei einer sich ergebenden Mischtemperatur von ca. 500°C abgeführt.

**Figuren 18B und 18C** zeigen eine Fotografie eines Divertors 100, der nach dem in Figur 18A gezeigten Planungsschema gebaut wurde. Der lamellenförmige Monoblock 106 ist in den Figuren 18B und 18C lediglich symbolisch durch zwei Lamellen ausgeführt. Für einen tatsächlichen Divertor können z.B. ca. 3000 Lamellen der Dicke 0,3 mm vorgesehen sein, wodurch sich ein lamellenförmiger Monoblock einer Dicke von zumindest 900 mm ergibt.

Die Kartusche 104 ist an der dem Ausgangsstahlrohr 108 zugewandten Seite durch eine Kartuschenkappe 113 dichtend abgeschlossen. Das in die Kartusche 110 eingeführte Helium kann der Kartusche 110 deswegen nur durch die Löcher 111 entströmen.

Figur 18B zeigt eine Fotografie des Divertors 100 von außen. Figur 18C zeigt eine Fotografie des Divertors 100, der in Längsrichtung aufgeschnitten wurde. Die Löcher 111 in der Kartusche 110 bilden eine Art Brausekopf für das Helium zur Kühlung des lamellenförmigen Monoblocks 106 aus. Dadurch wird das Helium beim Kühlvorgang im Inneren des Folienrohrs 104 beschleunigt und die Kühlwirkung erhöht.

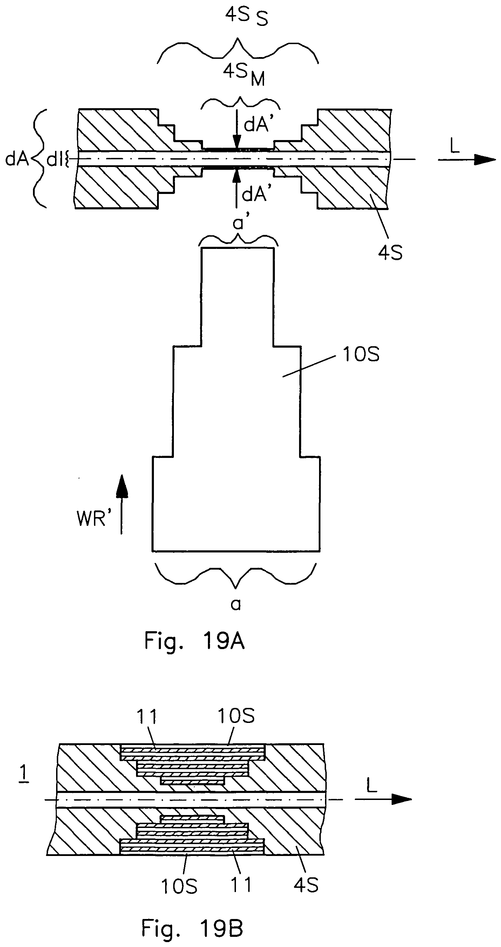

**Fig. 19A** zeigt in einer schematische Darstellung einen Längsschnitt durch ein gestuftes Stahlrohr 4S mit einer gestuften Folie 10S aus Refraktämetall im unaufgewickelten Zustand. Das gestufte Stahlrohr 4S ist aus massivem Stahl ausgebildet. Das gestufte Stahlrohr 4S weist einen Außendurchmesser dA auf, der größer als sein Innendurchmesser dl ausgebildet ist. In Längsrichtung L sind in dem gestuften Stahlrohr 4S Aussparungen ausgebildet, an denen sich der Außendurchmesser dA gestuft verringert, während der Innendurchmesser dI konstant bleibt. Die Rohrmanteldicke verringert sich dadurch in Längsrichtung L in Stufen.

Entlang eines Stufenabschnitts 4S_{S} verringert sich der Außendurchmesser dA des gestuften Stahlrohrs 4S bis zu seinem minimalen Außendurchmesser dA', und wächst danach in Längsrichtung L wieder in Stufen an, bis zum maximalen Außendurchmesser dA. Der Abschnitt des gestuften Stahlrohrs 4S mit minimalem Außendurchmesser dA' ist der Mittel- oder Schmalabschnitt 4S_{M}, der in der Mitte des gestuften Bereichs 4S_{S} ausgebildet ist.

Die gestufte Folie 10S ist aus einem Refraktärmetall wie z.B. Wolfram ausgebildet und weist ebenfalls Stufen auf, deren Größe auf die Größe der Stufen im Stufenabschnitt 4S_{S} des gestuften Stahlrohrs abgestimmt ist. In der gestuften Folie 10S sind die Stufen in Wickelrichtung WR' ausgebildet. Die maximale Länge a der gestuften Folie 10S entspricht der Länge des Stufenabschnitts 4S_{S} des gestuften Stahlrohrs 4S in Längsrichtung. In Walzrichtung WR' ist die gestufte Folie 10S so ausgebildet, dass sich deren Länge a in Stufen bis auf eine Minimallänge a' verringert. Die Minimallänge a' der gestuften Folie 10S ist genauso lang wie die Länge des Mittelabschnitts 4S_{M} des gestuften Stahlrohrs 4S in Längsrichtung L ausgebildet.

Die Folie 10S ist dafür ausgebildet und vorgesehen, auf das gestufte Stahlrohr 4S so aufgewickelt zu werden, dass ein Metallrohr 1 hergestellt wird, das in einer schematischen Schnittdarstellung in **Figur 19B** gezeigt ist.

Die Breite der einzelnen Stufen der gestuften Folie 10S ist so gewählt, dass der jeweilige Folienabschnitt beim Aufwickeln der gestufte Folien 10S auf das gestufte Stahlrohr 4S die entsprechende Stufe genau durch so viele Folienlagen auffüllt, dass die Manteldicke des so gebildeten Folienrohrs der Stufenhöhe des gestuften Stahlrohrs 4S entspricht.

Die gestufte Folie 10S wird auf eine gleichdimensionierte gestufte Folie aus einem Lot wie z.B. Kupfer gelegt, so dass ein Folienstapel entsteht. Dieser Folienstapel wird auf den Stufenabschnitt 4S_{S} des gestuften Stahlrohrs 4S gewickelt, so dass das Metallrohr 1 hergestellt wird. Das Metallrohr 1 weist entlang seiner Längsrichtung einen gradierten Übergang vom Material Stahl zu Wolframfolie und zurück zu Stahl auf und stellt ein Strukturbauteil dar.

Bevorzugt sind dabei mindestens drei Stufen sowohl im gestuften Stahlrohr 4S als auch in der gestuften Folie 10S ausgebildet.

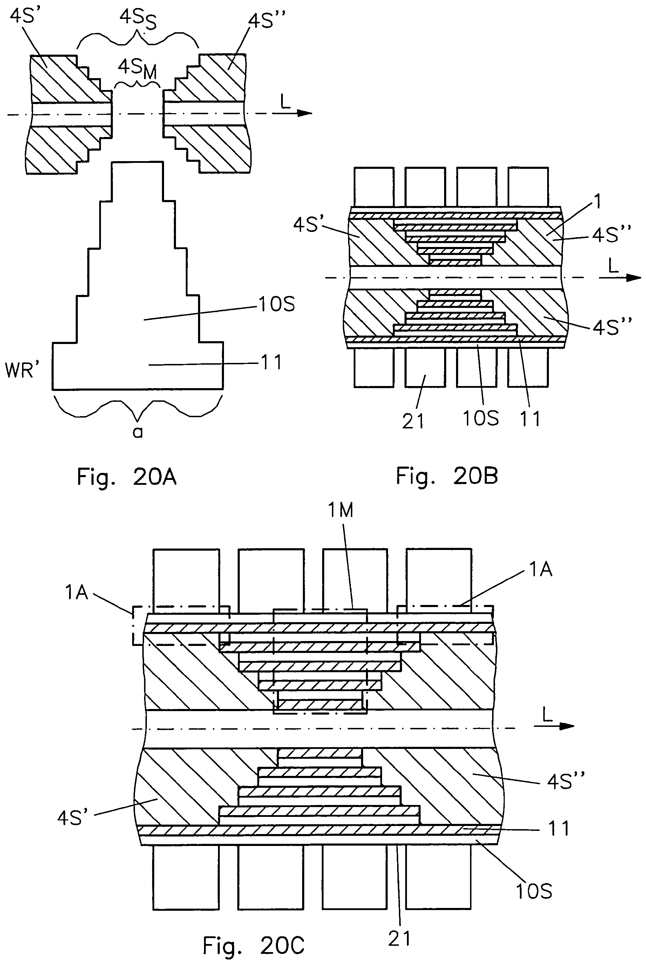

**Figur 20A** zeigt in einer schematischen Darstellung einen Schnitt durch ein erstes gestuftes Stahlrohrstück 4S' und ein zweites gestuftes Stahlrohrstück 4S". Zusammen ähneln die beiden gestuften Stahlrohrstücke 10S' und 10S" dem gestuften Stahlrohr 10S, das in Figur 19A gezeigt ist. Im Unterschied zu der in Figur 19A gezeigten Ausführungsform ist der Außendurchmesser im Mittelabschnitt 4S_{M} des gestuften Stahlrohrs so weit eingestuft, dass es an diesem Mittelabschnitt 4S_{M} keinen Stahl mehr aufweist, sondern an diesem Mittelabschnitt 4S_{M} unterbrochen ausgebildet ist.

Eine gestufte Folie 10S ist dazu ausgebildet und vorgesehen, analog zu der in Figur 19A gezeigten Ausführungsform auf die beiden gestuften Stahlrohrstücke 4S', 4S" gewickelt zu werden.

**Figur 20B** zeigt die drei in Figur 20A gezeigten Bauteile im zusammengesetzten Zustand und in einem aus mehreren Wolframlamellen bestehenden Monoblock 21 angeordnet. Das durch die beiden gestuften Stahlrohrstücke 4S', 4S", der gestuften Folie 10S und dem Lot 11 geformte Metallrohr 1 ist an seinem Mittelabschnitt 4S_{M} vollständig aus Folie aus Refraktärmetall 10S und Lot 11 aufgebaut.

Die gestufte Folie 10S ist in Wickelrichtung WR' so breit ausgebildet, dass es die gestuften Stahlrohrstücke 4S', 4S" in Längsrichtung auch über den Stufenabschnitt 4S_{S} hinaus umfasst. Deswegen weist das Metallrohr 1 an seinen Außenrohrabschnitten in Längsrichtung ein Innenrohr aus Stahl auf, das von mehreren Lagen Folie aus Refraktärmetall umwickelt ist.

Bei dieser Ausführungsform weist das Metallrohr 1 Rohrabschnitte mit unterschiedlichen Funktionen bzw. Eigenschaften auf, die in **Figur 20C** genauer gezeigt sind:
Zwei Außenrohrabschnitte 1A des Metallrohrs 1 gehen in Längsrichtung gradiert in einen Mittelrohrabschnitt 1 M des Metallrohrs 1 über.

An seinen beiden Außenrohrabschnitten 1A besteht das Metallrohr 1 aus einem Innenrohr aus Stahl, das durch das gestufte Stahlrorstück 4S' bzw. 4S" gebildet ist. Das Innenrohr aus Stahl ist von mehreren Lagen Folie aus Refraktärmetall umwickelt, die mittels eines Lots 11 stoffschlüssig miteinander sowie an dem Innenrohr verbunden sind. Die Lagen der Folie sind durch die gestufte Folie 10S gebildet. An den Außenrohrabschnitten 1A bildet das Folienrohr aus Refraktärmetall ein Verbindungsstück zwischen dem Monoblock 21 und dem gestuften Stahlrohrstück 4S', 4S" und somit ein Funktionsbauteil.

Im Mittelrohrabschnitt 1 M besteht das Metallrohr 1 aus mehreren Lagen Folie aus Refraktärmetall, die durch die gestufte Folie 10S bereitgestellt wird, sowie einem diese Lagen verbindendem Lot 11. Im Mittelrohrabschnitt 1M bildet das Folienrohr ein Strukturbauteil, da es in diesem Bereich nicht durch ein Stahlrohr verstärkt ist.

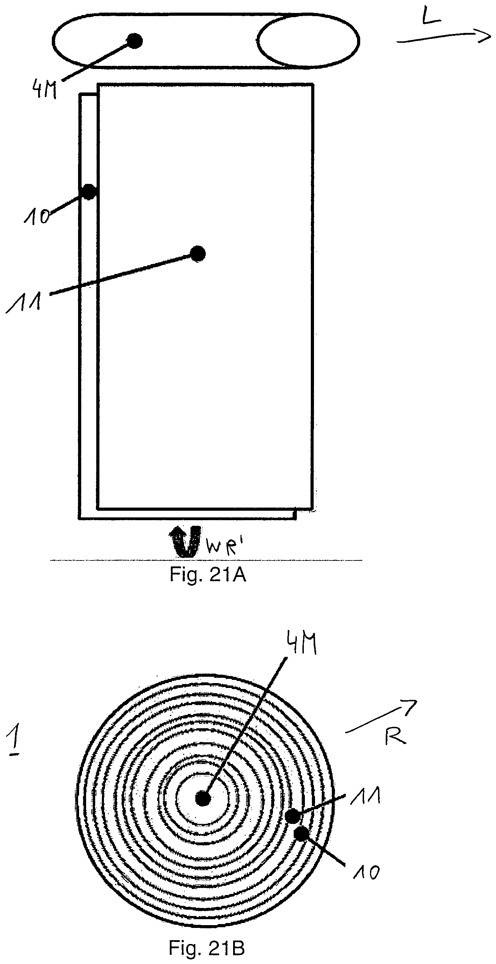

**Fig. 21A** zeigt in einer schematischen Darstellung einen massiven Stab 4M aus einem Metall wie z.B. Stahl oder Wolfram, eine Folie 10 aus einem Refraktärmetall wie z.B. Wolfram und eine Folie aus einem Verbindungsmaterial 11 wie z.B. Kupfer als Lot. Die Folie 10 und die Folie aus dem Verbindungsmaterial 11 sind übereinandergelegt und bilden einen Folienstapel.

**Fig. 21B** zeigt in einer schematischen Darstellung, wie die drei in Figur 21A gezeigten Bauteile in einem miteinander verbundenen Zustand ein Metallrohr 1 ausbilden. Das Metallrohr 1 weist in seinem Inneren als massiven Kern den Stab 4M auf, der von mehreren Lagen der Folie 10 umwickelt ist. Die einzelnen Lagen der Folie 10 sind über das Lot 11 miteinander und mit dem Stab 4M stoffschlüssig so verbunden, dass sie ein massives Metallrohr 1 ausbilden.

Im Rahmen der Erfindung kann das Metallrohr somit insbesondere auch massiv ausgebildet sein. Somit kann im Sinne der vorliegenden Anmeldung ein Metallrohr ein Hohlkörper, mit innenliegendem, insbesondere um eine Längsachse zentriertem Hohlraum sein oder ein massiver Körper, d.h. ein Körper ohne Hohlraum, insbesondere ohne einen um eine Längsachse zentriertem Hohlraum sein. Es ist auch möglich, dass das Metallrohr teilweise hohl und teilweise massiv ausgebildet, insbesondere ein Teilabschnitt des Metallrohres mit Hohlraum in einen massiven Teilabschnitt des Metallrohres übergeht. Hinsichtlich solcher Ausführungsformen weicht der Begriff Rohr von seiner herkömmlichen Verwendung zur Beschreibung eines Hohlkörpers ab.

Das in Figur 21B gezeigte massive Metallrohr 1 kann z.B. in der Hochspannungsenergietechnik verwendet werden.

In der Hochspannungsenergietechnik wird ein Zweikomponentenwerkstoff aus z.B. Kupfer und Wolfram verwendet. Dieser Zweikomponentenwerkstoff ist isotrop und weist eine geringe Festigkeit auf.

Durch das in Figur 21B gezeigte massive Metallrohr 1 wird dieser Zweikomponentenwerkstoff verbessert, da der Stabanteil aus Wolfram und Kupferfolie eine höhere Festigkeit aufweist und anisotrop ausgebildet ist. Die elektrische Leitfähigkeit in Längsrichtung L, also entlang der Stabachse, ist sehr gut und größer als die elektrische Leitfähigkeit in Radialrichtung R.

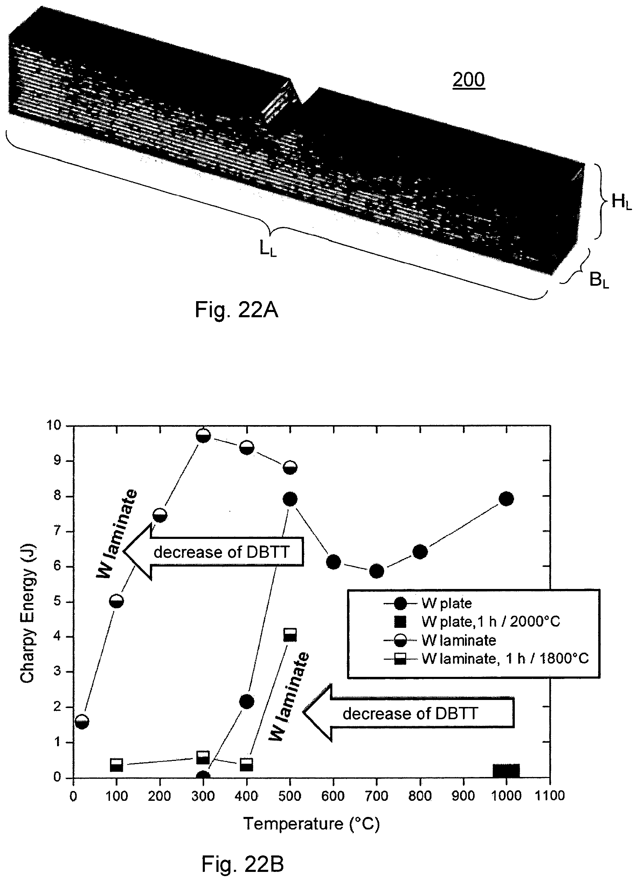

**Fig. 22A** zeigt eine Fotografie eines Laminats 200 aus Folienlagen. Das Laminat 200 ist als massives Strukturbauteil ausgebildet und besteht abwechselnd aus parallel zu seiner Breite angeordneten Lagen aus Folie aus Refraktärmetall wie z.B. Wolfram und Folie aus einem Lot wie z.B. Kupfer. Die Lagen die Folien sind wie oben beschrieben miteinander stoffschlüssig verbunden.

Das gezeigte Laminat ist als Ausführungsform so ausgebildet, dass es eine Laminathöhe H_{L} von 4 cm, eine Laminatbreite B_{L} von 3 cm und eine Laminatlänge L_{L} von 27 cm aufweist.

Mit Laminat 200 wurde ein Kerbschlagbiegeversuch durchgeführt, um seine physikalischen Eigenschaften zu untersuchen.

**Fig. 22B** zeigt in einem Diagramm die Versuchsergebnisee des Kerbschlagbiegeversuchs an dem Laminat 200 verglichen mit einem gleichdimensionierten massiven Stück Wolfram.

Die Versuchsergebnisse zeigen für das Laminat 200 aus Wolframfolie bereits bei niedrigen Temperaturen kleiner als 100°C einen Übergang zu duktilem Verhalten, da bereits bei niedrigen Temperaturen die Kerbschlagarbeit des Laminats 200 ansteigt (vgl. Fig. 22B, 'W laminate'). Verglichen damit steigt die Kerbschlagarbeit von massivem Wolfram erst im Bereich von 300°C bis 400°C (vgl. Fig. 22B, 'W plate').

Für die Verwendung des Materials unter extremen Temperaturen sind allerdings auch die weiteren im Diagramm der Figur 22B gezeigten Versuchergebniss relevant:
Das Laminat 200 wurde eine Stunde lang bei ca. 1800°C temperiert. Das massive Wolfram wurde eine Stunde lang bei ca. 2000°C temperiert. Danach wurde der Kerbschlagbiegeversuch für beide Materialien erneut durchgeführt. Durch die Temperierung wurde ein Einsatz des Materials unter starker Hitzelast simuliert, um die Materialbeständigkeit unter Hitzlast zu untersuchen.

Die Ergebnisse zeigen, dass auch ein solch 'vorbelastetes' Laminat bei ca. 400°C bis 500°C duktil ist bzw. wird (vgl. Fig. 22B, 'W laminate', 1h/1800°C). Das massive Wolframstück hingegen zeigt selbst bei 1000°C noch immer sprödes Verhalten, nachdem es einmal extremer Hitze ausgesetzt war (vgl. Fig. 22B, 'W plate, 1h/2000°C'). Dies ermöglicht die Verwendung des Laminats 200 aus Wolframfolie auch unter extremen Hitzebedingungen. Insbesondere ist das Laminat dafür ausgebildet und geeignet, mit Hiltzebelastungen von über 1500°C beaufschlagt zu werden, wobei es ein duktiles Verhalten für niedrigere Temperaturen beibehält.

Bei der Herstellung eines Metallrohrs mit einer Folie aus Refraktärmetall kann das Metallrohr durch Aufwickeln der Folie und anschließendem Verbindungsprozess hergestellt werden. Ein Bohren eines Loches in einen Stab aus einem Refkraktärmetall wird dabei überflüssig.

Durch ein solches Metallrohr ist das Problem der schwachen Korngrenzen entschärft. Eine Folie aus einem Refraktärmetall weist Körner auf, die ähnlich wie Pfannkuchen ausgebildet sind. Damit ist die Mikrostruktur einer Folie aus Refraktärmetall vergleichbar mit einem Stapel von Pfannkuchen. Durch das Wickeln der Folie zu einem Rohr gelingt es, dass sich die Körner der Kontur des Rohres anpassen, sogenanntes 'grain boundary alignment'. Eine von außen, in oder gegen Radialrichtung angreifende Last trifft damit immer senkrecht auf die Körner und belastet die Struktur damit in 'best case' Orientierung.

Eine Wolframfolie der Dicke 100 µm ist im Zugversuch bei Raumtemperatur in Walzrichtung WR' duktil. Bei unter Innendruck stehenden Metallrohren ist die Umfangsrichtung höher beansprucht als die Längsrichtung. Deswegen wird beim Wickeln des Metallrohres die Walzrichtung der Folien in Umfangsrichtung angeordnet. Damit erhält das Metallrohr in Umfangsrichtung duktile Materialeigenschaften.

Ein Lötvorgang zum Verbinden der einzelnen Lagen des Metallrohrs kann folgendermaßen erfolgen:
Es wird sowohl eine Folie aus Refraktärmetall der Stärke 100 µm verwendet, als auch eine Lötfolie der Stärke 100 µm. Die Folie aus Refraktärmetall und die Lötfolie werden mit einer Schlagschere zurechtgeschnitten. Beispielsweise können beide Folien rechteckig auf die Maße 27 x 200 mm zurechtgeschnitten werden. Für industrielle Anwendungen können die Folien auch andere Maße aufweisen.

Die Folie aus Refraktärmetall und die Lötfolie werden für den anschließenden Verbindungsprozess gereinigt und entfettet, zum Beispiel mit Isopropanol in einem Ultraschallbad.

Die Folie aus Refraktärmetall und die Lötfolie werden bündig übereinandergelegt. Die Lötfolie wird in einen Halter geklemmt, die Folie aus Refraktärmetall nicht. Die fixierten Folien werden gerollt und in ein zweischaliges Keramikrohr geschoben, z.B. mit einem Innendurchmesser von 15 mm. Anschließend wird der Halter entfernt. Das Keramikrohr kann weggedrückt werden und durch Drähte ersetzt werden.

Das noch nicht verbundene Metallrohr wird in einem Ofen, zum Beispiel einem Ofen mit Quarzrohr, im Wesentlichen im Vakuum auf eine Temperatur bzw. Löttemperatur erwärmt. Z.B. kann ein Vakuum verwendet werden, das auf zumindest 1x10⁻⁴ mbar evakuiert wurde, insbesondere auf 5x10⁻⁵ mbar. Die Löttemperatur kann 800°C betragen. Die Temperatur des Ofens wird überwacht. Bei Erreichen der Löttemperatur wird das Metallrohr aus dem Ofen genommen bzw. der Ofen weggeschoben, um den Abkühlvorgang einzuleiten.

Das Metallrohr kann industriell gefertigt werden, z.B. mit Hilfe eines geeigneten Roboters.

Bei dem obengenannten Ausführungsbeispiel hat das auf diese Weise synthetisierte Metallrohr einen Außendurchmesser von 15 mm, der dem Innendurchmesser des Keramikrohrs entspricht. Bei einer Folienlänge der Refraktärmetallfolie von 100 mm stellt sich eine Wandstärke von ca. 0,3 bis 0,5 mm ein. Bei einer Folienlänge der Refraktärmetallfolie von 200 mm weist das hergestellte Metallrohr eine Wandstärke von ca. 0,6 bis 0,9 mm auf. Die gewählte Verbindungstechnik der einzelnen Lagen des herzustellenden Metallrohres und die Wahl der Zwischenschichten können die physikalischen Eigenschaften des herzustellenden Metallrohres beeinflussen. Bevorzugt weist das Endprodukt keine Mischkristalle des Refraktärmetalls auf und keine intermetallischen Phasen. Daher empfiehlt sich die Verwendung eines Lotes sowohl zur Verbindung der einzelnen Lagen der Folie aus Refraktärmetall, als auch zur räumlichen Trennung zweier benachbarter Lagen aus Refraktärmetall. Insbesondere Löten mit Kupfer und/oder Silber verhindert die Bildung von Mischkristallen und intermetallischen Phasen.

Aufgrund der hohen Duktilität der Folie aus einem Refraktärmetall wie zum Beispiel Wolfram kann ein Laminat mit mehreren Lagen der Refraktärmetallfolie als Rohmaterial bereitgestellt werden. Aus dem Laminat können unterschiedliche Produkte hergestellt werden: U-Profile, Tiegel und Winkel mit einer Winkelbiegung in Walzrichtung WR', d.h. unter einem Winkel von 0° zur Walzrichtung WR', quer zur Walzrichtung, d.h. unter einem Winkel von 90° zur Walzrichtung WR', oder unter einem Winkel von ca. 45° zur Walzrichtung WR'. Tiegel sind bevorzugt aus einer Folie der Dicke 0,3 mm zusammengesetzt. Untersuchungen haben ergeben, dass Wolframfolie in alle Richtungen biegbar und somit plastisch verformbar ausgebildet ist. Somit ist für die Winkel und Profile auch eine Biegekante senkrecht zur Querrichtung zur Walkzrichtung WR' ausführbar.

In einem Zugversuch wurde herausgestellt, dass ein Wolframfolie der Dicke 0,3 mm isotrop ausgebildet ist.

Ein Zugversuch wurde für eine reine Wolframfolie durchgeführt, die gewalzt, unlegiert und mit einer Dicke von 0,1 mm ausgebildet ist. Nach dem Sintern wurde die Folie warm und kalt gewalzt wodurch sich eine Mikrostruktur ergibt, die flachgedrückte Körner aufweist.

Die Versuchsergebnisse zeigen, dass die Folie hochgradig anisotrop ausgebildet ist und bei Zug- und Biegeversuche bei Raumtemperatur Duktilität aufweist.

Zugversuche wurden durchgeführt in Walzrichtung, d.h. unter 0°, quer zur Walzrichtung, d.h. unter 90°, und unter einem Winkel von 45° zur Walzrichtung . Alle Versuche wurden bei Raumtemperatur in einer Zwick030 Universalprüfmaschine durchgeführt.

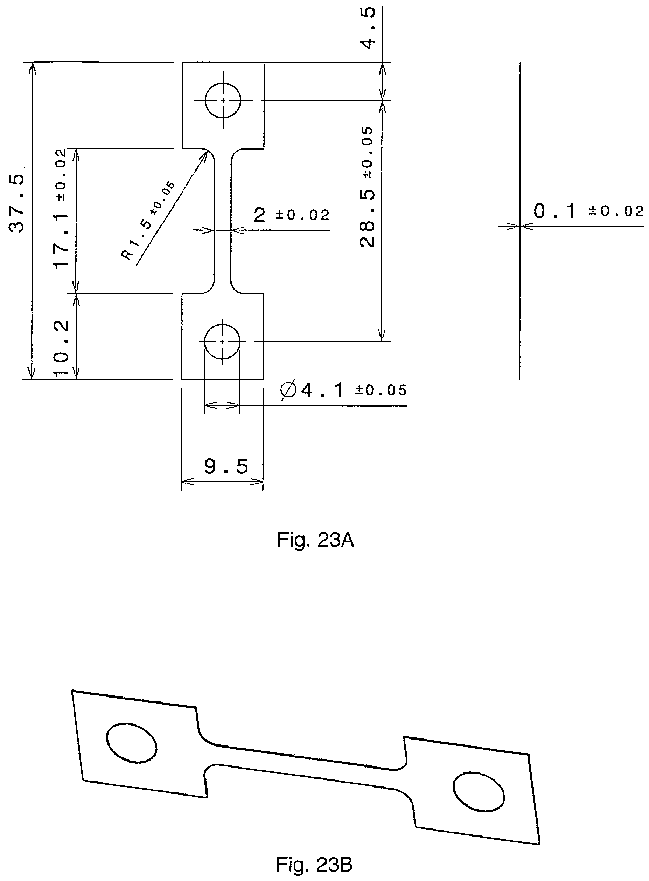

Die Geometrie der Folienproben der Wolframfolie ist zusammen mit den verwendeten Ausmaßen in **Figuren 23A und 23B** gezeigt.

Folienproben wurden durch Drahterosion aus der Wolframfolie geschnitten. Die Versuche wurden weggesteuert mit einer Dehnrate von 0,1 mm/min durchgeführt. Biegeversuche wurden durchgeführt in Walzrichtung (0°) und quer zur Walzrichtung (90°). Alle Versuche wurden bei Raumtemperatur in einer Zwick030 Universalprüfmaschine durchgeführt. Geometrie der Folienproben war 10 x 20 mm². Auflagerabstand der 3-Punktbiegeanlage war 10 mm. Durchmesser der Finne (striker) war 4 mm. Die Folienproben wurden mit der Schlagschere geschnitten. Der Versuche wurden weggesteuert mit einer Dehnrate von 5 mm/min durchgeführt.

Als Ergebnisse wurde festgestellt, dass Wolframfolie bei einem Zugversuch bei Raumtemperatur in Walzrichtung (0°) duktil ausgebildet ist. Ebenso konnte in einem Zugversuch bei Raumtemperatur für eine Folienprobe unter 45° zur Walzrichtung Duktilität nachgewiesen werden. Diese Folienprobe zeigt die größte plastische Verformung (4%). Quer zur Walzrichtung (90°) ist Wolframfolie bei einem Zugversuch spröde und zeigt kein duktiles Verhalten.

Im Biegeversuch lassen sich alle Folienproben, also alle Orientierungen bei Biegeversuchen bei Raumtemperatur plastisch verformen. Dies beinhaltet auch, dass eine Biegekante senkrecht zur 90° Richtung eingebracht werden kann.

Daher kann in einer Wolframfolie eine Biegekante senkrecht zur 90° Richtung ausgebildet werden, owbohl die 90° Richtung zur Walzrichtung im Zugversuch spröde ist.

Geglühte, das heißt eine Stunde lang bei 2000°C temperierte Wolframfolie ist bei Raumtemperatur in allen Orientierungsrichtungen (0°, 45°, 90°) im Zugversuch vollkommen spröde. Bei einem Zugversuch bei 600°C zeigt Wolframfolie in allen Orientierungsrichtung (0°, 45°, 90°) im Lieferzustand ca. 4 % plastische Dehnung. Geglühte Wolframfolie zeigt in allen Orientierungsrichtungen (0°, 45°, 90°) bei einem Zugversuche bei 600°C allerdings ca. 25 % plastische Dehnung.

Für Wolframfolie im Lieferzustand gibt es Mechanismen, die die Duktilität beeinflussen. Geglühte Wolframfolie hat eine andere Mikrostruktur und damit andere Mechanismen, die die Duktilität kontrollieren.

Bei der Herstellung von Profilen oder Winkeln ist es vorteilhaft, zunächst ein Laminat aus einer Folie aus Refraktärmetall herzustellen. Aufgrund der duktilen Eigenschaften des Laminats kann die Umformung bei niedrigen Temperaturen und unter Atmosphärendruck erfolgen. Ein Vakuum ist nicht erforderlich. Die niedrigen Temperaturen verhindern eine Oxidation.

Aufgrund ihrer Duktilität läßt sich zum Beispiel Wolframlaminat bei niedrigen Temperaturen bis ca. 300°C biegen, tiefziehen, abkanten, prägen und an der Oberfläche profilieren. Damit können diese Umformungen unter Atmosphärendruck erfolgen. Ein Vakuum ist unnötig. Aufgrund der guten Wärmeleitfähigkeit, der guten elektrischen Leitfähigkeit und der Hochtemperaturbeständigkeit ist ein Laminat aus abwechselnden Lagen von Wolfram und Kupfer für die Kontaktindustrie vorteilhaft.

In einer anderen Ausführungsform werden einzelne Folien übereinander geschichtet, anschließend in die erwünschte Form geformt und danach verbunden. Da die Folie aus Refraktärmetall eine hohe Duktilität aufweist, kann es vorteilhaft sein, die Folie erst zu biegen/umzuformen und anschließend zu verbinden. Dieses Verfahren ermöglicht die Realisierung von komplexen Geometrien.

Der Begriff 'Abschnitt' des Metallrohrs bezieht sich auf in Längsrichtung hintereinander angeordneter Rohrabschnitte.

Der Begriff 'Bereich' des Metallrohrs bezieht sich auf einen Sektor des Rohrmantels.

Der Begriff 'Lage/Lagen' des Metallrohrs bezieht sich auf Schichten des Rohrmantels in Radialrichtung.

### Bezugszeichenliste

- 1: Metallrohr
- 1': Folienrohr
- 1": Folienhalbrohr
- 1A: Außenrohrabschnitt
- 1M: Mittelrohrabschnitt
- 2: Rohrmantel
- 2H: erster Mantelbereich (der Hitzeeinstrahlung zugewandt)
- 2A: zweiter Mantelbereich (der Hitzeeinstrahlung abgewandt)
- 3: Hohlraum
- 3': Verengung
- 4: Innenrohr
- 4': Stahlrohr
- 4M: Stab
- 4S: gestuftes Stahlrohr
- 4S_{S}: Stufenabschnitt
- 4S_{M}: Mittelabschnitt
- 4S': erstes gestuftes Stahlrohrstück
- 4S": zweites gestuftes Stahlrohrstück
- 5: Außenrohr
- 6: Ausbuchtung
- 7: Trennwand
- 8: erster Rohrabschnitt
- 9: zweiter Rohrabschnitt
- 10: Folie
- 10': Folie
- 10": Folie
- 10"': Folie
- 10"": Folie
- 10S: gestufte Folie
- 11: Lot
- 12: Metallfolie
- 13: Refraktärmetallfolie
- 14: Übergangslinie
- 14': Übergangsbereich
- 16: Überhang
- 20: Divertor
- 21: Block
- 21': sattelförmiger Monoblock
- 22: Monoblock
- 23: Verbindungsstück
- 100: Divertor
- 102: Eingangsstahlrohr
- 104: Wolframrohr
- 106: lamellenförmiger Monoblock
- 108: Ausgangsstahlrohr
- 110: Kartusche
- 111: Loch
- 112: Kühlbereich
- 113: Kartuschenkappe
- 200: Laminat
- α: Folienübergangswinkel
- a: Länge
- b: Breite
- b': erweiterte Breite
- B_{L}: Laminatbreite
- d: Durchmesser
- dl: Innendurchmesser
- dA: Außendurchmesser
- H: Hitzeeinstrahlrichtung
- H_{L}: Laminathöhe
- H_{Cu}: Heilbereich
- K1: erste Kammer
- K2: zweite Kammer
- KL: längliches Korn
- KF: flaches Korn
- K: Korn
- L: Längsrichtung
- L_{L}: Laminatlänge
- Mo: Molybdänfolie
- O: Oxid
- Q_{D}: dreieckiger Querschnitt
- Q_{K}: kreisförmiger Querschnitt
- Q_{O}: ovaler Querschnitt
- Q_{R}: rechteckiger Querschnitt
- R: Radialrichtung
- S_{Cu}: Schmelzbereich
- St: Stahlfolie
- Sw_{Cu}: Schwellbereich
- V: Verunreinigung
- W: Wolframfolie
- WR: Wickelrichtung
- WR': Walzrichtung
- Z: Zwischengitteratom

## Patentansprüche

1. Metallrohr mit zumindest einer Folie (10; 10'; 10"; 10"'; 10""; 10S) aus einem Refraktärmetall, wobei
- ein Rohrmantel (2) des Metallrohrs (1) eine Mehrzahl von Lagen der zumindest einen Folie (10; 10'; 10"; 10"'; 10""; 10S) aus Refraktärmetall aufweist,
- zumindest zwei Lagen dieser Mehrzahl von Lagen der zumindest einen Folie (10; 10'; 10"; 10"'; 10""; 10S) aus Refraktärmetall zumindest bereichsweise stoffschlüssig miteinander verbunden sind,
- die zumindest eine Folie (10; 10'; 10"; 10"'; 10""; 10S) zumindest teilweise aus Wolfram (W) und/oder Molybdän besteht,
**dadurch gekennzeichnet, dass**
das Metallrohr zumindest einen ersten (8) und einen zweiten Rohrabschnitt (9) aufweist, wobei
- der erste Rohrabschnitt (8) des Metallrohrs (1) die zumindest eine Folie (10; 10'; 10"; 10"'; 10""; 10S) aus Refraktärmetall aufweist,
- der zweite Rohrabschnitt (9) des Metallrohres (1) aus einem von dem Refraktärmetall verschiedenen Material ausgebildet ist,
- der zweite Rohrabschnitt (9) in Längsrichtung (L) neben dem ersten Rohrabschnitt (8) angeordnet ist und
- der erste Rohrabschnitt (8) mit dem zweiten Rohrabschnitt (9) stoffschlüssig verbunden ist.

2. Metallrohr nach Anspruch 1, wobei zwischen den zwei miteinander verbundenen Lagen Folie (10; 10'; 10"; 10"'; 10""; 10S) ein Verbindungsmaterial (11) angeordnet ist und/oder
das Metallrohr (1) von innen radial nach außen abwechselnd aus einer Lage Folie (10; 10'; 10"; 10"'; 10""; 10S) und einer Lage eines Verbindungsmaterials (11) ausgebildet ist.

3. Metallrohr nach einem der vorangegangenen Ansprüche, wobei die Folie (10; 10'; 10"; 10"'; 10""; 10S) oder die Folien (10; 10'; 10"; 10"'; 10""; 10S) von 30 µm bis 500 µm dick ausgebildet ist oder sind, insbesondere von 75 µm bis 150 µm dick ausgebildet ist oder sind und/oder
die Folie (10; 10'; 10"; 10"'; 10""; 10S) oder die Folien (10; 10'; 10"; 10"'; 10""; 10S) gewalzt ausgebildet ist oder sind und eine Walzrichtung (WR') aufweist oder aufweisen, und wobei die Folie (10; 10'; 10"; 10"'; 10""; 10S) oder die Folien (10; 10'; 10"; 10"'; 10""; 10S) derart angeordnet ist oder sind, dass die Walzrichtung (WR') entlang der Umfangsrichtung des Metallrohrs (1) ausgerichtet ist oder sind.

4. Metallrohr nach einem der vorangegangenen Ansprüche, wobei zumindest zwei Lagen Folie (10; 10'; 10"; 10"'; 10""; 10S) über einen Bereich von zumindest 90% oder zumindest 99% ihrer einander zugewandten Flächen stoffschlüssig miteinander verbunden sind und/oder
der Innendurchmesser des Metallrohres (1) sich in Form einer Düse in Längsrichtung (L) des Metallrohrs (1) verjüngend und/oder aufweitend ausgebildet ist.

5. Metallrohr nach einem der vorangegangenen Ansprüche, wobei die Lagen Folie (10; 10'; 10"; 10"'; 10""; 10S) aus Refraktärmetall so ausgebildet sind, dass ein Rohrende des Metallrohrs kappenartig geschlossen ist und/oder das Metallrohr (1) von innen radial nach außen von 2 bis 200 Lagen Folie (10; 10'; 10"; 10"'; 10""; 10S) aufweist, insbesondere von 5 bis 30 Lagen.

6. Metallrohr nach einem der vorangegangenen Ansprüche, wobei die zumindest eine Folie (10; 10'; 10"; 10"'; 10""; 10S) aus Refraktärmetall von außen auf ein Innenrohr (4) gewickelt ist und/oder
die zumindest eine Folie (10; 10'; 10"; 10"'; 10""; 10S) aus Refraktärmetall im Inneren eines Außenrohrs (5) angeordnet ist.

7. Metallrohr nach einem der vorangegangenen Ansprüche, wobei der erste Rohrabschnitt (8) gradiert in den zweiten Rohrabschnitt (9) übergeht.

8. Metallrohr nach einem der vorangegangenen Ansprüche, wobei das Metallrohr (1) von innen radial nach außen Lagen unterschiedlicher Metalle und/oder Metalllegierungen (St; Mo; W) umfasst und/oder
das Metallrohr (1) an zumindest zwei Innen- und/oder Außenrohrbereichen aus unterschiedlichen Metall- und/oder Metalllegierungsfolien ausgebildet ist, wobei zumindest eine der unterschiedlichen Metall- und/oder Metalllegierungsfolien aus dem Refraktärmetall besteht.

9. Metallrohr nach einem der vorangegangenen Ansprüche, wobei im Inneren des Metallrohrs (1) zwei voneinander getrennte Kammern (K1, K2) ausgebildet sind.

10. Verwendung eines Metallrohres nach einem der vorangegangenen Ansprüche als Strukturbauteil, insbesondere als Divertor (20) oder für einen Divertor (20).

11. Verfahren zum Herstellen eines Metallrohres, wobei
- zumindest eine Folie (10; 10'; 10"; 10"'; 10""; 10S) aus einem Refraktärmetall in einer Mehrzahl von Lagen entlang des Rohrmantels (2) des Metallrohres (1) gewickelt wird,
- zumindest zwei Lagen der Mehrzahl von Lagen der zumindest einen Folie (10; 10'; 10"; 10"'; 10""; 10S) zumindest bereichsweise stoffschlüssig miteinander verbunden werden und
- die zumindest eine Folie (10; 10'; 10"; 10"'; 10""; 10S) zumindest teilweise aus Wolfram (W) und/oder Molybdän besteht,
**dadurch gekennzeichnet, dass** das Metallrohr mit zumindest einem ersten (8) und einem zweiten Rohrabschnitt (9) hergestellt wird, wobei
- der erste Rohrabschnitt (8) des Metallrohrs (1) aus der zumindest einen Folie (10; 10'; 10"; 10"'; 10""; 10S) aus Refraktärmetall hergestellt wird,
- der zweite Rohrabschnitt (9) des Metallrohres (1) aus einem von dem Refraktärmetall verschiedenen Material ausgebildet wird,
- der zweite Rohrabschnitt (9) in Längsrichtung (L) neben dem ersten Rohrabschnitt (8) angeordnet wird und
- der erste Rohrabschnitt (8) mit dem zweiten Rohrabschnitt (9) stoffschlüssig verbunden wird.

12. Verfahren nach Anspruch 11, wobei die zumindest zwei Lagen Folie (10; 10'; 10"; 10"'; 10""; 10S) durch Löten und/oder Schweißen miteinander verbunden werden und/oder
das Metallrohr (1) aus einer Mehrzahl von Lagen Folie (10; 10'; 10"; 10"'; 10""; 10S) ausgebildet wird, wobei zwischen den einzelnen Lagen Folie (10; 10'; 10"; 10"'; 10""; 10S) ein Verbindungsmaterial (11) angeordnet wird und das Metallrohr (1) so temperiert wird, dass sich die Lagen Folie (10; 10'; 10"; 10"'; 10""; 10S) zumindest bereichsweise stoffschlüssig mittels des Verbindungsmaterials (11) miteinander verbinden.

13. Verfahren nach einem der Ansprüche 11 bis 12, wobei die zumindest zwei Lagen Folie (10; 10'; 10"; 10"'; 10""; 10S) bei einer Verbindungstemperatur von maximal 1000°C miteinander verbunden werden, insbesondere durch Kaltlöten, HRP oder HIP, und/oder
die Folie (10; 10'; 10"; 10"'; 10""; 10S) als eine gewalzte Folie (10; 10'; 10"; 10"'; 10""; 10S) mit einer Walzrichtung (WR') ausgebildet wird und die Folie (10; 10'; 10"; 10"'; 10""; 10S) mit der Walzrichtung (WR') in Umfangsrichtung des Metallrohrs (1) gewickelt wird.

14. Metallisches Strukturbauteil bestehend aus einer Mehrzahl von Lagen zumindest einer Folie (10; 10'; 10"; 10"'; 10""; 10S) aus Refraktärmetall, wobei
- das Strukturbauteil als ein Laminat (200) aus Folienlagen ausgebildet ist und abwechselnd aus parallel zu seiner Breite angeordneten Lagen besteht,
- die Folie (10; 10'; 10"; 10"'; 10""; 10S) oder die Folien (10; 10'; 10"; 10"'; 10""; 10S) von 30 µm bis 400 µm dick ausgebildet ist oder sind,
- zumindest zwei Lagen der Mehrzahl von Lagen der zumindest einen Folie (10; 10'; 10"; 10"'; 10""; 10S) zumindest bereichsweise stoffschlüssig miteinander verbunden sind und
- die zumindest eine Folie (10; 10'; 10"; 10"'; 10""; 10S) zumindest teilweise aus Wolfram (W) und/oder Molybdän besteht.

## Claims

1. Metal pipe having at least one foil (10; 10'; 10"; 10"'; 10""; 10S) made from a refractory metal, wherein
- a pipe jacket (2) of the metal pipe (1) has a plurality of layers of the at least one foil (10; 10'; 10"; 10"'; 10""; 10S) made from refractory metal,
- at least two layers of this plurality of layers of the at least one foil (10; 10'; 10"; 10"'; 10""; 10S) made from refractory metal are at least in some sections connected to one another in a firmly bonded manner,
- the at least one foil (10; 10'; 10"; 10"'; 10""; 10S) at least partially consists of tungsten (W) and/or molybdenum,
**characterized in that**
the metal pipe has at least one first (8) and one second pipe portion (9), wherein
- the first pipe portion (8) of the metal pipe (1) has the at least one foil (10; 10'; 10"; 10"'; 10""; 10S) made from refractory metal,
- the second pipe portion (9) of the metal pipe (1) is formed of a material different from the refractory metal,
- the second pipe portion (9) is arranged in a longitudinal direction (L) next to the first pipe portion (8) and
- the first pipe portion (8) is connected to the second pipe portion (9) in a firmly bonded manner.

2. Metal pipe according to claim 1, wherein a connecting material (11) is arranged between the two layers of foil (10; 10'; 10"; 10"'; 10""; 10S) connected to one another in a firmly bonded manner and/or
the metal pipe (1) as seen radially from the inside to the outside is formed in an alternating manner of a layer of foil (10; 10'; 10"; 10"'; 10""; 10S) and a layer of a connecting material (11).

3. Metal pipe according to any of the preceding claims, wherein the foil (10; 10'; 10"; 10"'; 10""; 10S) or the foils (10; 10'; 10"; 10"'; 10""; 10S) is or are formed to have a thickness of 30 µm to 500 µm, in particular is or are formed to have a thickness of 75 µm to 150 µm and/or
the foil (10; 10'; 10"; 10"'; 10""; 10S) or the foils (10; 10'; 10"; 10"'; 10""; 10S) is or are formed to be rolled and has or have a rolling direction (WR'), and wherein the foil (10; 10'; 10"; 10"'; 10""; 10S) or the foils (10; 10'; 10"; 10"'; 10""; 10S) is or are arranged such that the rolling direction (WR') is or are oriented along the circumferential direction of the metal pipe (1).

4. Metal pipe according to any of the preceding claims, wherein at least two layers of foil (10; 10'; 10"; 10"'; 10""; 10S) are connected to one another in a firmly bonded manner across an area of at least 90% or at least 99% of their surfaces facing on another and/or
the inner diameter of the metal pipe (1) is formed to be tapering and/or widening in the form of a nozzle in the longitudinal direction (L) of the metal pipe (1).

5. Metal pipe according to any of the preceding claims, wherein the layers of foil (10; 10'; 10"; 10"'; 10""; 10S) made from refractory metal are formed such that a pipe end of the metal pipe is closed in a cap-like manner and/or
the metal pipe (1) as seen radially from the inside to the outside has 2 to 200 layers of foil (10; 10'; 10"; 10"'; 10""; 10S), in particular 5 to 30 layers.

6. Metal pipe according to any of the preceding claims, wherein the at least one foil (10; 10'; 10"; 10"'; 10""; 10S) made from refractory metal is wound onto an inner pipe (4) from the outside and/or
the at least one foil (10; 10'; 10"; 10"'; 10""; 10S) made from refractory metal is arranged in the inside of an outer pipe (5).

7. Metal pipe according to any of the preceding claims, wherein the first pipe portion (8) turns into the second pipe portion (9) in a graded manner.

8. Metal pipe according to any of the preceding claims, wherein the metal pipe (1) as seen radially from the inside to the outside comprises layers of different metals and/or metal alloys (St; Mo; W) and/or
the metal pipe (1) at least at two inner and/or outer pipe sections is formed of different metal and/or metal alloy foils, wherein at least one of the different metal and/or metal alloy foils consists of the refractory metal.

9. Metal pipe according to any of the preceding claims, wherein inside the metal pipe (1) two chambers (K1, K2) separate from one another are formed.

10. Use of a metal pipe according to any of the preceding claims as a structural component, in particular as a divertor (20) or for a divertor (20).

11. Method for producing a metal pipe, wherein
- at least one foil (10; 10'; 10"; 10"'; 10""; 10S) made from a refractory metal is wound along the pipe jacket (2) of the metal pipe (1) in a plurality of layers,
- at least two layers of the plurality of layers of the at least one foil (10; 10'; 10"; 10"'; 10""; 10S) are at least in some sections connected to one another in a firmly bonded manner and
- the at least one foil (10; 10'; 10"; 10"'; 10""; 10S) at least partially consists of tungsten (W) and/or molybdenum,
**characterized in that** the metal pipe (1) is produced to have at least one first (8) and one second pipe portion (9), wherein
- the first pipe portion (8) of the metal pipe (1) is produced from the at least one foil (10; 10'; 10"; 10"'; 10""; 10S) made from refractory metal,
- the second pipe portion (9) of the metal pipe (1) is formed of a material different from the refractory metal,
- the second pipe portion (9) is arranged in a longitudinal direction (L) next to the first pipe portion (8) and
- the first pipe portion (8) is connected to the second pipe portion (9) in a firmly bonded manner.

12. Method according to claim 11, wherein the at least two layers of foil (10; 10'; 10"; 10"'; 10""; 10S) are connected to one another by soldering and/or welding and/or
the metal pipe (1) is formed of a plurality of layers of foil (10; 10'; 10"; 10"'; 10""; 10S), wherein a connecting material (11) is arranged between the individual layers of foil (10; 10'; 10"; 10"'; 10""; 10S) and the metal pipe (1) is tempered such that the layers of foil (10; 10'; 10"; 10"'; 10""; 10S) connect to one another in a firmly bonded manner at least in some sections by means of the connecting material (11).

13. Method according to any of claims 11 to 12, wherein the at least two layers of foil (10; 10'; 10"; 10"'; 10""; 10S) are connected to one another at a connecting temperature of a maximum of 1000°C, in particular by cold soldering, HRP or HIP, and/or
the foil (10; 10'; 10"; 10"'; 10""; 10S) is formed to be a rolled foil (10; 10'; 10"; 10"'; 10""; 10S) having a rolling direction (WR') and the foil (10; 10'; 10"; 10"'; 10""; 10S) having the rolling direction (WR') is wound in a circumferential direction of the metal pipe (1).

14. Metallic structural component consisting of a plurality of layers of at least one foil (10; 10'; 10"; 10"'; 10""; 10S) made from refractory metal, wherein
- the structural component is formed to be a laminate (200) of foil layers and in an alternating manner consists of layers that are arranged parallel to its width,
- the foil (10; 10'; 10"; 10"'; 10""; 10S) or the foils (10; 10'; 10"; 10"'; 10""; 10S) is or are formed to have a thickness of 30 µm to 400 µm,
- at least two layers of the plurality of layers of the at least one foil (10; 10'; 10"; 10"'; 10""; 10S) are at least in some sections connected to one another in a firmly bonded manner and
- the at least one foil (10; 10'; 10"; 10"'; 10""; 10S) at least partially consists of tungsten (W) and/or molybdenum.

## Revendications

1. Tube métallique avec au moins une pellicule (10 ; 10' ; 10" ; 10"' ; 10"" ; 10S) d'un métal réfractaire, sachant que
- une enveloppe tubulaire (2) du tube métallique (1) présente une pluralité de couches de la ou des pellicules (10 ; 10' ; 10" ; 10"' ; 10"" ; 10S) de métal réfractaire,
- au moins deux couches de cette pluralité de couches de la ou des pellicules (10 ; 10' ; 10" ; 10'" ; 10"" ; 10S) de métal réfractaire sont au moins par zones reliées matériellement entre elles,
- la ou les pellicules (10 ; 10' ; 10" ; 10'" ; 10"" ; 10S) sont composées au moins partiellement de tungstène (W) et/ou de molybdène,
**caractérisé en ce que**
le tube métallique présente au moins une première (8) et une deuxième portion de tube (9), sachant que
- la première portion de tube (8) du tube métallique (1) présente au moins une pellicule (10 ; 10' ; 10" ; 10"' ; 10"" ; 10S) de métal réfractaire,
- la deuxième portion de tube (9) du tube métallique (1) est réalisée en un matériau différent du métal réfractaire,
- la deuxième portion de tube (9) est disposée à côté de la première portion de tube (8) en direction longitudinale (L) et que
- la première portion de tube (8) est reliée matériellement avec la deuxième portion de tube (9).

2. Tube métallique d'après la revendication 1, sachant que entre les deux couches de pellicule (10 ; 10' ; 10" ; 10"' ; 10"" ; 10S) reliées entre elles est disposé un matériau de raccordement (11) et/ou que
le tube métallique (1) est réalisé radialement à partir de l'intérieur tour à tour d'une couche de pellicule (10 ; 10' ; 10" ; 10'" ; 10"" ; 10S) et d'une couche d'un matériau de raccordement (11).

3. Tube métallique d'après une des revendications précédentes, sachant que la pellicule (10 ; 10' ; 10" ; 10"' ; 10"" ; 10S) ou les pellicules (10 ; 10' ; 10" ; 10'" ; 10"" ; 10S) est ou sont d'une épaisseur de 30 µm à 500 µm ou notamment d'une épaisseur de 75 µm à 150µm et/ou que
la pellicule (10 ; 10' ; 10" ; 10"' ; 10"" ; 10S) ou les pellicules (10 ; 10' ; 10" ; 10'" ; 10"" ; 10S) est ou sont laminés et qu'elle ou elles présentent une direction de laminage (WR'), et sachant que la pellicule (10 ; 10' ; 10" ; 10"' ; 10"" ; 10S) ou les pellicules (10 ; 10' ; 10" ; 10"' ; 10"" ; 10S) est ou sont disposées de manière que la direction de laminage (WR') est ou sont orientée le long de la direction de circonférence du tube métallique (1).

4. Tube métallique d'après une des revendications précédentes, sachant que au moins deux couches de pellicule (10 ; 10' ; 10" ; 10"' ; 10"" ; 10S) sont matériellement reliées entre elles dans une zone d'au moins 90% ou au moins 99% de leurs surfaces qui se font face et/ou que
le diamètre intérieur du tube métallique (1) est réalisé de manière à s'amenuiser et/ou à s'évaser progressivement sous forme d'une buse en direction longitudinale (L) du tube métallique (1).

5. Tube métallique d'après une des revendications précédentes, sachant que les couches de pellicule (10 ; 10' ; 10" ; 10"' ; 10"" ; 10S) de métal réfractaire sont réalisées de manière qu'une extrémité de tube du tube métallique est fermée a la manière d'un capuchon et/ou que le tube métallique (1) présente radialement à partir de l'intérieur vers l'extérieur de 2 à 200 couches de pellicule (10 ; 10' ; 10" ; 10'" ; 10"" ; 10S), notamment de 5 à 30 couches.

6. Tube métallique d'après une des revendications précédentes, sachant que la ou les pellicules (10 ; 10' ; 10" ; 10'" ; 10"" ; 10S) de métal réfractaire sont enroulées de l'extérieur sur un tube intérieur (4) et/ou que
la ou les pellicules (10 ; 10' ; 10" ; 10"' ; 10"" ; 10S) de métal réfractaire sont disposées à l'intérieur d'un tube extérieur (5).

7. Tube métallique d'après une des revendications précédentes, sachant que la première portion de tube (8) passe progressivement par grades dans la deuxième portion de tube (9).

8. Tube métallique d'après une des revendications précédentes, sachant que le tube métallique (1) comprend radialement de l'intérieur vers l'extérieur des couches de différents métaux et/ou alliages métalliques (St ; Mo ; W) et/ou que
le tube métallique (1) est réalisé dans au moins deux zones de tube intérieures et/ou extérieures de pellicules différentes en métal et/ou en alliage métallique, sachant qu'au moins une des pellicules différentes en métal et/ou en alliage métallique est composée du métal réfractaire.

9. Tube métallique d'après une des revendications précédentes, sachant qu'à l'intérieur du tube métallique (1) sont réalisées deux chambres séparées entre elles (K1, K2).

10. Utilisation d'un tube métallique d'après une des revendications précédentes en tant que composant structurel, notamment en tant que diverteur (20) ou pour un diverteur (20).

11. Procédé de fabrication d'un tube métallique, sachant que
- au moins une pellicule (10 ; 10' ; 10" ; 10"' ; 10"" ; 10S) d'un métal réfractaire dans une pluralité de couches le long de l'enveloppe de tube (2) du tube métallique (1) est enroulée,
- au moins deux couches de la pluralité de couches de la ou des pellicules (10 ; 10' ; 10" ; 10"' ; 10"" ; 10S) sont au moins par zones reliées matériellement entre elles, et que
- la ou les pellicules (10 ; 10' ; 10" ; 10'" ; 10"" ; 10S) sont composées au moins partiellement de tungstène (W) et/ou de molybdène,
**caractérisé en ce que** le tube métallique est fabriqué avec au moins une première (8) et une deuxième portion de tube (9), sachant que
- la première portion de tube (8) du tube métallique (1) est fabriqué à partir d'au moins une pellicule (10 ; 10' ; 10" ; 10'" ; 10"" ; 10S) de métal réfractaire,
- la deuxième portion de tube (9) du tube métallique (1) est réalisée en un matériau différent du métal réfractaire,
- la deuxième portion de tube (9) est disposée à côté de la première portion de tube (8) en direction longitudinale (L) et que
- la première portion de tube (8) est reliée matériellement avec la deuxième portion de tube (9).

12. Procédé d'après la revendication 11, sachant que lesdites au moins deux couches de pellicule (10 ; 10' ; 10" ; 10"' ; 10"" ; 10S) sont reliées entre elles par brasage et/ou soudage et/ou que
le tube métallique (1) est réalisé avec une pluralité de couches de pellicule (10 ; 10' ; 10" ; 10"' ; 10"" ; 10S), sachant que entre les respectives couches de pellicule (10 ; 10' ; 10" ; 10'" ; 10"" ; 10S) est disposé un matériau de raccordement (11) et que
le tube métallique (1) est tempéré de manière que les couches de pellicule (10 ; 10' ; 10" ; 10'" ; 10"" ; 10S) se relient matériellement au moins par zones entre elles au moyen du matériau de raccordement (11).

13. Procédé d'après une des revendications de 11 à 12, sachant que lesdites au moins deux couches de pellicule (10 ; 10' ; 10" ; 10"' ; 10"" ; 10S) sont reliées entre elles à une température ne devant pas dépasser 1000°C, notamment par brasure froide, HRP ou HIP, et/ou que
la pellicule (10 ; 10' ; 10" ; 10"' ; 10"" ; 10S) est réalisée comme pellicule (10 ; 10' ; 10" ; 10"' ; 10"" ; 10S) laminée avec une direction de laminage (WR') et que la pellicule (10 ; 10' ; 10" ; 10"' ; 10"" ; 10S) est enroulée avec la direction de laminage (WR') en direction de circonférence du tube métallique (1).

14. Élément structurel métallique composé d'une pluralité de couches d'au moins une pellicule (10 ; 10' ; 10" ; 10'" ; 10"" ; 10S) de métal réfractaire, sachant que
- l'élément structurel est réalisé comme laminé (200) de couches de pellicule et qu'il est composé en alternance de couches disposées parallèlement par rapport à sa largeur,
- la pellicule (10 ; 10' ; 10" ; 10"' ; 10"" ; 10S) ou les pellicules (10 ; 10' ; 10" ; 10"' ; 10"" ; 10S) est ou sont d'une épaisseur de 30 µm à 400 µm,
- au moins deux couches parmi la pluralité de couches de la ou des pellicules (10 ; 10' ; 10" ; 10"' ; 10"" ; 10S) sont matériellement reliées entre elles au moins par zones et que
- la ou les pellicules (10 ; 10' ; 10" ; 10'" ; 10"" ; 10S) sont composées au moins partiellement de tungstène (W) et/ou de molybdène.
